# EUROPEAN PATENT APPLICATION

(11) **EP 4 830 981 A1**
(43) Date of publication of application: **28.10.2026**
(21) Application number: 24909934.2
(22) Date of filing: 30.08.2024
(51) Int. Cl.: B60L 53/16, B60L 53/31, B60L 50/60

(54) **CHARGING CONNECTION DEVICE, ELECTRIC VEHICLE, AND CHARGING PILE**

(30) Priority: 25.12.2023 CN 202311805427; 06.02.2024 CN 202410174335
(71) Applicant: Huawei Digital Power Technologies Co., Ltd., Shenzhen, Guangdong 518043 (CN)
(72) Inventor: CHENG, Dong, Shenzhen, Guangdong 518043 (CN); LIAO, Mengxiong, Shenzhen, Guangdong 518043 (CN); WU, Ruoxun, Shenzhen, Guangdong 518043 (CN); TANG, Qianlin, Shenzhen, Guangdong 518043 (CN)
(74) Representative: Maiwald GmbH
(86) International application number: PCT/CN2024/115906
(87) International publication number: WO 2025/138986

(57) **Abstract**

This application provides a charging connection apparatus, an electric vehicle, and a charging pile. The charging connection apparatus is used in the electric vehicle. The charging connection apparatus includes a plurality of groups of charging loop switches and a plurality of groups of direct current sockets, each group of charging loop switches includes two switches, each of the plurality of groups of direct current sockets is connected to one group of direct current plugs of the charging pile, and each group of direct current sockets includes a positive direct current socket and a negative direct current socket. Each group of direct current sockets is connected to a power battery of the electric vehicle via one group of charging loop switches, and different groups of direct current sockets are connected to the power battery via different groups of charging loop switches. All the groups of direct current sockets are configured to receive currents output by different charging modules in the charging pile. Embodiments of this application can increase charging power for charging the power battery, and increase a charging speed.

## Description

This application claims priorities to Chinese Patent Application No. 202311805427.4, filed with the China National Intellectual Property Administration on December 25, 2023 entitled "CHARGING DEVICE, CHARGING PILE, CHARGING CONNECTION APPARATUS, AND ELECTRIC VEHICLE", and to Chinese Patent Application No. 202410174335.9, filed with the China National Intellectual Property Administration on February 6, 2024 entitled "CHARGING CONNECTION APPARATUS, ELECTRIC VEHICLE, AND CHARGING PILE", both of which are incorporated herein by reference in their entireties.

### TECHNICAL FIELD

This application relates to the charging field, and in particular, to a charging connection apparatus, an electric vehicle, and a charging pile.

### BACKGROUND

With continuous development of electric vehicles, users have increasingly high requirements on charging power. Currently, most charging piles charge power batteries of electric vehicles through a single direct current port, and charging power is low. In addition, there is a current limit on a power transmission line connected to a charging module. Even if the charging module has a capability of outputting a large current, because of the current limit on the power transmission line, a current output by the charging module does not exceed a maximum current allowed by the power transmission line connected to the charging module. As a result, charging power is low, and it is difficult to implement a charging speed of 1 km range per 1s charge.

### SUMMARY

This application provides a charging connection apparatus, an electric vehicle, and a charging pile, to increase charging power for charging a power battery, thereby helping meet a requirement for high-power charging of the electric vehicle. This facilitates a charging speed of 1 km range per 1s charge, that is, facilitates implementation of charging the electric vehicle with electric energy for one kilometer of driving range per second, to bring charging experience of "charge up while you coffee up" to a user.

According to a first aspect, this application provides a charging connection apparatus. The charging connection apparatus is used in an electric vehicle. The charging connection apparatus includes a plurality of groups of charging loop switches and a plurality of groups of direct current sockets, each group of charging loop switches includes two switches, each of the plurality of groups of direct current sockets is connected to one group of direct current plugs of a charging pile, and each group of direct current sockets includes a positive direct current socket and a negative direct current socket. Each group of direct current sockets is connected to a power battery of the electric vehicle via one group of charging loop switches, and different groups of direct current sockets are connected to the power battery via different groups of charging loop switches. All the groups of direct current sockets are configured to receive currents output by different charging modules in the charging pile.

The charging connection apparatus in this embodiment of this application includes the plurality of groups of direct current sockets, all the groups of direct current sockets are configured to receive currents output by different groups of charging modules in the charging pile, and the plurality of groups of direct current sockets of the charging connection apparatus may simultaneously receive the currents output by the charging pile. Compared with an electric vehicle including one group of direct current sockets, this embodiment of this application can increase charging power for charging the power battery, thereby helping meet a requirement for high-power charging of the electric vehicle. This facilitates a charging speed of 1 km range per 1s charge, that is, facilitates implementation of charging the electric vehicle with electric energy for one kilometer of driving range per second, to bring charging experience of "charge up while you coffee up" to a user.

In addition, each group of direct current sockets is connected to the power battery of the electric vehicle via one group of charging loop switches, and different groups of direct current sockets are connected to the power battery via different groups of charging loop switches. When a charging loop connected to a part of the groups of direct current sockets is short-circuited, a charging loop switch corresponding to the part of the groups of direct current sockets may be controlled to be turned off, to prevent a short-circuit current from spreading to the power battery. This can effectively protect the electric vehicle. In addition, when a part of the groups of direct current sockets are connected to a corresponding group of direct current plugs, charging loop switches connected to the other groups of direct current sockets may be controlled to be turned off, so that there is no voltage on the other groups of direct current sockets. This can prevent a personal hazard caused by an accidental touch of a user, thereby protecting personal safety of the user.

With reference to the first aspect, in a possible design, the charging connection apparatus is configured to send a packet to the charging pile. The packet includes information indicating all groups of direct current plugs of the charging pile to output currents of a same magnitude.

In this embodiment of this application, the packet sent by the charging connection apparatus to the charging pile includes the information indicating all the groups of direct current plugs of the charging pile to output the currents of a same magnitude. Therefore, the charging connection apparatus can receive the currents of a same magnitude output by all the groups of direct current plugs. In this way, currents flowing through power transmission lines connected to all the groups of direct current sockets have a same magnitude. This can resolve problems of uneven contact resistances and uneven transmission currents of a plurality of power transmission lines.

With reference to the first aspect, in a possible design, the packet further includes voltage information. When the plurality of groups of direct current sockets are connected to a same power battery, the packet includes information indicating all the groups of direct current plugs to output voltages of a same magnitude; or when the plurality of groups of direct current sockets are respectively connected to different power batteries, the packet includes information indicating all the groups of direct current plugs to output voltages of a same magnitude or different magnitudes.

In this embodiment of this application, when the plurality of groups of direct current sockets are connected to a same power battery, the packet sent by the charging connection apparatus to the charging pile includes the information indicating all the groups of direct current plugs to output the voltages of a same magnitude, to ensure normal charging. This is because if the packet sent by the charging connection apparatus to the charging pile includes the information indicating the plurality of groups of direct current plugs to output voltages of different magnitudes, there is a voltage difference between loops in which all the groups of direct current plugs charge the power battery. As a result, there is a circulating current between a plurality of charging loops, and a false alarm or the like may occur, affecting normal charging of the power battery.

When the plurality of groups of direct current sockets are respectively connected to different power batteries, the packet sent by the charging connection apparatus to the charging pile includes the information indicating all the groups of direct current plugs to output the voltages of a same magnitude or different magnitudes. In other words, in this case, all the groups of direct current plugs may output the voltages of a same magnitude or different magnitudes. Even if there is a voltage difference between loops in which all the groups of direct current plugs charge the power battery, because the plurality of groups of direct current sockets are respectively connected to the different power batteries, there is no circulating current or false alarm or the like between the two charging loops, thereby ensuring normal charging. In addition, the charging connection apparatus sends the packet including the information indicating all the groups of direct current plugs to output the voltages of a same magnitude or different magnitudes. This helps the charging pile output a voltage of a corresponding magnitude based on a capability of the charging pile, thereby helping improve flexibility of outputting a voltage by the charging pile.

With reference to the first aspect, in a possible design, the charging connection apparatus further includes a plurality of fuses. One fuse is connected in series between the power battery and each group of direct current sockets, and each fuse is connected in series to one switch in corresponding charging loop switches and then connected between the power battery and the direct current sockets.

In this embodiment of this application, one fuse is connected in series between the power battery and each group of direct current sockets, and each fuse has a corresponding fuse-element rated current. When a current flowing through the fuse is greater than the fuse-element rated current of the fuse, if no corresponding action is taken in a timely manner, a fuse element of the fuse may be melted. Once the fuse element of the fuse is melted, the fuse needs to be replaced. Otherwise, direct current plugs connected to the fuse cannot charge the power battery through corresponding direct current ports. Therefore, a function of the fuse is as follows: When a current flowing through the fuse is greater than the fuse-element rated current of the fuse, the charging connection apparatus can perform a further action to avoid melting the fuse element of the fuse as much as possible, thereby avoiding replacing the fuse and ensuring normal charging.

With reference to the first aspect, in a possible design, the charging connection apparatus is configured to: when a current flowing through a power transmission line on which the fuse is located is greater than a maximum current value allowed by the corresponding power transmission line, turn off the charging loop switch connected to the fuse.

In this embodiment of this application, when the current flowing through the power transmission line on which the fuse is located is greater than the maximum current value allowed by the corresponding power transmission line, the charging loop switch connected to the fuse is turned off, to avoid damage to the power transmission line caused by an excessively high current of the power transmission line on which the fuse is located. This facilitates normal charging of the power battery.

With reference to the first aspect, in a possible design, the charging connection apparatus is further configured to: send, to the charging pile, a packet used to request to change a charging current.

In this embodiment of this application, after the charging connection apparatus turns off the charging loop switch connected to the fuse, the direct current plugs connected to the fuse cannot charge the power battery through the direct current ports. As a result, charging power is reduced. In this case, the charging connection apparatus may further send, to the charging pile, the packet used to request to change the charging current. This helps increase charging power, increase a charging speed, and improve user experience.

With reference to the first aspect, in a possible design, the charging connection apparatus is configured to: when a magnitude of a current flowing through a power transmission line on which the fuse is located is greater than a maximum current value allowed by the corresponding power transmission line, send, to the charging pile, a packet used to request to reduce a magnitude of a current output by direct current plugs connected to the direct current sockets connected to the fuse.

In this embodiment of this application, when the current flowing through the power transmission line on which the fuse is located is greater than the maximum current value allowed by the corresponding power transmission line, the charging connection apparatus may send, to the charging pile, the packet used to request to reduce the magnitude of the current output by the direct current plugs connected to the direct current sockets connected to the fuse, so that the current of the power transmission line on which the fuse is located does not exceed the maximum current value allowed by the corresponding power transmission line, to avoid damage to the power transmission line caused by an excessively high current of the power transmission line on which the fuse is located. This facilitates normal charging of the power battery.

With reference to the first aspect, in a possible design, the charging connection apparatus further includes at least one isolated DC-DC circuit and at least one insulation monitoring device. The at least one isolated DC-DC circuit one-to-one corresponds to the at least one insulation monitoring device, and each isolated DC-DC circuit is connected in series between the charging loop switch and the power battery. Each insulation monitoring device is configured to: in a charging process of the electric vehicle, perform insulation monitoring on a circuit between a corresponding isolated DC-DC circuit and an output end of a charging module connected to corresponding direct current plugs.

In this embodiment of this application, the at least one isolated DC-DC circuit in the charging connection apparatus one-to-one corresponds to the at least one insulation monitoring device, and each isolated DC-DC circuit is connected in series between the charging loop switch and the power battery. In the charging process of the electric vehicle, each insulation monitoring device can perform insulation monitoring on the circuit between the corresponding isolated DC-DC circuit and the output end of the charging module connected to the corresponding direct current plugs, to determine whether the monitored circuit has safety hazards such as electric leakage, thereby ensuring electrical safety of a user and a surrounding environment.

With reference to the first aspect, in a possible design, the charging connection apparatus is configured to: determine that the charging connection apparatus is connected to a first charging connector or a second charging connector, where the first charging connector includes a plurality of groups of direct current plugs, and the second charging connector includes one group of direct current plugs. When it is determined that the charging connection apparatus is connected to the first charging connector, the packet sent to the charging pile includes information indicating the plurality of groups of direct current plugs to output the currents of a same magnitude; or when it is determined that the charging connection apparatus is connected to the second charging connector, the packet sent to the charging pile includes information indicating a magnitude of a current output by the group of direct current plugs.

In this embodiment of this application, the charging connection apparatus may send different packets to the charging pile based on a type of a charging connector connected to the charging connection apparatus. Specifically, when the charging connection apparatus identifies that the charging connector is the first charging connector, the packet sent by the charging connection apparatus to the charging pile includes the information indicating the plurality of groups of direct current plugs to output the currents of a same magnitude; or when the charging connection apparatus identifies that the charging connector is the second charging connector, the packet sent by the charging connection apparatus to the charging pile includes the information indicating the magnitude of the current output by the group of direct current plugs. This avoids a case in which the charging connection apparatus needs to send a packet again because current information included in the packet sent by the charging connection apparatus to the charging pile does not match an actual connection status of the direct current plugs and the direct current sockets. This embodiment of this application helps quickly determine a charging parameter between the charging connection apparatus and the charging pile, thereby helping the power battery quickly enter a charging phase. In addition, when the charging connection apparatus identifies that the charging connector is the first charging connector, the packet sent by the charging connection apparatus to the charging pile includes the information indicating the plurality of groups of direct current plugs to output the currents of a same magnitude. In this way, charging power can be increased, a charging speed can be increased, and a problem of uneven transmission currents of two power transmission lines and uneven contact resistances caused by the problem can be resolved.

With reference to the first aspect, in a possible design, the charging connection apparatus is further configured to: when the charging connection apparatus is connected to the first charging connector, if a charging loop switch connected to a part of direct current sockets in the plurality of groups of direct current sockets is adhered, send, to the charging pile, a packet used to request to stop direct current plugs connected to the part of direct current sockets from outputting a direct current. The charging connection apparatus is further configured to: when the charging connection apparatus is connected to the second charging connector, if a charging loop switch connected to one group of direct current sockets connected to the second charging connector is adhered, send, to the charging pile, a packet used to request to stop direct current plugs connected to the group of direct current sockets from outputting a direct current.

In this embodiment of this application, the charging connection apparatus may send, to the charging pile based on the type of the charging connector connected to the charging connection apparatus and an adhesion status of the charging loop switch connected to the direct current sockets, the packet used to request to stop the direct current plugs connected to the part of direct current sockets or the group of direct current sockets from outputting the direct current. This can ensure personal safety. This is because when the charging loop switch connected to the direct current sockets is adhered, if the direct current plugs connected to the direct current sockets continue to output the direct current, when the charging loop switches connected to the direct current sockets need to be turned off, the charging loop switch cannot be completely turned off due to adhesion, and the direct current sockets are energized. The user may accidentally touch the direct current sockets, causing a personal hazard.

With reference to the first aspect, in a possible design, the charging connection apparatus further includes a first connection confirm socket and a first connection confirm circuit. The first connection confirm socket is connected to the first connection confirm circuit. When the charging connection apparatus is connected to a charging connector, the first connection confirm circuit forms a current loop with a first connection confirm circuit of the charging pile via the first connection confirm socket and a first connection confirm plug of the charging connector. The charging connection apparatus is configured to: when a voltage at a monitoring point in the first connection confirm circuit of the charging connection apparatus is a first preset value, determine that the electric vehicle is connected to the first charging connector; or when a voltage at a monitoring point in the first connection confirm circuit of the charging connection apparatus is a second preset value, determine that the electric vehicle is connected to the second charging connector, where the first preset value is different from the second preset value.

In this embodiment of this application, the charging connection apparatus may determine, based on the voltage at the monitoring point in the first connection confirm circuit, that the electric vehicle is connected to the first charging connector or the second charging connector. Specifically, when the voltage at the monitoring point in the first connection confirm circuit of the charging connection apparatus is the first preset value, the charging connection apparatus determines that the electric vehicle is connected to the first charging connector; or when the voltage at the monitoring point in the first connection confirm circuit of the charging connection apparatus is the second preset value, the charging connection apparatus determines that the electric vehicle is connected to the second charging connector. This can increase a correctness rate of determining a type of a connected charging connector by the charging connection apparatus, and help the charging connection apparatus send different packets to the charging pile based on the type of the charging connector connected to the charging connection apparatus.

In addition, in this embodiment of this application, it is determined, based on the voltage at the monitoring point in the first connection confirm circuit, that the electric vehicle is connected to the first charging connector or the second charging connector. The first connection confirm circuit may be an existing connection confirm circuit connected to the connection confirm socket CC2. In other words, the type of the charging connector can be determined by using the existing connection confirm circuit. This is simple and reliable.

With reference to the first aspect, in a possible design, the charging connection apparatus is further configured to: when the voltage at the monitoring point is the first preset value, determine that the charging connection apparatus is successfully connected to the first charging connector; or when the voltage at the monitoring point is the second preset value, determine that the charging connection apparatus is successfully connected to the second charging connector.

In this embodiment of this application, when the voltage at the monitoring point is the first preset value, the charging connection apparatus determines that the charging connection apparatus is successfully connected to the first charging connector; or when the voltage at the monitoring point is the second preset value, the charging connection apparatus determines that the charging connection apparatus is successfully connected to the second charging connector. This can increase a correctness rate of determining that the charging connection apparatus is connected to the first charging connector or the second charging connector, and help the charging connection apparatus send different packets to the charging pile based on the type of the charging connector connected to the charging connection apparatus.

With reference to the first aspect, in a possible design, the first connection confirm circuit of the charging connection apparatus includes a first resistor unit. The first connection confirm socket is connected to a voltage source via the first resistor unit. The monitoring point is located between the first connection confirm socket and the first resistor unit.

In this embodiment of this application, when the charging connection apparatus is connected to the charging connector, the first connection confirm circuit of the charging connection apparatus and the first connection confirm circuit of the charging pile form the loop. Because the monitoring point is located between the first connection confirm socket and the first resistor unit, when the voltage at the monitoring point is the first preset value or the second preset value, the charging connection apparatus can determine that the charging connection apparatus is successfully connected to the first charging connector or the second charging connector.

With reference to the first aspect, in a possible design, the charging connection apparatus further includes a first connection confirm socket, a second connection confirm socket, a first connection confirm circuit, and a second connection confirm circuit. The first connection confirm socket is connected to the first connection confirm circuit, and the second connection confirm socket is connected to the second connection confirm circuit. When the charging connection apparatus is connected to the first charging connector, the first connection confirm circuit forms a current loop with a first connection confirm circuit of the charging pile via the first connection confirm socket and a first connection confirm plug of the first charging connector, and the second connection confirm circuit forms a current loop with a second connection confirm circuit of the charging pile via the second connection confirm socket and a second connection confirm plug of the first charging connector. When the charging connection apparatus is connected to the second charging connector, the first connection confirm circuit forms a current loop with a first connection confirm circuit of the charging pile via the first connection confirm socket and a first connection confirm plug of the second charging connector, and the second connection confirm socket is not connected to a plug of the second charging connector.

The charging connection apparatus is further configured to: when a voltage at a monitoring point in the second connection confirm circuit of the charging connection apparatus is a third preset value, determine that the charging connection apparatus is connected to the first charging connector; or when a voltage at a monitoring point in the second connection confirm circuit of the charging connection apparatus is a fourth preset value and a voltage at a monitoring point in the first connection confirm circuit of the charging connection apparatus is a fifth preset value, determine that the charging connection apparatus is connected to the second charging connector, where the third preset value is different from the fourth preset value.

In this embodiment of this application, the charging connection apparatus may determine, based on the voltage at the monitoring point in the second connection confirm circuit, that the electric vehicle is connected to the first charging connector or the second charging connector. Specifically, when the voltage at the monitoring point in the second connection confirm circuit of the charging connection apparatus is the third preset value, the charging connection apparatus determines that the electric vehicle is connected to the first charging connector; or when the voltage at the monitoring point in the first connection confirm circuit of the charging connection apparatus is the fourth preset value and the voltage at the monitoring point in the first connection confirm circuit of the charging connection apparatus is the fifth preset value, the charging connection apparatus determines that the electric vehicle is connected to the second charging connector. This can increase a correctness rate of determining a type of a charging connector by the charging connection apparatus, and help the charging connection apparatus send different packets to the charging pile based on the type of the charging connector connected to the charging connection apparatus.

With reference to the first aspect, in a possible design, the charging connection apparatus is further configured to: when the voltage at the monitoring point in the first connection confirm circuit of the charging connection apparatus is the fifth preset value, determine that the charging connection apparatus is successfully connected to the first charging connector or the second charging connector.

In this embodiment of this application, when the voltage at the monitoring point in the first connection confirm circuit is the fifth preset value, the charging connection apparatus determines that the charging connection apparatus is successfully connected to the first charging connector or the second charging connector. In other words, the charging connection apparatus may still determine, by using an existing connection confirm circuit connected to the vehicle socket, that the charging connection apparatus is successfully connected to the charging connector. This is simple and reliable.

With reference to the first aspect, in a possible design, the first connection confirm circuit of the charging connection apparatus includes a first resistor unit. The first connection confirm socket is connected to a voltage source via the first resistor unit. The second connection confirm circuit of the charging connection apparatus includes a second resistor unit, and the second connection confirm socket is connected to the voltage source via the second resistor unit. The monitoring point in the first connection confirm circuit of the charging connection apparatus is located between the first connection confirm socket and the first resistor unit, and the monitoring point in the second connection confirm circuit of the charging connection apparatus is located between the second connection confirm socket and the second resistor unit.

In this embodiment of this application, the first connection confirm circuit of the charging connection apparatus includes the first resistor unit, and the first connection confirm socket is connected to the voltage source via the first resistor unit. The first connection confirm circuit is an existing connection confirm circuit connected to the vehicle socket. The second connection confirm circuit of the charging connection apparatus includes the second resistor unit, and the second connection confirm socket is connected to the voltage source via the second resistor unit. The second connection confirm circuit is a newly designed circuit. The second connection confirm circuit can implement determining a type of the charging connector by being equipped with only one resistor unit. The second connection confirm circuit is simple in design and low in costs.

With reference to the first aspect, in a possible design, the charging connection apparatus further includes an auxiliary power supply socket, an auxiliary power supply circuit, a first connection confirm socket, and a first connection confirm circuit. The auxiliary power supply socket is connected to a controller of the electric vehicle and the auxiliary power supply circuit, and the first connection confirm socket is connected to the first connection confirm circuit. The auxiliary power supply circuit of the charging connection apparatus includes a third resistor unit and a first normally closed switch that are connected in series, and the auxiliary power supply socket is connected to a voltage source via the third resistor unit and the first normally closed switch. The first connection confirm circuit of the charging connection apparatus includes a first resistor unit, and the first connection confirm socket of the charging connection apparatus is connected to the voltage source via the first resistor unit.

The charging connection apparatus is configured to: when a voltage at a monitoring point in the auxiliary power supply circuit of the charging connection apparatus is a sixth preset value, determine that the charging connection apparatus is connected to the first charging connector; or when a voltage at a monitoring point in the auxiliary power supply circuit of the charging connection apparatus is a seventh preset value and a voltage at a monitoring point in the first connection confirm circuit of the charging connection apparatus is an eighth preset value, determine that the charging connection apparatus is connected to the second charging connector, where the sixth preset value is different from the seventh preset value. The monitoring point in the auxiliary power supply circuit of the charging connection apparatus is located between the auxiliary power supply socket and the third resistor unit, and the monitoring point in the first connection confirm circuit of the charging connection apparatus is located between the first connection confirm socket and the first resistor unit.

In this embodiment of this application, the charging connection apparatus may determine, based on the voltage at the monitoring point in the auxiliary power supply circuit, that the electric vehicle is connected to the first charging connector or the second charging connector. Specifically, when the voltage at the monitoring point in the auxiliary power supply circuit of the charging connection apparatus is the sixth preset value, the charging connection apparatus determines that the electric vehicle is connected to the first charging connector; or when the voltage at the monitoring point in the auxiliary power supply circuit of the charging connection apparatus is the seventh preset value and the voltage at the monitoring point in the first connection confirm circuit of the charging connection apparatus is the eighth preset value, the charging connection apparatus determines that the electric vehicle is connected to the second charging connector. This can increase a correctness rate of determining a type of a charging connector by the charging connection apparatus, and help the charging connection apparatus send different packets to the charging pile based on the type of the charging connector connected to the charging connection apparatus.

With reference to the first aspect, in a possible design, the charging connection apparatus is further configured to: when the voltage at the monitoring point in the first connection confirm circuit of the charging connection apparatus is the eighth preset value, determine that the charging connection apparatus is successfully connected to the first charging connector or the second charging connector.

In this embodiment of this application, when the voltage at the monitoring point in the first connection confirm circuit is the eighth preset value, the charging connection apparatus determines that the charging connection apparatus is successfully connected to the first charging connector or the second charging connector. In other words, the charging connection apparatus may still determine, by using an existing connection confirm circuit connected to the vehicle socket, that the charging connection apparatus is successfully connected to the charging connector. This is simple and reliable.

With reference to the first aspect, in a possible design, the auxiliary power supply circuit of the charging connection apparatus further includes a second normally open switch. The auxiliary power supply socket is further connected to a vehicle body ground platform of the electric vehicle via the second normally open switch. The charging connection apparatus is further configured to: after determining that the charging connection apparatus is connected to the second charging connector, turn off the first normally closed switch and turn on the second normally open switch.

In this embodiment of this application, after determining that the charging connection apparatus is connected to the second charging connector, the charging connection apparatus may further turn off the first normally closed switch and turn on the second normally open switch, to ensure normal charging. This is because if the first normally closed switch is not turned off and the second normally open switch is not turned on, the voltage at the monitoring point in the auxiliary power supply circuit is a voltage output by the voltage source, and a controller of the charging pile determines that the voltage at the monitoring point is a non-zero value, and does not turn on a low-voltage auxiliary power supply loop switch, affecting normal charging of the power battery.

With reference to the first aspect, in a possible design, the charging connection apparatus further includes a third connection confirm socket and a third connection confirm circuit. The third connection confirm socket is connected to a third connection confirm plug of the first charging connector or a third connection confirm plug of the second charging connector. The third connection confirm circuit includes a fourth resistor unit, and the third connection confirm socket is connected to the vehicle body ground platform of the electric vehicle via the fourth resistor unit.

In this embodiment of this application, the third connection confirm socket of the charging connection apparatus is connected to the third connection confirm plug of the first charging connector or the third connection confirm plug of the second charging connector. After the charging connection apparatus is connected to the charging connector, the third connection confirm circuit of the charging connection apparatus and a third connection confirm circuit of the charging pile form a current loop. This helps the charging pile determine, based on a voltage at a monitoring point of the third connection confirm circuit of the charging pile, whether the charging pile is successfully connected to the electric vehicle, thereby facilitating charging of the power battery.

According to a second aspect, an electric vehicle is provided. The electric vehicle includes the charging connection apparatus according to any possible design of the first aspect and a power battery. The charging connection apparatus is connected to the power battery, and the charging connection apparatus is configured to: receive a direct current from the charging pile and transmit the direct current to the power battery.

For technical effect that can be achieved in any possible design of the second aspect, refer to the descriptions of technical effect that can be achieved in any possible design of the first aspect. Details are not described herein again.

According to a third aspect, a charging pile is provided. The charging pile includes a plurality of groups of charging modules, a plurality of groups of direct current power supply loop switches, and a plurality of groups of direct current plugs. The plurality of groups of charging modules one-to-one correspond to the plurality of groups of direct current plugs, each of the plurality of groups of charging modules includes a plurality of charging modules connected in parallel, each group of direct current power supply loop switches includes two switches, each of the plurality of groups of direct current plugs is connected to one group of direct current sockets of an electric vehicle, and each group of direct current plugs includes a positive direct current plug and a negative direct current plug. Each group of charging modules is connected to one group of direct current plugs via one group of direct current power supply loop switches, and different groups of charging modules are connected to different groups of direct current plugs via different groups of direct current power supply loop switches.

The charging pile in this embodiment of this application includes the plurality of groups of direct current plugs, and each of the plurality of groups of direct current plugs is connected to one group of direct current sockets of the electric vehicle. Compared with a charging pile including one group of direct current plugs, this embodiment of this application can increase charging power for charging the power battery, thereby helping meet a requirement for high-power charging of the electric vehicle. This facilitates a charging objective of 1 km range per 1s charge, that is, facilitates implementation of charging the electric vehicle with electric energy for one kilometer of driving range per second, to bring charging experience of "charge up while you coffee up" to a user.

In this embodiment of this application, each group of charging modules is connected to one group of direct current plugs via one group of direct current power supply loop switches, and different groups of charging modules are connected to different groups of direct current plugs via different groups of direct current power supply loop switches. When a charging loop connected to one group of direct current plugs is short-circuited, one group of direct current power supply loop switches corresponding to the direct current plugs may be controlled to be turned off, thereby preventing a short-circuit current from spreading to a charging module. This can effectively protect the charging pile. In addition, when a part of the groups of direct current plugs are connected to a corresponding group of direct current sockets, direct current power supply loop switches connected to the other groups of direct current plugs may be controlled to be turned off, so that there is no voltage on the other groups of direct current plugs. This can prevent a personal hazard caused by an accidental electric shock of a user, thereby protecting personal safety of the user.

With reference to the third aspect, in a possible design, when the plurality of groups of direct current plugs are connected to a plurality of groups of direct current sockets, all the groups of charging modules are configured to output currents of a same magnitude and voltages of a same magnitude; or when the plurality of groups of direct current plugs are connected to a plurality of groups of direct current sockets, all the groups of charging modules are configured to output currents of a same magnitude and voltages of different magnitudes.

In this embodiment of this application, when the plurality of groups of direct current plugs are connected to the plurality of groups of direct current sockets, all the groups of charging modules may output the currents of a same magnitude. In this way, currents of power transmission lines connected to all the groups of charging modules have a same magnitude. This can resolve problems of uneven contact resistances and uneven transmission currents of a plurality of power transmission lines.

When the plurality of groups of direct current plugs are connected to the plurality of groups of direct current sockets, all the groups of charging modules may output the voltages of a same magnitude, to ensure normal charging. This is because when all the groups of charging modules are connected to a same power battery through corresponding direct current ports, if all the groups of charging modules output voltages of different magnitudes, there is a voltage difference between loops in which all the groups of charging modules charge the power battery. As a result, there is a circulating current between a plurality of charging loops, and a false alarm or the like may occur, affecting normal charging of the power battery.

When the plurality of groups of direct current plugs are connected to the plurality of groups of direct current sockets, all the groups of charging modules may also output the voltages of different magnitudes. Particularly, when all the groups of charging modules are connected to different power batteries through corresponding direct current ports, even if there is a voltage difference between loops in which all the groups of charging modules charge the power battery, because all the groups of direct current charging modules are connected to different power batteries, there is no circulating current or false alarm or the like between different charging loops, thereby ensuring normal charging.

In addition, all the groups of charging modules output the voltages of a same magnitude or different magnitudes, and the charging pile outputs a voltage of a corresponding magnitude based on a capability of the charging pile. This helps improve flexibility of outputting a voltage by the charging pile.

With reference to the third aspect, in a possible design, the charging pile further includes a plurality of fuses. One fuse is connected between each group of charging modules and corresponding direct current plugs, and each fuse is connected in series to one switch in corresponding direct current power supply loop switches and then connected between the charging modules and the direct current plugs.

In this embodiment of this application, one fuse is connected between each group of charging modules and corresponding direct current plugs, and each fuse has a corresponding fuse-element rated current. When a current flowing through the fuse is greater than the fuse-element rated current of the fuse, if no corresponding action is taken in a timely manner, a fuse element of the fuse may be melted. Once the fuse element of the fuse is melted, the fuse needs to be replaced. Otherwise, a charging module connected to the fuse cannot charge the power battery through corresponding direct current ports. Therefore, a function of the fuse is as follows: When a current flowing through the fuse is greater than the fuse-element rated current of the fuse, the charging pile can perform a further action to avoid melting the fuse element of the fuse as much as possible, thereby avoid replacing the fuse and ensuring normal charging.

With reference to the third aspect, in a possible design, the charging pile is configured to: when a magnitude of a current flowing through a power transmission line on which the fuse is located is greater than a maximum current value allowed by the corresponding power transmission line, turn off the direct current power supply loop switch connected to the fuse.

In this embodiment of this application, when the magnitude of the current flowing through the power transmission line on which the fuse is located is greater than the maximum current value allowed by the corresponding power transmission line, the charging pile turns off the direct current power supply loop switch connected to the fuse, to avoid damage to the power transmission line caused by an excessively high current of the power transmission line on which the fuse is located.

With reference to the third aspect, in a possible design, the charging pile is further configured to adjust a magnitude of a current output by each group of charging modules corresponding to direct current power supply loop switches that are in an on state in the plurality of groups of direct current power supply loop switches.

In this embodiment of this application, after the charging pile turns off the direct current power supply loop switch connected to the fuse, the charging module connected to the fuse cannot charge the power battery through the direct current port. As a result, charging power is reduced. In this case, the charging pile may further adjust the magnitude of the current output by each group of charging modules corresponding to the direct current power supply loop switches that are in the on state in the plurality of groups of direct current power supply loop switches, to increase charging power, increase a charging speed, and improve user experience.

With reference to the third aspect, in a possible design, the charging pile is configured to: when a magnitude of a current flowing through a power transmission line on which the fuse is located is greater than a maximum current value allowed by the corresponding power transmission line, reduce a magnitude of a current output by one group of charging modules connected to the fuse.

In this embodiment of this application, when the magnitude of the current flowing through the power transmission line on which the fuse is located is greater than the maximum current value allowed by the corresponding power transmission line, the charging pile may reduce the magnitude of the current output by the group of charging modules connected to the fuse, so that the current of the power transmission line on which the fuse is located does not exceed the maximum current value allowed by the corresponding power transmission line, to avoid damage to the power transmission line caused by an excessively high current of the power transmission line on which the fuse is located. This facilitates normal charging of the power battery.

With reference to the third aspect, in a possible design, the charging pile further includes a plurality of insulation monitoring devices. The plurality of insulation monitoring devices one-to-one correspond to the plurality of groups of charging modules. Each insulation monitoring device is configured to: when the direct current plugs are connected to the direct current sockets, perform insulation monitoring on a circuit between an output end of a corresponding group of charging modules and corresponding direct current power supply loop switches.

In this embodiment of this application, the plurality of insulation monitoring devices in the charging pile one-to-one correspond to the plurality of groups of charging modules. When the direct current plugs are connected to the direct current sockets, each insulation monitoring device can perform insulation monitoring on the circuit between the output end of the corresponding group of charging modules and the corresponding direct current power supply loop switches, to determine whether the monitored circuit has safety hazards such as electric leakage, thereby ensuring electrical safety of a user and a surrounding environment.

With reference to the third aspect, in a possible design, the charging pile includes a charging connector. The charging connector includes the plurality of groups of direct current plugs. The charging pile is configured to: when the charging connector is connected to the direct current sockets, if a direct current power supply loop switch connected to a part of direct current plugs in the plurality of groups of direct current plugs is adhered, control one group of charging modules connected to each group of direct current plugs in the part of direct current plugs to stop outputting a direct current.

In this embodiment of this application, when the charging connector is connected to the direct current sockets, if the direct current power supply loop switch connected to the part of direct current plugs in the plurality of groups of direct current plugs in the charging connector is adhered, the group of charging modules connected to each group of direct current plugs in the part of direct current plugs is controlled to stop outputting a direct current. This can ensure personal safety. This is because when a charging loop switch connected to direct current plugs is adhered, if the direct current plugs continue to output the direct current, when the direct current power supply loop switches connected to the direct current plugs need to be turned off, the direct current power supply loop switch cannot be completely turned off due to adhesion, and the direct current plugs are energized. The user may accidentally touch the direct current plugs, causing a personal hazard.

With reference to the third aspect, in a possible design, the charging connector further includes a first connection confirm plug, a second connection confirm plug, a third connection confirm plug, a first connection confirm circuit, a second connection confirm circuit, and a third connection confirm circuit. The first connection confirm plug is connected to the first connection confirm circuit, the second connection confirm plug is connected to the second connection confirm circuit, and the third connection confirm plug is connected to the third connection confirm circuit. When the charging connector is connected to the electric vehicle, the first connection confirm circuit forms a current loop with a first connection confirm circuit of the electric vehicle via the first connection confirm plug and a first connection confirm socket of the electric vehicle, the second connection confirm circuit forms a current loop with a second connection confirm circuit of the electric vehicle via the second connection confirm plug and a second connection confirm socket of the electric vehicle, and the third connection confirm circuit forms a current loop with a third connection confirm circuit of the electric vehicle via the third connection confirm plug and a third connection confirm socket of the electric vehicle. The charging pile is configured to: when a voltage at a monitoring point in the third connection confirm circuit of the charging connector is a ninth preset value, determine that the charging connector is successfully connected to the electric vehicle.

In this embodiment of this application, when the charging connector includes the plurality of groups of direct current plugs and the three connection confirm plugs, when the voltage at the monitoring point in the third connection confirm circuit of the charging connector is the ninth preset value, the charging pile determines that the charging connector is successfully connected to the electric vehicle. In this embodiment of this application, the third connection confirm circuit is a connection confirm circuit connected to a plug CC1. In other words, the electric vehicle still determines, by using an existing connection confirm circuit connected to the vehicle socket, that the electric vehicle is successfully connected to the charging connector. This is simple.

With reference to the third aspect, in a possible design, the first connection confirm circuit of the charging pile includes a fifth resistor unit, and the first connection confirm plug is connected to a device ground platform of the charging pile via the fifth resistor unit. The second connection confirm circuit of the charging pile includes a sixth resistor unit, and the second connection confirm plug is connected to the device ground platform via the sixth resistor unit. The third connection confirm circuit of the charging pile includes a seventh resistor unit, the third connection confirm plug is connected to a voltage source via the seventh resistor unit, and the monitoring point is located between the third connection confirm plug and the seventh resistor unit.

In this embodiment of this application, when the charging pile is connected to the electric vehicle, the third connection confirm circuit of the charging pile and the third connection confirm circuit of the charging connection apparatus form the loop. Because the monitoring point is located between the third connection confirm plug and the seventh resistor unit, when the voltage at the monitoring point is the ninth preset value, the charging pile can determine that the charging connector is successfully connected to the electric vehicle.

With reference to the third aspect, in a possible design, the charging connector further includes a first connection confirm plug, a third connection confirm plug, an auxiliary power supply plug, a first connection confirm circuit, a third connection confirm circuit, and an auxiliary power supply circuit. The first connection confirm plug is connected to the first connection confirm circuit, the third connection confirm plug is connected to the third connection confirm circuit, the auxiliary power supply plug is connected to the auxiliary power supply circuit, and the auxiliary power supply plug is configured to supply power to a controller of the electric vehicle. When the charging connector is connected to the electric vehicle, the first connection confirm circuit forms a current loop with a first connection confirm circuit of the electric vehicle via the first connection confirm plug and a first connection confirm socket of the electric vehicle, the third connection confirm circuit forms a current loop with a third connection confirm circuit of the electric vehicle via the third connection confirm plug and a third connection confirm socket of the electric vehicle, and the auxiliary power supply circuit forms a current loop with an auxiliary power supply circuit of the electric vehicle via the auxiliary power supply plug and an auxiliary power supply socket of the electric vehicle. The charging pile is configured to: when a voltage at a monitoring point in the third connection confirm circuit of the charging connector is a tenth preset value, determine that the charging connector is successfully connected to the electric vehicle.

In this embodiment of this application, when the charging connector includes the plurality of groups of direct current plugs, when the voltage at the monitoring point in the third connection confirm circuit of the charging connector is the tenth preset value, the charging pile determines that the charging connector is successfully connected to the electric vehicle. In this embodiment of this application, the third connection confirm circuit is a connection confirm circuit connected to a plug CC1. In other words, the electric vehicle still determines, by using an existing connection confirm circuit connected to the vehicle socket, that the electric vehicle is successfully connected to the charging connector. This is simple.

With reference to the third aspect, in a possible design, the first connection confirm circuit of the charging pile includes an eighth resistor unit, and the first connection confirm plug is connected to a device ground platform of the charging pile via the eighth resistor unit. The third connection confirm circuit of the charging pile includes a ninth resistor unit, the third connection confirm plug is connected to a voltage source via the ninth resistor unit, and the monitoring point is located between the third connection confirm plug and the ninth resistor unit. The auxiliary power supply circuit of the charging pile includes a tenth resistor unit, and the auxiliary power supply plug is connected to the device ground platform via the tenth resistor unit.

In this embodiment of this application, when the charging pile is connected to the electric vehicle, the third connection confirm circuit of the charging pile and the third connection confirm circuit of the charging connection apparatus form the loop. Because the monitoring point is located between the third connection confirm plug and the ninth resistor unit, when the voltage at the monitoring point is the tenth preset value, the charging pile can determine that the charging connector is successfully connected to the electric vehicle.

### BRIEF DESCRIPTION OF DRAWINGS

FIG. 1 is a diagram of a scenario of a charging system according to an embodiment of this application;
FIG. 2 to FIG. 7 are diagrams of structures of charging systems according to embodiments of this application;
FIG. 8 is a diagram of a charging interface; and
FIG. 9 to FIG. 21(d)-2 are diagrams of structures of charging systems according to embodiments of this application.

### DESCRIPTION OF EMBODIMENTS

The following describes the technical solutions of this application with reference to the accompanying drawings.

In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are merely intended to distinguish between different described objects, and impose no limitation on positions, rankings, priorities, quantities, content, or the like of the described objects. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation. In addition, in the descriptions of embodiments, unless otherwise specified, "a plurality of" means two or more.

With the development of new energy vehicle technologies, many vehicle manufacturers gradually launch electric vehicles. Electric vehicles have become a choice for many users because of energy saving, environmental protection, and relatively mature technologies.

This application may be applied in a system in which a power supply apparatus and a load charge each other through a power distribution matrix. Especially, in a system including a charging pile and an electric vehicle, the charging pile may charge the electric vehicle by using electric energy that comes from a power grid, and the electric vehicle may also reversely output electric energy of the electric vehicle to the power grid.

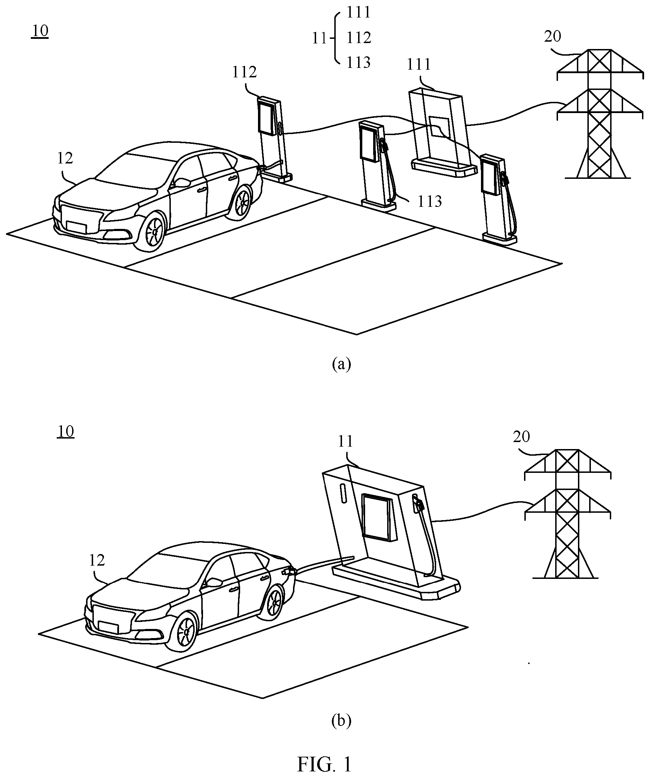

FIG. 1 illustrates a structure of a charging system 10 according to an embodiment of this application.

With reference to (a) in FIG. 1 and (b) in FIG. 1, the charging system 10 may include a charging pile 11 and an electric vehicle 12. The charging pile 11 may be configured to: receive an alternating current output by an external power grid 20, convert the alternating current into a stable direct current, and then transmit the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging pile 11 may include a charging apparatus 111, at least one charging terminal 112, and at least one charging connector 113. The charging apparatus 111 may be electrically connected to the at least one charging terminal 112. The at least one charging terminal 112 may be electrically connected to the at least one charging connector 113. During specific implementation, one charging terminal 112 may be electrically connected to one or more charging connectors 113.

The charging apparatus 111 may include a plurality of power conversion apparatuses. The plurality of power conversion apparatuses may convert an alternating current that comes from the external power grid 20 into a stable direct current, and then transmit the stable direct current to the charging terminal 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging terminal 112 transmits the stable direct current to the electric vehicle 12 via the charging connector 113, to charge the electric vehicle 12.

The charging terminal 112 may include a housing, a human-machine interaction interface, a charging control unit, a metering and billing unit, and the like, and is configured to perform information exchange, energy transmission, metering and billing, and the like with the electric vehicle 12.

The electric vehicle 12 may be a transportation means driven by electric energy to travel. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, in the charging pile 11, a human-machine interaction interface, a charging control unit, a metering and billing unit, and the like may be directly provided in a charging apparatus 111. Therefore, the charging pile 11 may include only the charging apparatus 111 and at least one charging connector 113 electrically connected to the charging apparatus 111, but does not include a charging terminal 112. A plurality of power conversion apparatuses in the charging apparatus 111 may convert an alternating current that comes from the external power grid 20 into a stable direct current, and then directly transmit the stable direct current to the electric vehicle 12 via the charging connector 113.

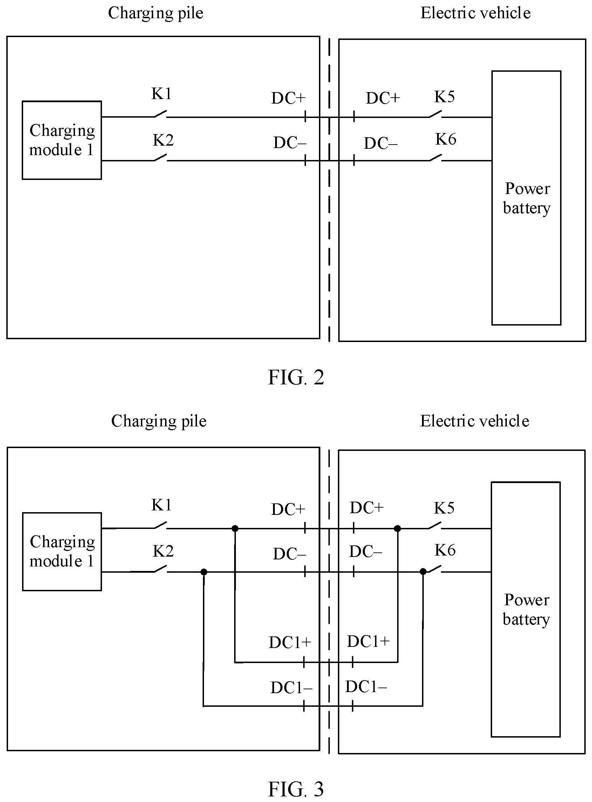

FIG. 2 is a diagram of a charging system. Refer to FIG. 2. A charging pile includes a charging module 1. The charging module 1 charges a power battery of an electric vehicle via one group of direct current ports. The group of direct current ports are direct current ports DC+ and DC- shown in the figure. When charging plugs corresponding to the direct current ports DC+ and DC- are connected to charging sockets corresponding to the direct current ports DC+ and DC-, and direct current power supply loop switches K1 and K2 and charging loop switches K5 and K6 are turned on, the charging module 1 can charge the power battery through the direct current ports DC+ and DC- and a power transmission line that connects the power battery to the charging module 1. If a maximum current allowed by the power transmission line is 800 A, even if the charging module 1 can output a larger current, because of a limitation of the maximum current allowed by the power transmission line, the charging module 1 can charge the power battery at the maximum current of only 800 A. As a result, charging power is low, and it is difficult to implement a charging speed of 1 km range per 1s charge.

It should be noted that, in embodiments of this application and the following embodiments, each of one or more groups of charging modules includes a plurality of charging modules connected in parallel. The charging module may be an AC-DC module or a DC-DC module.

This application provides a charging system. A charging module in the charging system may charge a power battery of an electric vehicle through a plurality of groups of direct current ports, to increase charging power for charging the power battery, thereby helping meet a requirement for high-power charging of the electric vehicle.

In an embodiment, as shown in FIG. 3, a charging module 1 is connected to two groups of direct current plugs via one group of direct current power supply loop switches K1 and K2. Each group of direct current plugs includes a positive direct current plug and a negative direct current plug. A power battery is connected to two groups of direct current sockets via one group of charging loop switches K5 and K6. Each group of direct current sockets includes a positive direct current socket and a negative direct current socket. When the direct current plugs are connected to the direct current sockets and all the switches are turned on, the charging module 1 can charge the power battery through two groups of direct current ports. In an actual charging process, it is assumed that a charging current required by the power battery is 1600 A, and a maximum current allowed by each group of power transmission lines is 800 A. If the charging module 1 has a capability of outputting a current of 1600 A, the charging module 1 may charge the power battery with a current of 800 A through each of two power transmission lines. In other words, each direct current port outputs a current of 800 A. In this way, the charging module 1 can charge the power battery with the current of 1600 A, thereby increasing charging power.

For ease of description, in this application and the following embodiments, two groups of direct current ports include direct current ports DC+ and DC- that are a combination of direct current plugs DC+ and DC- and direct current sockets DC+ and DC-, and direct current ports DC1+ and DC1- that are a combination of direct current plugs DC1+ and DC1- and direct current sockets DC1+ and DC1-.

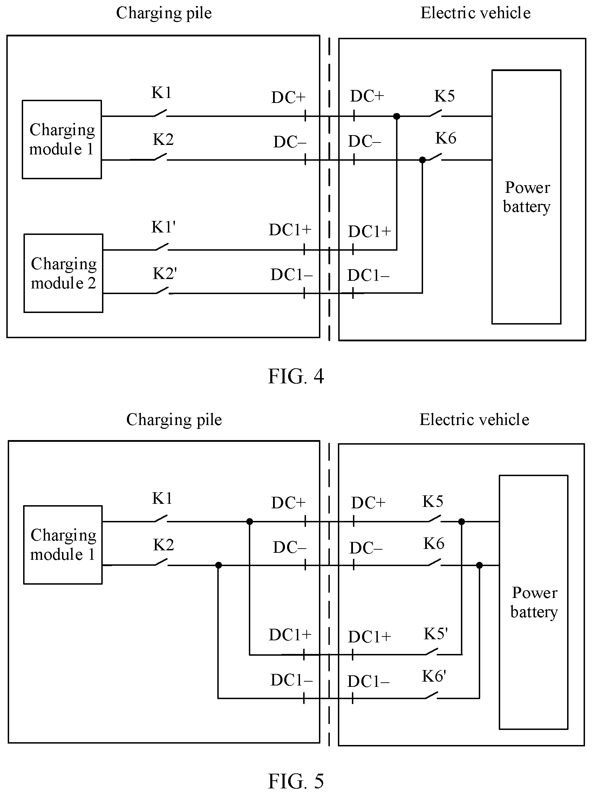

In an embodiment, as shown in FIG. 4, a charging pile includes two groups of charging modules: a charging module 1 and a charging module 2. The charging module 1 is connected to one group of direct current plugs DC+ and DC- via one group of direct current power supply loop switches K1 and K2, and the charging module 2 is connected to another group of direct current plugs DC1+ and DC1- via one group of direct current power supply loop switches K1' and K2'. A power battery in an electric vehicle is connected to two groups of direct current sockets: direct current sockets DC+ and DC-, and direct current sockets DC1+ and DC1- via one group of charging loop switches K5 and K6. When the direct current plugs are connected to the direct current sockets and all the switches are turned on, the two groups of charging modules: the charging module 1 and the charging module 2, charge the power battery through two groups of direct current ports. In an actual charging process, it is assumed that a charging current required by the power battery is 1600 A, and a maximum current allowed by each group of power transmission lines is 800 A. In this case, the charging module 1 and the charging module 2 each can output a current of 800 A, so that a total current transmitted to the power battery is 1600 A. In this way, the two groups of charging modules: the charging module 1 and the charging module 2 can jointly charge the power battery with the current of 1600 A, thereby increasing charging power. In addition, in this embodiment of this application, because the group of direct current power supply loop switches K1 and K2 control the charging module 1 to charge the power battery, and the group of direct current power supply loop switches K1' and K2' control the charging module 2 to charge the power battery, that is, different groups of direct current power supply loop switches are respectively connected to different groups of charging modules, the charging pile can adjust a charging current for charging the power battery based on a requirement of the power battery, thereby facilitating flexible charging of the electric vehicle.

In an embodiment, as shown in FIG. 5, a charging module 1 is connected to two groups of direct current plugs via one group of direct current power supply loop switches K1 and K2, a power battery is connected to one group of direct current sockets via one group of charging loop switches K5 and K6, and the power battery is connected to another group of direct current sockets via another group of charging loop switches K5' and K6'. When the direct current plugs are connected to the direct current sockets and all the switches are turned on, the charging module 1 can charge the power battery through two groups of direct current ports. In an actual charging process, it is assumed that a charging current required by the power battery is 1600 A, and a maximum current allowed by each group of power transmission lines is 800 A. If the charging module 1 has a capability of outputting a current of 1600 A, the charging module 1 may charge the power battery with a current of 800 A through each of two power transmission lines. In other words, each group of direct current ports outputs a current of 800 A. In this way, the charging module 1 can charge the power battery with the current of 1600 A, thereby increasing charging power. In addition, in this embodiment of this application, each of the two groups of direct current sockets of an electric vehicle is connected to one group of charging loop switches. The direct current sockets DC+ and DC- are connected to the charging loop switches K5 and K6, and the direct current sockets DC1+ and DC1- are connected to the charging loop switches K5' and K6'. In this way, the group of charging loop switches K5 and K6 can control the direct current sockets DC+ and DC- to charge the power battery, and the other group of charging loop switches K5' and K6' can control the direct current sockets DC1+ and DC1- to charge the power battery. In other words, different groups of charging loop switches respectively control different groups of direct current sockets to charge the power battery. Therefore, the electric vehicle can adjust a charging current for charging the power battery based on a requirement of the electric vehicle, thereby facilitating flexible charging of the electric vehicle.

Although the foregoing three embodiments can increase charging power and flexibly adjust a charging current of the electric vehicle, when a charging loop connected to a charging interface is short-circuited, the charging pile and the electric vehicle cannot be effectively protected, resulting in damage to the charging pile and the electric vehicle. For example, FIG. 3 is used as an example. When the charging module 1 charges the power battery through the two groups of direct current ports, when a charging loop connected to the direct current ports DC1+ and DC1- is short-circuited, a short-circuit current may flow into the charging module 1 through the direct current power supply loop switches K1 and K2, and the short-circuit current may flow into the power battery through the charging loop switches K5 and K6. As a result, the charging pile and the electric vehicle are damaged. In addition, when the electric vehicle is connected to any one of a 2015 charging connector, a 2015+ charging connector, and a supercharging charging connector (for ease of description, the 2015/2015+/supercharging charging connector are used as examples below), the direct current plugs DC+ and DC- are connected to the direct current sockets DC+ and DC-, but the direct current plugs DC1+ and DC1- are not connected to the direct current sockets DC1+ and DC1-. As a result, direct current ports DC1+ and DC1- are energized, and a user may accidentally touch the direct current ports DC1+ and DC1-, causing a safety problem, and even endangering personal safety in a severe case.

In view of this, this application provides a charging connection apparatus. The charging connection apparatus is used in an electric vehicle. The charging connection apparatus includes a plurality of groups of charging loop switches and a plurality of groups of direct current sockets, each group of charging loop switches includes two switches, each of the plurality of groups of direct current sockets is connected to one group of direct current plugs of a charging pile, and each group of direct current sockets includes a positive direct current socket and a negative direct current socket. Each group of direct current sockets is connected to a power battery of the electric vehicle via one group of charging loop switches, and different groups of direct current sockets are connected to the power battery via different groups of charging loop switches. All the groups of direct current sockets are configured to receive currents output by different charging modules in the charging pile.

The charging connection apparatus in this embodiment of this application includes the plurality of groups of direct current sockets, all the groups of direct current sockets are configured to receive currents output by different groups of charging modules in the charging pile, and the plurality of groups of direct current sockets of the charging connection apparatus may simultaneously receive the currents output by the charging pile. Compared with an electric vehicle including one group of direct current sockets, this embodiment of this application can increase charging power for charging the power battery, thereby helping meet a requirement for high-power charging of the electric vehicle. This facilitates a charging objective of 1 km range per 1s charge, that is, facilitates implementation of charging the electric vehicle with electric energy for one kilometer of driving range per second, to bring charging experience of "charge up while you coffee up" to a user.

In this embodiment of this application, each group of direct current sockets is connected to the power battery of the electric vehicle via one group of charging loop switches, and different groups of direct current sockets are connected to the power battery via different groups of charging loop switches. When a charging loop connected to a part of the groups of direct current sockets is short-circuited, a charging loop switch corresponding to the part of the groups of direct current sockets may be controlled to be turned off, to prevent a short-circuit current from spreading to the power battery. This can effectively protect the electric vehicle. In addition, when a part of the groups of direct current sockets are connected to a corresponding group of direct current plugs, charging loop switches connected to the other groups of direct current sockets may be controlled to be turned off, so that there is no voltage on the other groups of direct current sockets. This can prevent a personal hazard caused by an accidental touch of a user, thereby protecting personal safety of the user.

An embodiment of this application further provides a charging pile. The charging pile includes a plurality of groups of charging modules, a plurality of groups of direct current power supply loop switches, and a plurality of groups of direct current plugs. The plurality of groups of charging modules one-to-one correspond to the plurality of groups of direct current plugs, each of the plurality of groups of charging modules includes a plurality of charging modules connected in parallel, each group of direct current power supply loop switches includes two switches, each of the plurality of groups of direct current plugs is connected to one group of direct current sockets of an electric vehicle, direct current sockets connected to all the groups of direct current plugs are different, and each group of direct current plugs includes a positive direct current plug and a negative direct current plug. Each group of charging modules is connected to one group of direct current plugs via one group of direct current power supply loop switches, and different groups of charging modules are connected to different groups of direct current plugs via different groups of direct current power supply loop switches.

The charging pile in this embodiment of this application includes the plurality of groups of direct current plugs, and each of the plurality of groups of direct current plugs is connected to one group of direct current sockets of the electric vehicle. Compared with a charging pile including one group of direct current plugs, this embodiment of this application can increase charging power for charging the power battery, thereby helping meet a requirement for high-power charging of the electric vehicle. This facilitates a charging objective of 1 km range per 1s charge, that is, facilitates implementation of charging the electric vehicle with electric energy for one kilometer of driving range per second, to bring charging experience of "charge up while you coffee up" to a user.

In this embodiment of this application, each group of charging modules is connected to one group of direct current plugs via one group of direct current power supply loop switches, and different groups of charging modules are connected to different groups of direct current plugs via different groups of direct current power supply loop switches. When a charging loop connected to one group of direct current plugs is short-circuited, one group of direct current power supply loop switches corresponding to the direct current plugs may be controlled to be turned off, thereby preventing a short-circuit current from spreading to a charging module. This can effectively protect the charging pile. In addition, when a part of the groups of direct current plugs are connected to a corresponding group of direct current sockets, direct current power supply loop switches connected to the other groups of direct current plugs may be controlled to be turned off, so that there is no voltage on the other groups of direct current plugs. This can prevent a personal hazard caused by an accidental electric shock of a user, thereby protecting personal safety of the user.

An embodiment of this application further provides a charging system. The charging system includes the charging connection apparatus and the charging pile described above. The following first describes in detail the charging system provided in this embodiment of this application with reference to the accompanying drawings.

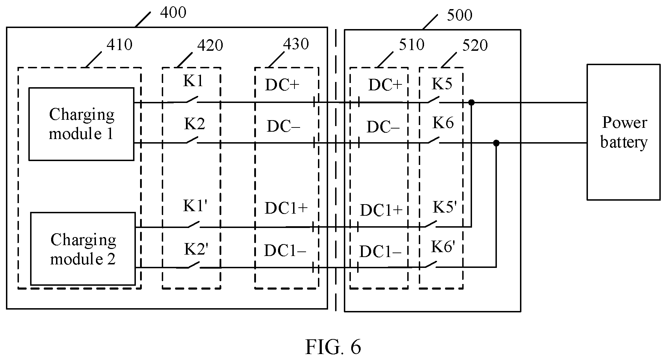

FIG. 6 is a diagram of the charging system according to this application. The charging system includes a charging pile 400 and an electric vehicle.

It should be understood that the charging pile 400 may be the split-type charging pile shown in (a) in FIG. 1, or the integral split-type charging pile shown in (b) in FIG. 1, and the electric vehicle may be the electric vehicle 12 shown in (a) and (b) in FIG. 1.

The charging pile 400 includes a plurality of groups of charging modules 410, a plurality of groups of direct current power supply loop switches 420, and a plurality of groups of direct current plugs 430. The plurality of groups of charging modules 410 one-to-one correspond to the plurality of groups of direct current plugs 430, each of the plurality of groups of charging modules 410 includes a plurality of charging modules connected in parallel, each group of direct current power supply loop switches includes two switches, each of the plurality of groups of direct current plugs 430 is connected to one group of direct current sockets of the electric vehicle, direct current sockets connected to all the groups of direct current plugs are different, and each group of direct current plugs includes a positive direct current plug and a negative direct current plug.

A charging connection apparatus 500 of the electric vehicle includes a plurality of groups of charging loop switches 510 and a plurality of groups of direct current sockets 520. Each group of charging loop switches includes two switches, each of the plurality of groups of direct current sockets 520 is connected to one group of direct current plugs of the charging pile, and each group of direct current sockets includes a positive direct current socket and a negative direct current socket.

Each group of charging modules is connected to one group of direct current plugs via one group of direct current power supply loop switches, and different groups of charging modules are connected to different groups of direct current plugs via different groups of direct current power supply loop switches.

Each group of direct current sockets is connected to a power battery of the electric vehicle via one group of charging loop switches, and different groups of direct current sockets are connected to the power battery via different groups of charging loop switches. All the groups of direct current sockets are configured to receive currents output by different charging modules in the charging pile.

It should be noted that, in this embodiment of this application, the plurality of groups of direct current plugs are located in one charging connector, and the plurality of groups of direct current sockets are located in one vehicle interface.

In this embodiment of this application, each group of charging modules in the charging pile charges the power battery through one group of direct current ports, direct current plugs corresponding to each group of direct current ports are connected to a corresponding group of charging modules via one group of direct current power supply loop switches, and charging sockets corresponding to each direct current port are connected to the power battery via one group of charging loop switches. Specifically, charging plugs corresponding to direct current ports DC+ and DC- are connected to a charging module 1 via direct current charging loop switches K1 and K2, and charging sockets corresponding to the direct current ports DC+ and DC- are connected to the power battery via charging loop switches K5 and K6. Charging plugs corresponding to direct current ports DC1+ and DC1- are connected to a charging module 2 via direct current charging loop switches K1' and K2', and charging sockets corresponding to the direct current ports DC1+ and DC1- are connected to the power battery via charging loop switches K5' and K6'. When each group of direct current plugs is connected to a corresponding group of direct current sockets and all the switches are turned on, the two groups of charging modules may charge the power battery through the corresponding direct current ports.

For example, it is assumed that a charging current required by the power battery is 1400 A, and a maximum current allowed by each group of power transmission lines is 800 A. In this case, the charging module 1 and the charging module 2 may output currents of a same magnitude, or may output currents of different magnitudes. For example, the charging module 1 may output a current of 700 A, and the charging module 2 may output a current of 700 A, so that a total current transmitted to the power battery is 1400 A. In this way, the two groups of charging modules: the charging module 1 and the charging module 2 can jointly charge the power battery with the current of 1400 A. Alternatively, the charging module 1 may output a current of 800 A, and the charging module 2 may output a current of 600 A, so that a total current transmitted to the power battery is 1400 A. In this way, the two groups of charging modules: the charging module 1 and the charging module 2 can jointly charge the power battery with the current of 1400 A.

In this embodiment of this application, because different direct current ports are respectively connected to different groups of charging modules via different groups of direct current power supply loop switches, when the charging module charges the power battery through only one direct current port, direct current power supply loop switches connected to another direct current port may be controlled to be turned off, so that there is no voltage on the another direct current port. This can prevent a personal hazard caused by an accidental touch of a user, thereby protecting personal safety of the user.

For example, when a vehicle socket is connected to a charging connector, if the charging connector connected to the vehicle socket is a 2015/2015+/supercharging charging connector, a controller of the charging pile controls the direct current power supply loop switches K1 and K2 to be turned on, and a controller of the vehicle controls the charging loop switches K5 and K6 to be turned on, so that the charging module 1 can charge the power battery through the direct current ports DC+ and DC-. Because the direct current ports DC1+ and DC1- are connected to the charging module 2 via the direct current power supply loop switches K1' and K2', the controller of the charging pile may turn off the direct current power supply loop switches K1' and K2'. Therefore, the charging module 2 does not output a current to the direct current ports DC1+ and DC1-, that is, the direct current ports DC1+ and DC1- are not energized. This can prevent a personal hazard caused by an accidental electric shock of a user, thereby ensuring personal safety of the user.

In this embodiment of this application, because different direct current ports are respectively connected to different groups of charging modules via different direct current power supply loop switches, and different direct current ports are connected to the power battery via different charging loop switches, when a charging interface is short-circuited, a short circuit of one direct current port does not affect a loop of charging performed through another direct current port.

For example, when a vehicle socket is connected to a charging connector, if the charging connector connected to the vehicle socket is an MCS connector, when a charging loop in which the direct current ports DC1+ and DC1- are located is short-circuited, a controller of the charging pile may turn off the direct current power supply loop switches K1' and K2', and a controller of the vehicle may turn off the charging loop switches K5' and K6', to turn off a loop in which the charging module 2 charges the power battery through the direct current ports DC1+ and DC1-. This prevents a short-circuit current from spreading to the charging module 2 and the power battery, thereby effectively protecting the charging pile and the electric vehicle. However, the direct current power supply loop switches K1 and K2 and the charging loop switches K5 and K6 may still be in an on state, so that the charging module 1 can continue to charge the power battery through the direct current ports DC+ and DC-. In other words, turning off the direct current power supply loop switches K1' and K2' and the charging loop switches K5' and K6' does not affect states of the direct current power supply loop switches K1 and K2 and the charging loop switches K5 and K6, so that the power battery can be continuously charged, and a charging requirement of continuing to charge the power battery can be met.

Similarly, when a charging loop in which the direct current ports DC+ and DC- are located is short-circuited, the controller of the charging pile may turn off the direct current power supply switches K1 and K2, and the controller of the vehicle may turn off the charging loop switches K5 and K6, to turn off a loop in which the charging module 1 charges the power battery through the direct current ports DC+ and DC-. This prevents a short-circuit current from spreading to the charging module 1 and the power battery, thereby effectively protecting the charging pile and the electric vehicle. However, the direct current power supply loop switches K1' and K2' and the charging loop switches K5' and K6' may still be in an on state, so that the charging module 2 can continue to charge the power battery through the direct current ports DC1+ and DC1-. In other words, turning off the direct current power supply switches K1 and K2 and the charging loop switches K5 and K6 does not affect states of the direct current power supply switches K1' and K2' and the charging loop switches K5' and K6', so that the power battery can be continuously charged, and a charging requirement of continuing to charge the power battery can be met.

It should be noted that, in embodiments of this application, the MCS charging connector may be understood as that a plurality of groups of direct current plugs are connected to a plurality of groups of direct current sockets. For example, in the foregoing embodiment, one group of direct current plugs DC+ and DC- is connected to one group of direct current sockets DC+ and DC-, and another group of direct current plugs DC1+ and DC1- is connected to another group of direct current sockets DC1+ and DC1-. The 2015 connector, the 2015+ connector, and the supercharging charging connector may be understood as that one group of direct current plugs is connected to one group of direct current sockets. For example, in the foregoing embodiment, one group of direct current plugs DC+ and DC- is connected to one group of direct current sockets DC+ and DC-.

In embodiments of this application, the charging module 1 and the charging module 2 may be charging modules in a same charging pile, or may be charging modules in different charging piles. This is not limited.

In addition, because the charging module charges the power battery through two charging loops, after a plurality of times of charging, two power transmission lines are worn differently, resulting in uneven contact resistances of the two power transmission lines. Consequently, currents transmitted through the two power transmission lines are uneven. The uneven currents transmitted through the two power transmission lines aggravate different wear of the two power transmission lines, and therefore further increase a difference between magnitudes of the currents on the two power transmission lines.

In an embodiment, the charging connection apparatus is configured to send a packet to the charging pile. The packet includes information indicating all groups of direct current plugs of the charging pile to output currents of a same magnitude.

Still refer to FIG. 6. In this embodiment of this application, because the two groups of charging modules are connected to different groups of direct current/charging plugs via different groups of direct current power supply loop switches, the electric vehicle may separately request, from the two groups of charging modules, information indicating all the groups of charging modules to output currents of a same magnitude, so that the two groups of charging modules in the charging pile can output currents of a same magnitude, thereby resolving problems of uneven contact resistances and uneven transmission currents of the two power transmission lines. For example, it is assumed that a charging current required by the power battery is 1400 A, and a maximum current allowed by each group of power transmission lines is 800 A. In this case, the charging module 1 may output a current of 700 A, and the charging module 2 may output a current of 700 A, so that a total current transmitted to the power battery is 1400 A. In this way, the two groups of charging modules: the charging module 1 and the charging module 2 can jointly charge the power battery with the current of 1400 A. In addition, currents output by all the groups of charging modules have a consistent magnitude, thereby resolving a problem of uneven transmission currents of the two power transmission lines and uneven contact resistances caused by the problem.

In an actual charging process, when a physical connection between a vehicle socket and a charging connector is completed, and low-voltage auxiliary power-on, a charging handshake phase, and charging parameter configuration are completed, a controller of a vehicle may send, to a charging pile, a packet for setting a charging requirement of a power battery, so that the charging pile can configure a corresponding direct current based on a specific requirement of the electric vehicle. In addition, when the charging pile includes a plurality of groups of charging modules, the packet sent by the controller of the vehicle to the charging pile includes information indicating all groups of charging modules to output currents of a same magnitude.

For example, it is assumed that a charging current required by the power battery is 1400 A, and a maximum current allowed by each group of power transmission lines is 800 A. In this case, the packet sent by the controller of the vehicle to the charging pile includes indicating the charging module 1 to output a current of 700 A and the charging module 2 to output a current of 700 A. After the charging pile receives the packet, if each group of charging modules has a capability of outputting a corresponding current, each group of charging modules may output a current of a corresponding magnitude based on a request of the electric vehicle. In other words, the charging module 1 outputs the charging current of 700 A, and the charging module 2 outputs the charging current of 700 A, to ensure normal charging.

If each group of charging modules does not have a capability of outputting a corresponding charging current, each group of charging modules may adjust an output current based on a packet resent by the electric vehicle, or each group of charging modules may directly charge the power battery of the electric vehicle by outputting a current with a maximum output capability of each group of charging modules. For example, the packet sent by the controller of the vehicle to the charging pile includes indicating the charging module 1 to output a current of 700 A and the charging module 2 to output a current of 700 A. However, maximum currents that can be output by the charging module 1 and the charging module 2 are both 600 A. In this case, the charging pile may feed back, to the electric vehicle, that the charging current requirement of the electric vehicle cannot be met and a maximum current output capability of the charging pile. Further, the controller of the vehicle may resend a packet to the charging pile. The packet includes indicating the charging module 1 to output a charging current of 600 A and the charging module 2 to output a charging current of 600 A. In this way, the charging module 1 and the charging module 2 each can output the charging current of 600 A, to ensure normal charging. Alternatively, each group of charging modules may directly charge the power battery of the electric vehicle by outputting a current with a maximum output capability of each group of charging modules, that is, each group of charging modules charges the power battery with the current of 600 A.

As described above, when the charging pile includes the plurality of groups of charging modules, the packet sent by the controller of the vehicle includes the information indicating all the groups of charging modules to output the currents of a same magnitude. However, an indication of a voltage is related to a status of connection between the plurality of groups of direct current sockets and the power battery in the electric vehicle. For details, refer to the following description.

Case 1: The plurality of groups of direct current sockets are connected to a same power battery.
(1) When there is one power battery, the plurality of groups of direct current sockets are connected to the power battery, and the packet sent by the charging connection apparatus to the charging pile includes information indicating all the groups of direct current plugs to output voltages of a same magnitude.

For example, the packet sent by the charging connection apparatus to the charging pile includes information indicating all the groups of direct current plugs to output voltages of 300 V, so that each group of charging modules outputs a voltage of 300 V, to ensure normal charging.

If the packet sent by the charging connection apparatus to the charging pile includes the information indicating all the groups of direct current plugs to output voltages of different magnitudes, a circulating current may be caused, and further, a false alarm or the like may occur. For example, the packet sent by the charging connection apparatus to the charging pile includes the information indicating the charging pile to output a voltage of 300 V and a voltage of 400 V. When the charging module 1 charges the power battery with the voltage of 300 V, and the charging module 2 charges the power battery with the voltage of 400 V, there is a voltage difference between a loop in which the charging module 1 charges the power battery and a loop in which the charging module 2 charges the power battery. As a result, there is a circulating current between the two charging loops, and a false alarm or the like may occur, affecting normal charging of the power battery.

In some embodiments, one power battery may also be understood as a battery system conductively connected together.

(2) When there are a plurality of power batteries and the plurality of power batteries are not electrically isolated from each other, the plurality of groups of direct current sockets are correspondingly connected to the plurality of power batteries. This is equivalent to that the electric vehicle includes only one power battery with a large capacity, and the plurality of groups of direct current sockets are still connected to a same power battery. The packet sent by the charging connection apparatus to the charging pile includes information indicating all the groups of direct current plugs to output voltages of a same magnitude.

In this case, for a reason similar to that in (1) in Case 1, the packet sent by the controller of the vehicle to the charging pile needs to request only one voltage, to ensure normal charging.

Case 2: The plurality of groups of direct current sockets are connected to different power batteries.

When there are a plurality of power batteries in the electric vehicle, and the plurality of power batteries are electrically isolated from each other, the plurality of groups of direct current sockets are correspondingly connected to the plurality of power batteries. This is equivalent to that the plurality of groups of direct current sockets are connected to different power batteries, the packet sent by the charging connection apparatus to the charging pile includes information indicating all the groups of direct current plugs to output voltages of a same magnitude or different magnitudes.

For example, the packet sent by the charging connection apparatus to the charging pile includes indicating all the groups of direct current plugs to output voltages of 300 V, so that each group of charging modules outputs a voltage of 300 V, to ensure normal charging.

Alternatively, the packet sent by the charging connection apparatus to the charging pile includes information indicating the two groups of direct current plugs to respectively output a voltage of 300 V and a voltage of 400 V, so that the two groups of charging modules respectively output the voltage of 300 V and the voltage of 400 V, to ensure normal charging. In this case, because the power batteries are electrically isolated from each other, it is equivalent to that charging loops in which all the groups of charging modules charge the power batteries are independent of each other. Therefore, even if there is a voltage difference between two charging loops, phenomena such as a circulating current and a false alarm do not occur between the two charging loops, thereby ensuring normal charging. In addition, the charging connection apparatus sends the packet including the information indicating all the groups of direct current plugs to output the voltages of a same magnitude or different magnitudes. This helps improve flexibility of outputting the voltages by all the groups of direct current plugs of the charging pile.

In some embodiments, a plurality of power batteries that are electrically isolated from each other may be understood as a plurality of charging systems that are electrically isolated from each other. A plurality of power batteries that are not electrically isolated from each other may be understood as a battery system conductively connected together.

In some cases, a current output by the charging module may be greater than a maximum current allowed by the power transmission line. If the power battery is charged for a long time with a current greater than the maximum current allowed by the power transmission line, the power transmission line may be highly likely damaged. Therefore, in this case, a current protection module may be disposed on the power transmission line to implement overcurrent protection on the transmission line. In this application, an example in which the current protection module is a fuse is used for description.

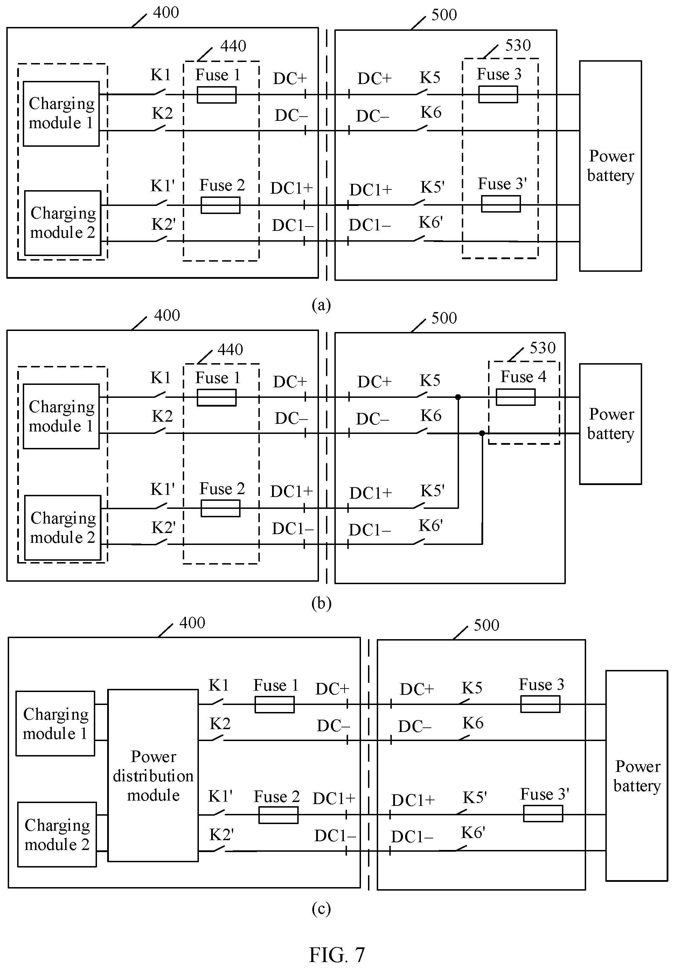

In an embodiment, as shown in FIG. 7, the charging connection apparatus further includes a plurality of fuses 530. One fuse is connected in series between the power battery and each group of direct current sockets, and each fuse is connected in series to one switch in corresponding charging loop switches and then connected between the power battery and the direct current sockets.

In an embodiment, the charging pile further includes a plurality of fuses 440. One fuse is connected between each group of charging modules and corresponding direct current plugs, and each fuse is connected in series to one switch in corresponding direct current power supply loop switches and then connected between the charging modules and the direct current plugs.

As shown in (a) in FIG. 7, one fuse is connected between each group of charging modules and corresponding direct current plugs in the charging pile. As shown in the figure, a fuse 1 is connected between a charging module 1 and direct current plugs DC+ and DC, and the fuse 1 is connected in series to a direct current power supply loop switch K1 and then connected between the charging module 1 and the direct current plugs. A fuse 2 is connected between a charging module 2 and direct current plugs DC1+ and DC1-, and the fuse 2 is connected in series to a direct current power supply loop switch K1' and then connected between the charging module 2 and the direct current plugs.

It should be noted that the fuse 1 may alternatively be connected in series to a direct current power supply loop switch K2 and then connected between the charging module 1 and the direct current plugs, and the fuse 2 may alternatively be connected in series to a direct current power supply loop switch K2' and then connected between the charging module 2 and the direct current plugs.

Still refer to (a) in FIG. 7. One fuse is connected between the power battery and each group of direct current sockets in an electric vehicle. As shown in the figure, a fuse 3 is connected between the power battery and direct current sockets DC+ and DC-, and the fuse 3 is connected in series to a charging loop switch K5 and then connected between the power battery and the direct current sockets. A fuse 3' is connected between the power battery and direct current sockets DC1+ and DC-1, and the fuse 3' is connected in series to a charging loop switch K5' and then connected between the power battery and the direct current sockets.

Similarly, the fuse 3 is connected in series to a charging loop switch K6 and then connected between the power battery and the direct current sockets, and the fuse 3' is connected in series to a charging loop switch K6 and then connected between the power battery and the direct current sockets.

Each fuse has a corresponding fuse-element rated current. When a current flowing through the fuse is greater than the fuse-element rated current of the fuse for a long time, if no corresponding action is taken in a timely manner, a fuse element of the fuse is melted due to a high temperature. Once the fuse element of the fuse is melted, the fuse needs to be replaced. Otherwise, direct current plugs connected to the fuse cannot charge the power battery through corresponding direct current ports. Therefore, a function of the fuse is as follows: When a current flowing through the fuse is greater than the fuse-element rated current of the fuse, the charging connection apparatus can perform a further action to avoid melting the fuse element of the fuse as much as possible, thereby avoiding replacing the fuse and ensuring normal charging.

A specific protection process is as follows. It is assumed that a charging current required by the power battery is 1600 A, a maximum current allowed by each group of power transmission lines is 800 A, and fuse-element rated currents of the fuse 1, the fuse 2, the fuse 3, and the fuse 3' are all 800 A. The packet sent by the charging connection apparatus to the charging pile includes indicating the charging module 1 to output a current of 800 A and the charging module 2 to output a current of 800 A. After the charging pile receives the packet, in a normal case, the charging module 1 outputs the current of 800 A, and the charging module 2 outputs the current of 800 A. Each fuse monitors that a current passing through the fuse meets a corresponding requirement, so that normal charging is performed.

In an abnormal case, the charging module 1 may output a current of 900 A, and the charging module 2 may output a current of 700 A. Because the current output by the charging module 1 is greater than the fuse-element rated current of the fuse 1, the charging connection apparatus can perform a further action to avoid melting the fuse element of the fuse 1 as much as possible, thereby avoiding replacing the fuse and ensuring normal charging. For details, refer to the following description.

(b) in FIG. 7 is a diagram of a possible charging system. Refer to (b) in FIG. 7. A quantity and positions of fuses in the charging pile are consistent with those of the fuses in (a) in FIG. 7. However, a quantity of fuses in the charging connection apparatus is different from that of the fuses in (a) in FIG. 7. Specifically, in (b) in FIG. 7, one fuse 4 is connected between a power battery and two groups of direct current sockets in the charging connection apparatus, and the fuse 4 is disposed between the power battery and nodes obtained by connecting two groups of charging loop switches in parallel. A protection process in this embodiment is similar to that in (a) in FIG. 7. Details are not described again.

A difference between (a) in FIG. 7 and (b) in FIG. 7 is that, in the electric vehicle shown in (a) in FIG. 7, one fuse is connected between the power battery and each direct current port. It is equivalent that each fuse monitors a current on a power transmission line on which the fuse is located. Therefore, type selection of each fuse is related only to a maximum current allowed by a power transmission line on which the fuse is located. For example, the fuse-element rated currents of the fuse 3 and the fuse 3' are 800 A. However, in an electric vehicle shown in (b) in FIG. 7, only one fuse is disposed between the power battery and a plurality of direct current ports, and the fuse is disposed between the power battery and nodes obtained by connecting a plurality of groups of charging loop switches in parallel. It is equivalent that the fuse monitors a sum of currents on a plurality of power transmission lines. Therefore, type selection of the fuse is related to a sum of maximum currents allowed by the plurality of power transmission lines. For example, a fuse-element rated current of the fuse 4 is 1600 A. Compared with the embodiment shown in (b) in FIG. 7, the embodiment shown in (a) in FIG. 7 can reduce specifications for type selection of the fuses in the electric vehicle, and further reduce costs.

As mentioned above, when a current flowing through a power transmission line on which a fuse is located is greater than a maximum current value allowed by the corresponding power transmission line, the charging pile 400 and the charging connection apparatus 500 can perform a further action to avoid melting a fuse element of the fuse as much as possible. For details, refer to the following description.

In an embodiment, for the charging connection apparatus, when a current flowing through a power transmission line on which a fuse is located is greater than a maximum current value allowed by the corresponding power transmission line, the charging connection apparatus 500 is configured to turn off a charging loop switch connected to the fuse.

For the charging pile, when a magnitude of a current flowing through a power transmission line on which the fuse is located is greater than a maximum current value allowed by the corresponding power transmission line, the charging pile 400 is configured to turn off a direct current power supply loop switch connected to the fuse.

Refer to (a) in FIG. 7. It is still assumed that the charging current required by the power battery is 1600 A, the maximum current allowed by each group of power transmission lines is 800 A, and the fuse-element rated currents of the fuse 1, the fuse 2, the fuse 3, and the fuse 3' are all 800 A. When the charging module 1 outputs the current of 900 A, the charging module 2 outputs the current of 700 A, and the current output by the charging module 1 is transmitted to the power battery through the fuse 1 and the fuse 3, the charging pile turns off the direct current power supply loop switches K1 and K2 connected to the fuse 1 because the current flowing through the fuse 1 is greater than the fuse-element rated current of the fuse 1, and the charging connection apparatus turns off the charging loop switches K5 and K6 connected to the fuse 3 because the current flowing through the fuse 3 is greater than the fuse-element rated current of the fuse 3, to avoid damage to the power transmission lines caused by excessively high currents of the power transmission lines on which the fuse 1 and the fuse 3 are located.

In an embodiment, the charging connection apparatus 500 is further configured to send a packet used to request to change a charging current to the charging pile.

Correspondingly, the charging pile 400 is further configured to adjust a magnitude of a current output by each group of charging modules corresponding to direct current power supply loop switches that are in an on state in the plurality of groups of direct current power supply loop switches.

In this embodiment of this application, when the charging pile and the charging connection apparatus turn off the fuse through which the current greater than the fuse-element rated current flows, to meet a charging requirement of the electric vehicle, the charging pile may adjust a magnitude of a current output by each group of charging modules corresponding to direct current power supply loop switches that are in an on state in the plurality of groups of direct current power supply loop switches. For example, as described above, because the current flowing through the fuse 1 is greater than the fuse-element rated current of the fuse 1, the charging pile turns off the direct current power supply loop switches K1 and K2 connected to the fuse 1, so that the charging module 1 stops charging the power battery. When the charging module 1 stops charging the power battery, a controller of the charging pile may adjust a magnitude of a current of the charging module 2. For example, the controller of the charging pile may control the charging module 2 to output a current of 800 A. The fuse 2 monitors that a current passing through the fuse 2 is equal to the fuse-element rated current 800 A of the fuse 2, and the fuse 3' monitors that a current passing through the fuse 3' is also equal to the fuse-element rated current 800 A of the fuse 3', meeting a corresponding requirement. In this case, the charging module 2 can charge the power battery through the direct current ports DC1+ and DC1-. In addition, because the charging pile adjusts the magnitude of the current output by the charging module 2, the current output by the charging module 2 is increased compared with the current output by the charging module 2 before adjustment, which is equivalent to increasing charging power. In this case, a charging speed can be increased, and user experience can be improved.

In an embodiment, for the charging connection apparatus, when a magnitude of a current flowing through a power transmission line on which a fuse is located is greater than a maximum current value allowed by the corresponding power transmission line, the charging connection apparatus 500 is configured to send, to the charging pile, a packet used to request to reduce a magnitude of a current output by direct current plugs connected to the direct current sockets connected to the fuse.

For the charging pile, when a magnitude of a current flowing through a power transmission line on which a fuse is located is greater than a maximum current value allowed by the corresponding power transmission line, the charging pile 400 is configured to reduce a magnitude of a current output by the group of charging modules connected to the fuse.

Refer to (a) in FIG. 7. It is still assumed that the charging current required by the power battery is 1600 A, the maximum current allowed by each group of power transmission lines is 800 A, and the fuse-element rated currents of the fuse 1, the fuse 2, the fuse 3, and the fuse 3' are all 800 A. When the charging module 1 outputs the current of 900 A, and the charging module 2 outputs the current of 700 A, the fuse 1 monitors that the current passing through the fuse 1 is greater than the fuse-element rated current 800 A of the fuse 1. The fuse 1 may send an abnormal signal. After receiving the abnormal signal, the controller of the charging pile may reduce a magnitude of the current output by the charging module 1. For example, the charging pile may reduce the magnitude of the current output by the charging module 1 to 800 A, to meet a safety requirement of the power transmission line on which the fuse 1 is located. In addition, the charging pile may further adjust the charging module 2 to output the current of 800 A. Because a current flowing through the fuse 2 is equal to the fuse-element rated current of the fuse 2, a fuse element of the fuse 2 does not melt, meeting a corresponding requirement. In addition, after adjustment, both the charging module 1 and the charging module 2 output the current of 800 A, to meet a power requirement of the electric vehicle.

In an abnormal case, a current output by a charging module may be greater than a fuse-element rated current of a fuse connected to the charging module in series. If corresponding direct current power supply loop switches or charging loop switches are not turned off in a timely manner, a fuse element of the fuse is melted. In this case, the charging module cannot charge the power battery through corresponding direct current ports.

For example, as described above, the charging module 1 outputs the current of 900 A, the charging module 2 outputs the current of 700 A, the fuse 1 monitors that the current passing through the fuse 1 is greater than the fuse-element rated current 800 A of the fuse 1, and the controller of the charging pile does not turn off the direct current power supply loop switches K1 and K2 in a timely manner. As a result, the fuse element of the fuse 1 is melted. Therefore, the charging module 1 cannot charge the power battery through the direct current ports DC+ and DC-. In this case, a power distribution module in the charging pile may enable the charging module 1 to charge the power battery through the direct current ports DC1+ and DC1-, as shown in (c) in FIG. 7.

The power distribution module includes two input ends and two output ends. In a normal case, the charging module 1 charges the power battery through the direct current power supply ports DC+ and DC-, and the charging module 2 charges the power battery through the direct current power supply ports DC1+ and DC1-. In an abnormal case, for example, the fuse element of the fuse 1 is melted, and an on/off state of a switch in the power distribution module is controlled, so that the charging module 1 can charge the power battery through the direct current power supply ports DC1+ and DC1-. Alternatively, the fuse element of the fuse 2 is melted, and an on/off state of a switch in the power distribution module is controlled, so that the charging module 2 can charge the power battery through the direct current power supply ports DC+ and DC-.

For example, the fuse element of the fuse 1 is melted. In some possible cases, the charging module 2 outputs only a current of 400 A, and charges the power battery with the current of 400 A. In this case, a charging speed is low, and user experience is reduced. If fuse-element rated currents of the fuse 2 and the fuse 3' are both 800 A, the charging pile controls the on/off state of the switch in the power distribution module, so that the charging module 1 and the charging module 2 can be connected in parallel. In this case, both the charging module 1 and the charging module 2 can charge the power battery through the direct current ports DC1+ and DC1-. When the charging module 1 also outputs a current of 400 A, the two groups of charging modules: the charging module 1 and the charging module 2 can charge the power battery with the current of 800 A. This can meet a current requirement of a power transmission line and a corresponding fuse, and can further increase charging power and a charging speed, thereby improving user experience.

It should be noted that, in this embodiment of this application, there is no conductive electrical connection between an output end of each group of charging modules and a fuse of the vehicle. In other words, when all switches in the power distribution module are turned off, that is, when the power distribution module does not perform a power scheduling function, the charging module 1 can charge the power battery only through the direct current ports DC+ and DC-, and the charging module 2 can charge the power battery only through the direct current ports DC1+ and DC1-. This is because if there is a conductive electrical connection between the output end of each group of charging modules and a front end of a vehicle-end fuse, the currents output by the charging module 1 and the charging module 2 can charge the power battery through both the direct current ports DC+ and DC- and the direct current ports DC1+ and DC1-. Such a charging manner is consistent with the charging manner in the embodiment shown in FIG. 5. When a charging interface is short-circuited, the charging pile cannot implement effective protection, still causing damage to the charging pile and a safety problem, and even endangering personal safety in a severe case. Therefore, in this embodiment of this application, there is no conductive electrical connection between the output end of each group of charging modules and the fuse of the vehicle.

As mentioned above, the electric vehicle may be connected to the 2015/2015+/supercharging charging connector, or may be connected to the MCS connector. When the electric vehicle is connected to a different charging connector, the electric vehicle sends a different packet for adhesion of different charging loop switches.

In an embodiment, the charging connection apparatus 500 is configured to: when the charging connection apparatus is connected to a first charging connector, if a charging loop switch connected to a part of direct current sockets in the plurality of groups of direct current sockets is adhered, send, to the charging pile, a packet used to request to stop direct current plugs connected to the part of direct current sockets from outputting a direct current.

In this embodiment of this application, the first charging connector is an MCS charging connector. Refer to FIG. 6. When the electric vehicle is connected to the MCS charging connector, the charging connector charges the power battery through two groups of direct current ports. To be specific, the charging module 1 charges the power battery through the direct current ports DC+ and DC-, and the charging module 2 charges the power battery through the direct current ports DC1+ and DC1-. If a charging loop switch connected to a part of direct current sockets in the plurality of groups of direct current sockets is adhered, a packet used to request to stop direct current plugs connected to the part of direct current sockets from outputting a direct current is sent to the charging pile.

For example, when the charging loop switches K5' and K6' connected to the direct current sockets corresponding to the direct current ports DC1+ and DC1- are adhered, the charging connection apparatus may send, to the charging pile, a packet used to request to stop the direct current plugs DC1+ and DC1- from outputting a direct current. After the charging pile receives the packet, the charging module 2 stops outputting a direct current. If the charging module 2 continues to output the direct current, when the controller of the vehicle turns off the charging loop switches K5' and K6', the charging loop switches K5' and K6' cannot be completely turned off. As a result, the direct current ports DC1+ and DC1- are energized, and a user may accidentally touch the direct current ports DC1+ and DC1-, causing a personal hazard. For the charging module 1, the charging module 1 may still output a direct current, and the direct current charges the power battery through the direct current ports DC+ and DC-.

For the charging pile, when the first charging connector is connected to the direct current sockets, if a direct current power supply loop switch connected to a part of direct current plugs in the plurality of groups of direct current plugs is adhered, one group of charging modules connected to each group of direct current plugs in the part of direct current plugs is controlled to stop outputting a direct current.

For example, when the direct current power supply loop switches K1' and K2' connected to the direct current plugs corresponding to the direct current ports DC1+ and DC1- are adhered, the charging pile controls the charging module 2 to stop outputting a direct current. If the charging module 2 continues to output the direct current, when the controller of the charging pile turns off the direct current power supply loop switches K1' and K2', the direct current power supply loop switches K1' and K2' cannot be completely turned off. As a result, the direct current ports DC1+ and DC1- are energized, and a user may accidentally touch the direct current ports DC1+ and DC1-, causing a personal hazard. For the charging module 1, the charging module 1 may still output a direct current, and the direct current charges the power battery through the direct current ports DC+ and DC-.

In an embodiment, the charging connection apparatus 500 is configured to: when the charging connection apparatus is connected to a second charging connector, if a charging loop switch connected to one group of direct current sockets connected to the second charging connector is adhered, send, to the charging pile, a packet used to request to stop direct current plugs connected to the group of direct current sockets from outputting a direct current.

In this embodiment of this application, the second charging connector is any one of a 2015 charging connector, a 2015+ charging connector, and a supercharging charging connector. When the electric vehicle is connected to the 2015/2015+/supercharging charging connector, the charging connector charges the power battery through one group of direct current ports. In other words, the charging module 1 charges the power battery through the direct current ports DC+ and DC-. If a charging loop switch connected to one group of direct current sockets is adhered, a packet used to request to stop direct current plugs connected to the group of direct current sockets from outputting a direct current is sent to the charging pile.

For example, when the charging loop switches K5 and K6 connected to the direct current sockets corresponding to the direct current ports DC+ and DC- are adhered, the charging connection apparatus may send, to the charging pile, a packet used to request to stop the direct current plugs DC+ and DC- from outputting a direct current. After the charging pile receives the packet, the charging module 1 stops outputting a direct current. In this case, the charging pile stops charging the power battery. If the charging pile continues to output the direct current, when the controller of the vehicle turns off the charging loop switches K5 and K6, the charging loop switches K5 and K6 cannot be completely turned off. As a result, the direct current ports DC+ and DC- are energized, and a user may accidentally touch the direct current ports DC+ and DC-, causing a personal hazard.

For the charging pile, when the second charging connector is connected to the direct current sockets, if a direct current power supply loop switch connected to one group of direct current plugs is adhered, one group of charging modules connected to the group of direct current plugs is controlled to stop outputting a direct current.

For example, when the direct current power supply loop switches K1 and K2 connected to the direct current plugs corresponding to the direct current ports DC+ and DC- are adhered, the charging pile controls the charging module 1 to stop outputting a direct current. In this case, the charging pile stops charging the power battery. If the charging pile continues to output the direct current, when the controller of the charging pile turns off the direct current power supply loop switches K1 and K2, the direct current power supply loop switches K1 and K2 cannot be completely turned off. As a result, the direct current ports DC+ and DC- are energized, and a user may accidentally touch the direct current ports DC+ and DC-, causing a personal hazard.

The following specifically describes basic charging safety requirements in different charging scenarios. Table 1 shows basic charging safety requirements in different charging scenarios.

**Table 1**

| Inserted scenario | MCS charging connector | 2015/2015+/Supercharging charging connector | No charging connector is inserted |
|---|---|---|---|
| An upper end of an interface is adhered | Only a lower path is for charging | Charging disabled | Electric shock prevention measure |
| A lower end of the interface is adhered | Only an upper path is for charging | Charging disabled | Electric shock prevention measure |
| Both the upper end and the lower end of the interface are adhered | Charging disabled | Charging disabled | Electric shock prevention measure |

Refer to Table 1. The MCS charging connector includes two groups of direct current plugs, and the 2015/2015+/supercharging charging connector includes one group of direct current plugs.

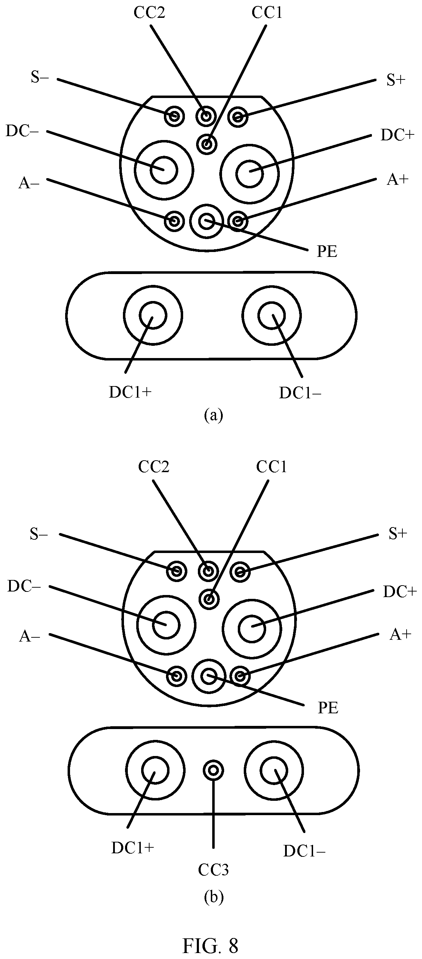

FIG. 8 is a diagram of an interface of an MCS charging connector. Refer to (a) in FIG. 8. DC+, DC-, DC1+, and DC1- are direct current plugs, PE is a ground plug, S+ and S- are charging communication plugs, CC1 and CC2 are charging connection confirm plugs, and A+ and A- are low-voltage auxiliary power supply plugs.

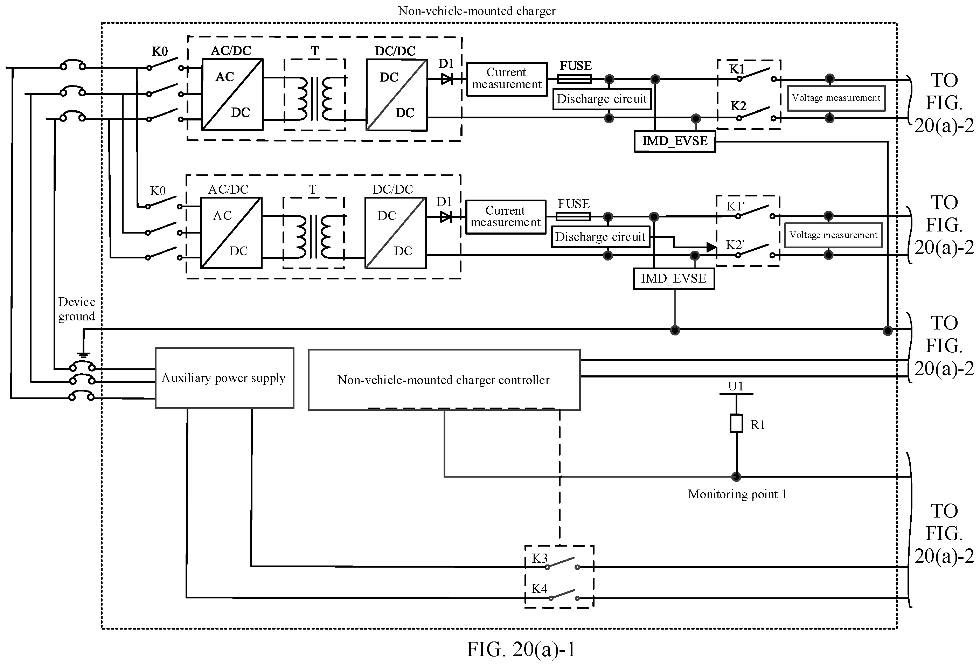

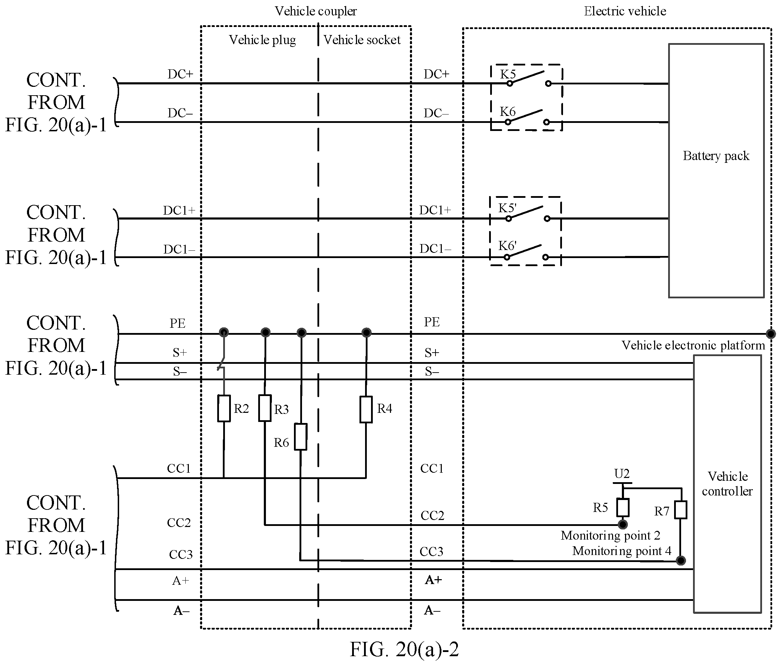

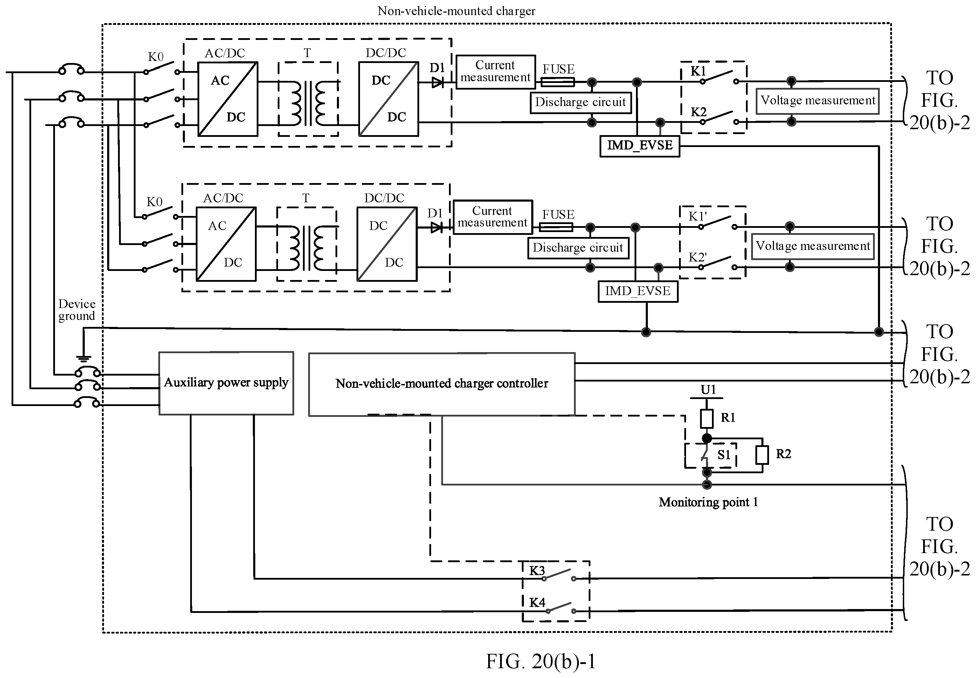

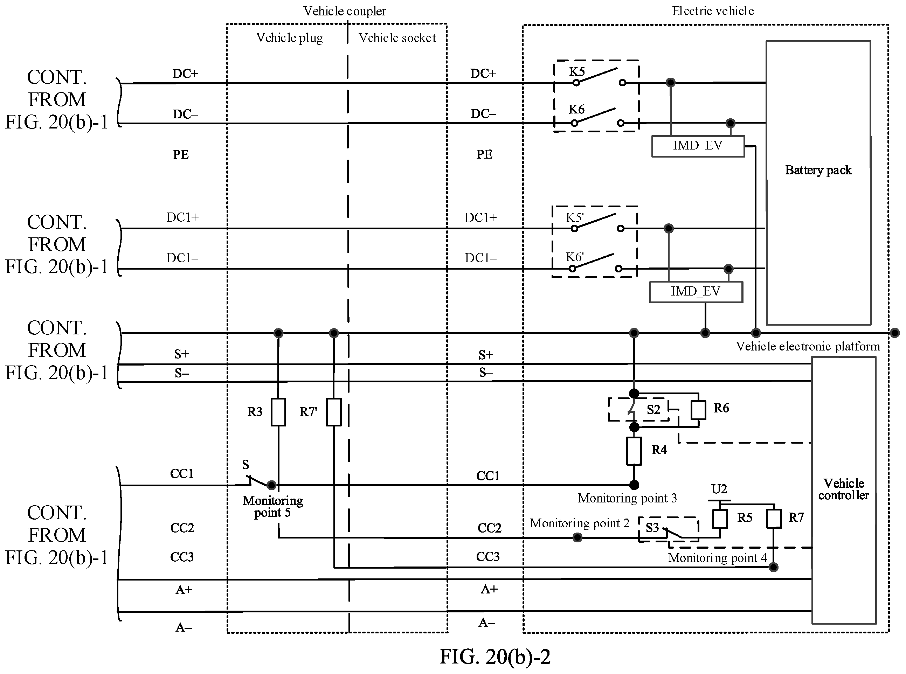

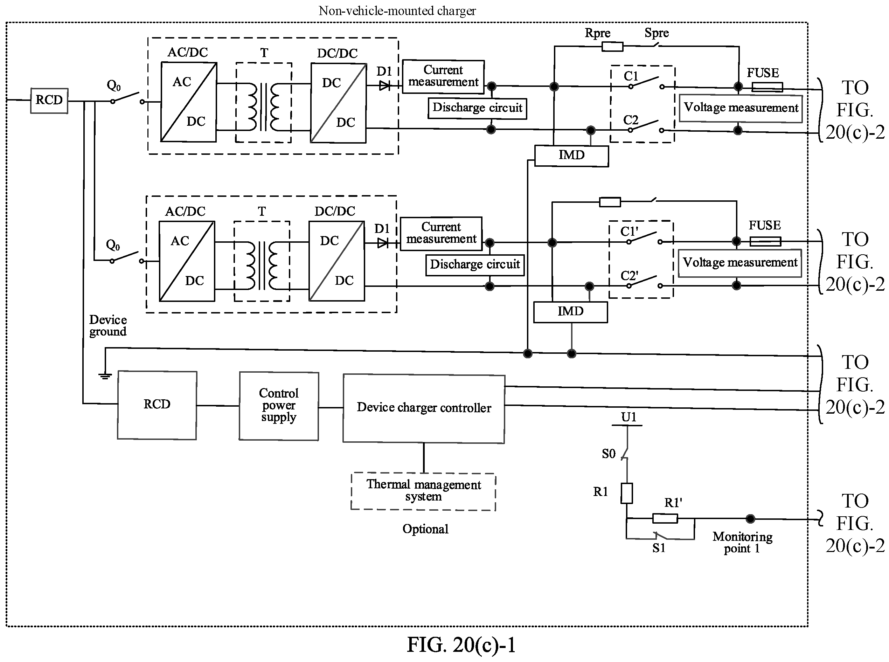

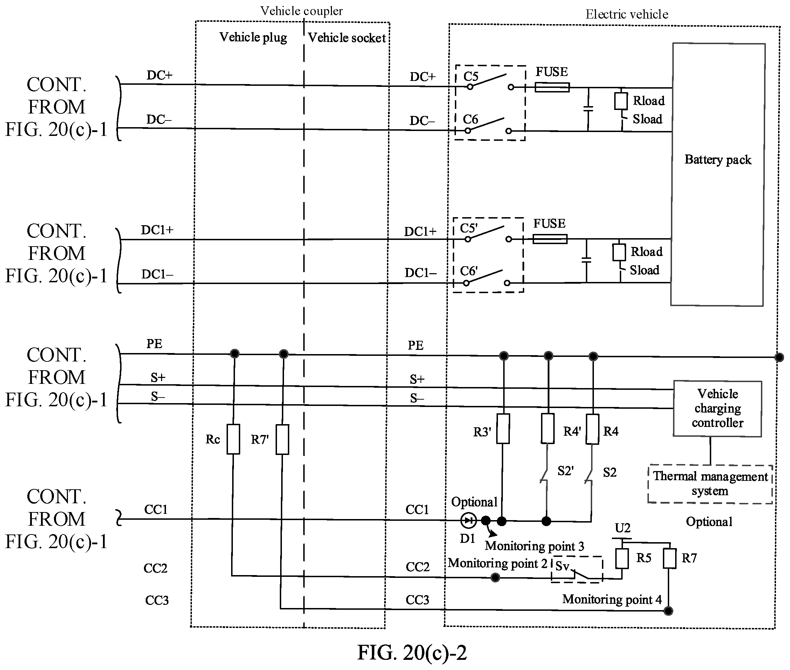

Refer to (b) in FIG. 8. Compared with (a) in FIG. 8, a connection confirm plug CC3 is added. The CC3 is mainly used by the electric vehicle to determine whether a connected charging connector is an MCS charging connector or a 2015/2015+/supercharging charging connector. For a specific determining process, refer to related content in FIG. 20(a)-1 to FIG. 20(c)-2 below. Other plugs are consistent with those in (a) in FIG. 8. Details are not described again.

In this embodiment of this application, an upper end of the interface is the direct current ports DC+ and DC- shown in (a) in FIG. 8 and (b) in FIG. 8, and a lower end of the interface is the direct current ports DC1+ and DC1- shown in (a) in FIG. 8 and (b) in FIG. 8.

Specifically, when the charging connector is not connected to the electric vehicle, an electric shock prevention measure may be taken. For example, refer to FIG. 6. The controller of the vehicle may turn off the charging loop switches K5 and K6 and charging loop switches K5' and K6', to prevent a personal hazard caused by an accidental electric shock of a user when the direct current ports DC+ and DC- and the direct current ports DC1+ and DC1- are energized. Particularly, when the charging loop switches K5 and K6 or the charging loop switches K5' and K6' are adhered, the electric vehicle needs to take measures to prevent the direct current ports DC+ and DC- or the direct current ports DC1+ and DC1- from being energized, or alarm to remind (for example, remind through a sound or remind through light flashing) a user not to contact the direct current ports DC+ and DC- or the direct current ports DC1+ and DC1-, to prevent the user from an electric shock.

When the electric vehicle is connected to the 2015/2015+/supercharging charging connector, that is, the charging pile charges the power battery through the direct current ports DC+ and DC-. If the upper end of the interface is adhered, it may be understood as that the charging loop switches K5 and K6 are adhered. In this case, charging the power battery needs to be disabled. This is because the charging loop switches K5 and K6 are adhered, when the controller of the vehicle turns off the charging loop switches K5 and K6, the charging loop switches K5 and K6 cannot be completely turned off. As a result, the direct current ports DC+ and DC- are energized, and a user may accidentally touch the direct current ports DC+ and DC-, causing a personal hazard. If the lower end of the interface is adhered, it may be understood as that the charging loop switches K5' and K6' are adhered. In this case, charging the power battery also needs to be disabled. This is because the charging loop switches K5' and K6' are adhered, when the charging loop switches K5' and K6' need to be turned off, the charging loop switches K5' and K6' cannot be completely turned off. As a result, the direct current ports DC1+ and DC1- are energized, and a user may accidentally touch the direct current ports DC1+ and DC1-, causing a personal hazard. If both the upper end and the lower end of the interface are adhered, for a similar reason, charging the power battery through the two groups of direct current ports needs to be disabled.

If the electric vehicle is connected to the MCS charging connector, that is, the charging pile charges the power battery through the direct current ports DC+ and DC- and the direct current ports DC1+ and DC1-. If the upper end of the interface is adhered, it may be understood as that the charging loop switches K5 and K6 are adhered, and charging needs to be performed through the lower path, that is, the charging pile charges the power battery only through the direct current ports DC1+ and DC1-. This is because although the charging loop switches K5 and K6 are adhered, the charging loop switches K5' and K6' and the charging loop switches K5 and K6 are independent of each other. In this case, the controller of the vehicle can still turn on the charging loop switches K5' and K6', and the charging pile can still charge the power battery through the direct current ports DC1+ and DC1-. Similarly, if the lower end of the interface is adhered, it may be understood as that the charging loop switches K5' and K6' are adhered, and charging needs to be performed through the upper path, that is, the charging pile charges the power battery only through the direct current ports DC+ and DC-. This is because although the charging loop switches K5' and K6' are adhered, the charging loop switches K5 and K6 and the charging loop switches K5' and K6' are independent of each other. In this case, the controller of the vehicle can still turn on the charging loop switches K5 and K6, and the charging pile can still charge the power battery through the direct current ports DC+ and DC-. If both the upper end and the lower end of the interface are adhered, both the charging loop switches K5 and K6 and the charging loop switches K5' and K6' are adhered. For a similar reason, charging the power battery needs to be disabled.

It should be noted that, in a process in which the charging pile charges the power battery through the direct current ports DC+ and DC- and the direct current ports DC1+ and DC1-, that is, in a process in which the charging pile charges the power battery through two charging loops, if a fault occurs in one of the loops, a contactor on the circuit needs to be turned off, but the charging pile is not affected to continue charging the power battery through the other loop.

For example, in the process in which the charging pile charges the power battery through the direct current ports DC+ and DC- and the direct current ports DC1+ and DC1-, if a fault occurs in the loop in which the charging module 1 charges the power battery, a switch on the loop needs to be turned off. To be specific, the controller of the charging pile turns off the direct current power supply loop switches K1 and K2, and the controller of the vehicle turns off the charging loop switches K5 and K6, so that the charging module 1 stops charging the power battery. However, the charging module 2 can still charge the power battery through the direct current ports DC1+ and DC1-, to ensure continuous charging of the power battery.

Similarly, in the process in which the charging pile charges the power battery through the direct current ports DC+ and DC- and the direct current ports DC1+ and DC1-, if a fault occurs in the loop in which the charging module 2 charges the power battery, a switch on the loop needs to be turned off. To be specific, the controller of the charging pile turns off the direct current power supply loop switches K1' and K2', and the controller of the vehicle turns off the charging loop switches K5' and K6', so that the charging module 2 stops charging the power battery. However, the charging module 1 can still charge the power battery through the direct current ports DC+ and DC-, to ensure continuous charging of the power battery.

In addition, insulation monitoring on the charging pile and the electric vehicle is an important link to ensure charging safety of the electric vehicle. By performing insulation monitoring on the charging pile and the electric vehicle, it can be determined whether the charging pile and the electric vehicle have safety hazards such as electric leakage, to ensure electrical safety of a user and a surrounding environment.

Generally, before the charging pile charges the power battery, the charging pile and the electric vehicle each perform insulation pre-monitoring. To be specific, after a charging connector is inserted into a vehicle socket, the charging pile turns on the direct current power supply loop switches K1 and K2. An insulation monitoring device of the charging pile performs insulation pre-monitoring on an electrical loop between the output end of the charging module and the charging loop switches K5 and K6. An insulation monitoring device in the electric vehicle performs insulation pre-monitoring on an electrical loop between the power battery and the charging loop switches K5 and K6. The charging pile charges the power battery only when it is determined that there is no electric leakage in the two electrical loops. In a process in which the charging pile charges the power battery, the insulation monitoring device in the electric vehicle can perform insulation monitoring on an entire charging loop from the output end of the charging module to the power battery, to monitor whether there is electric leakage in a process of charging the power battery.

In an embodiment, the charging pile further includes a plurality of insulation monitoring devices. The plurality of insulation monitoring devices one-to-one correspond to the plurality of groups of charging modules.

Each insulation monitoring device is configured to: when the direct current plugs are connected to the direct current sockets, perform insulation monitoring on a circuit between an output end of a corresponding group of charging modules and corresponding direct current power supply loop switches.

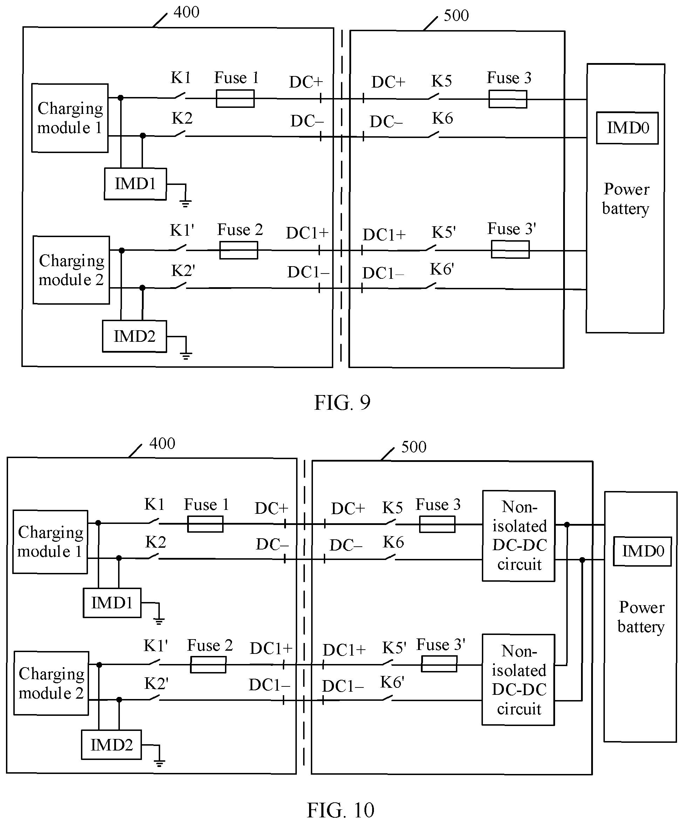

As shown in FIG. 9 to FIG. 11, a plurality of pile-end insulation monitoring devices (insulation monitoring device, IMD) are disposed in the charging pile, and each pile-end IMD may independently implement insulation monitoring on an electrical loop between an output end of a corresponding charging module and a direct current power supply loop switch. Two input ends of each pile-end IMD are connected to two power transmission lines, and an output end of each pile-end IMD is connected to a device ground. Table 2 shows insulation monitoring in different charging scenarios.

**Table 2**

| | MCS charging connector | 2015/2015+/Supercharging charging connector |
|---|---|---|
| Charging through both an upper path and a lower path | Monitoring on both the upper path and the lower path | Monitoring on the upper path |
| Charging through the lower path only | Monitoring on the lower path | Monitoring on the upper path |
| Charging through the upper path only | Monitoring on the upper path | Monitoring on the upper path |

Refer to Table 2. The MCS charging connector may be understood as charging the power battery through two direct current ports (namely, direct current ports DC+ and DC- and direct current ports DC1+ and DC1-), and the 2015/2015+/supercharging charging connector may be understood as charging the power battery through the direct current ports DC+ and DC-. The following describes a specific process of performing insulation monitoring by the insulation monitoring device in different cases.

Case 1: The vehicle interface is connected to the MCS charging connector.

When charging through both the upper path and the lower path is performed, that is, when both the charging module 1 and the charging module 2 charge the power battery, after the charging plugs are inserted into the charging sockets, the direct current power supply loop switches K1 and K2, and K1' and K2' are turned on, an IMD1 performs insulation monitoring on a circuit between an output end of the charging module 1 and the charging loop switches K5 and K6, and an IMD2 performs insulation monitoring on a circuit between an output end of the charging module 2 and the charging loop switches K5' and K6'. After the insulation monitoring is completed, the IMD1 and the IMD2 are separated from the circuit, and are switched into a discharge loop to discharge a charging output voltage.

When charging through the lower path only is performed, that is, the charging module 2 charges the power battery through the direct current ports DC1+ and DC1-, after the charging plugs are inserted into the charging sockets, the direct current power supply loop switches K1' and K2' are turned on, an IMD2 performs insulation monitoring on a circuit between an output end of the charging module 2 and the charging loop switches K5' and K6'. After the insulation monitoring is completed, the IMD2 is separated from the circuit, and is switched into a discharge loop to discharge a charging output voltage.

When charging through the upper path only is performed, that is, the charging module 1 charges the power battery through the direct current ports DC+ and DC-, after the charging plugs are inserted into the charging sockets, the direct current power supply loop switches K1 and K2 are turned on, an IMD1 performs insulation monitoring on a loop between an output end of the charging module 1 and the charging loop switches K5 and K6. After the insulation monitoring is completed, the IMD1 is separated from the circuit, and is switched into a discharge loop to discharge a charging output voltage.

Case 2: The vehicle interface is connected to the 2015/2015+/supercharging charging connector.

In this case, refer to related content of charging through the upper path only. Details are not described again.

In conclusion, if the vehicle interface is connected to the MCS charging connector, when the charging module 1 charges the power battery through the direct current ports DC+ and DC-, the IMD1 can perform insulation monitoring on the circuit between the output end of the charging module 1 and the charging loop switches K5 and K6; when the charging module 2 charges the power battery through the direct current ports DC1+ and DC1-, the IMD2 can perform insulation monitoring on the circuit between the output end of the charging module 2 and the charging loop switches K5' and K6'; and when both the charging module 1 and the charging module 2 charge the power battery, the IMD1 and the IMD2 can perform insulation monitoring on the circuits between the output end of the corresponding charging modules and the charging loop switches K5 and K6. If the vehicle interface is connected to the 2015/2015+/supercharging charging connector, when the charging module 1 charges the power battery through the direct current ports DC+ and DC-, the IMD1 can perform insulation monitoring on the circuit between the output end of the charging module 1 and the charging loop switches K5 and K6.

It should be noted that, when the vehicle interface is connected to the MCS charging connector, when the charging pile normally charges the power battery through the upper path and the lower path, that is, the charging pile normally charges the power battery through the direct current ports DC+ and DC- and the direct current ports DC1+ and DC1-, the controller of the charging pile needs to perform insulation monitoring through the upper path and the lower path, that is, the IMD1 performs insulation monitoring on the circuit between the output end of the charging module 1 and the charging loop switches K5 and K6, and the IMD2 performs insulation monitoring on the circuit between the output end of the charging module 2 and the charging loop switches K5' and K6'.

If one of the upper path and the lower path is abnormal, the controller of the charging pile needs to control to stop charging the power battery through this path. In this case, insulation monitoring does not need to be performed on this path. However, the charging pile may still charge the power battery through the other path. In this case, insulation monitoring needs to be performed on the other path. For example, if the loop in which the charging module 1 charges the power battery through the direct current ports DC+ and DC- is abnormal, the controller of the charging pile needs to turn off the direct current power supply loop switches K1 and K2. Because the charging module 1 stops charging the power battery, the charging pile does not need to perform insulation monitoring on the circuit between the output end of the charging module 1 and the charging loop switches K5 and K6. However, the charging module 2 may charge the power battery through the direct current ports DC1+ and DC1-. In this case, the controller of the charging pile needs to perform insulation monitoring on the circuit between the output end of the charging module 2 and the charging loop switches K5' and K6', that is, the controller of the charging pile controls the IMD2 to perform insulation monitoring on the circuit between the output end of the charging module 2 and the charging loop switches K5' and K6'.

It should be further noted that, when the charging pile can normally charge the power battery through the upper path and the lower path, and the controller of the charging pile performs insulation monitoring through the upper path and the lower path, insulation monitoring needs to be performed on the two paths at different moments, to avoid a conflict caused by simultaneous insulation monitoring on the upper path and the lower path.

In this embodiment of this application, because the plurality of insulation monitoring devices in the charging pile one-to-one correspond to the plurality of groups of charging modules, for a working condition in which any charging module charges the power battery, each insulation monitoring device can implement insulation monitoring on a circuit between an output end of a corresponding charging module and corresponding charging loop switches of the electric vehicle, so that whether each group of charging modules and related parts in the charging pile have safety hazards such as electric leakage can be determined, thereby ensuring electrical safety of a user and a surrounding environment.

Insulation monitoring on the electric vehicle is related to a circuit disposed in the electric vehicle. In some scenarios, an isolated DC-DC circuit is disposed between the power battery and the charging sockets. In an embodiment, the charging connection apparatus 500 further includes at least one isolated DC-DC circuit and at least one insulation monitoring device. The at least one isolated DC-DC circuit one-to-one corresponds to the at least one insulation monitoring device, and each isolated DC-DC circuit is connected in series between the charging loop switch and the power battery.

Each insulation monitoring device is configured to: in a charging process of the electric vehicle, perform insulation monitoring on a circuit between a corresponding isolated DC-DC circuit and an output end of a charging module connected to corresponding direct current plugs.

In this embodiment of this application, the charging connection apparatus 500 further includes the at least one isolated DC-DC circuit and the at least one insulation monitoring device. The following describes specific processes of performing insulation monitoring when the charging connection apparatus 500 includes one isolated DC-DC circuit and a plurality of isolated DC-DC circuits in cases.

Case 1: One isolated DC-DC circuit is connected in series between the power battery and each group of charging loop switches.

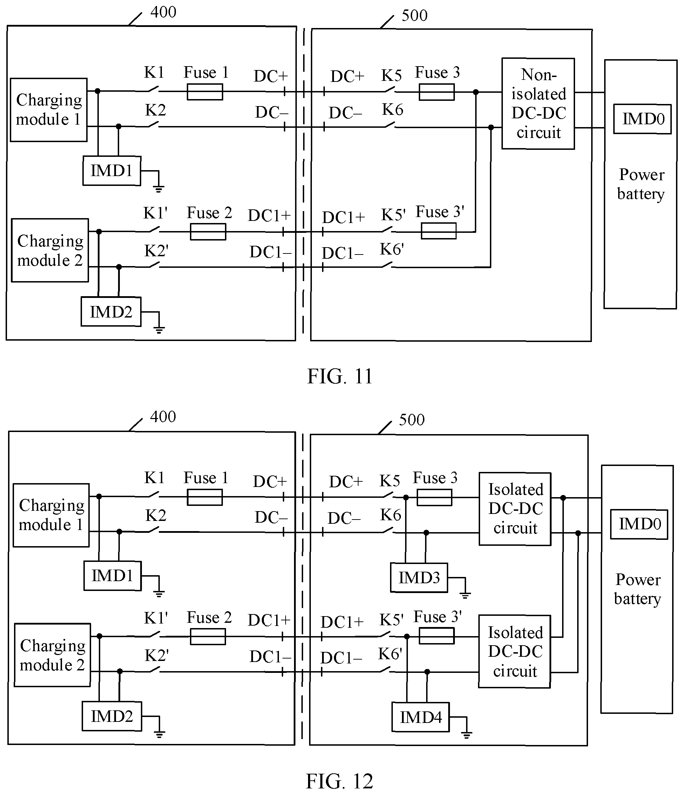

Refer to FIG. 12. It can be learned that one isolated DC-DC circuit is connected in series between the power battery and the charging loop switches K5 and K6, and one isolated DC-DC circuit is connected in series between the power battery and the charging loop switches K5' and K6'.

One isolated DC-DC circuit is connected in series between the power battery and each group of charging loop switches, which is equivalent to that a circuit between the power battery and the isolated DC-DC circuit is electrically isolated from a circuit between the isolated DC-DC circuit and the direct current sockets. Therefore, in a process in which the charging module charges the power battery, the IMD0 in the electric vehicle can perform insulation monitoring only on the circuit between the power battery and the isolated DC-DC circuit. In this case, an IMD dedicated to performing insulation monitoring on a circuit between an output end of the charging module and the isolated DC-DC circuit needs to be newly added, to determine whether the monitored circuit has safety hazards such as electric leakage, thereby ensuring electrical safety of a user and a surrounding environment.

For example, an IMD3 and an IMD4 are newly added in FIG. 12. The IMD3 can perform insulation monitoring on a circuit between an output end of the charging module 1 and the isolated DC-DC circuit in a power battery charging process, and the IMD4 can perform insulation monitoring on a circuit between an output end of the charging module 2 and the isolated DC-DC circuit in a power battery charging process.

In some possible embodiments, one isolated DC-DC circuit is connected in series between the power battery and nodes obtained by connecting two groups of charging loop switches in parallel, which is equivalent to that one isolated DC-DC circuit is connected in series between the power battery and each group of charging loop switches. In this case, an IMD dedicated to performing insulation monitoring on a circuit between an output end of the charging module and the isolated DC-DC circuit still needs to be newly added.

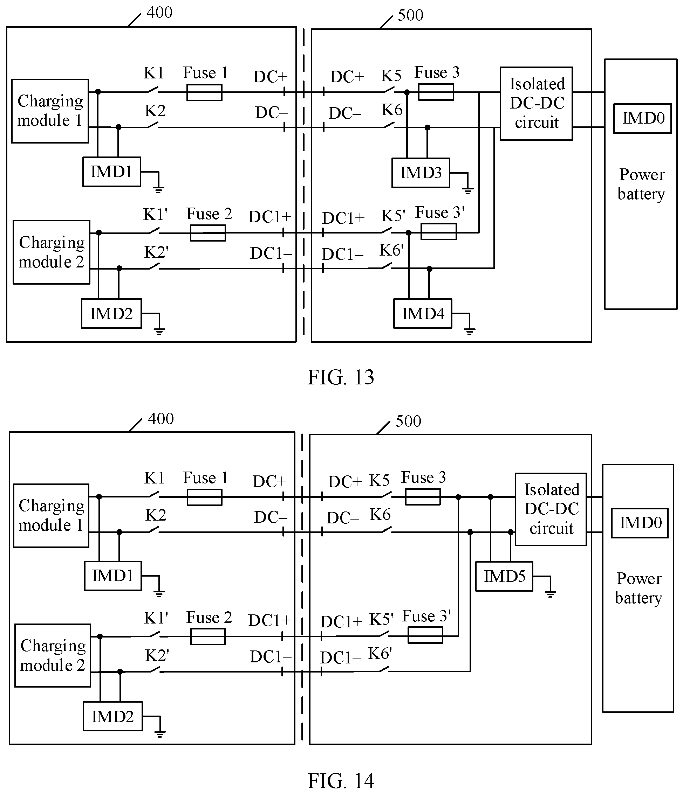

For example, an IMD3 and an IMD4 are newly added in FIG. 13. Functions of the IMD3 and the IMD4 are similar to those in FIG. 12.

For another example, an IMD5 is newly added in FIG. 14. The IMD5 can perform insulation monitoring on two circuits. The two circuits include a circuit between an output end of the charging module 1 and the isolated DC-DC circuit and a circuit between an output end of the charging module 2 and the isolated DC-DC circuit.

Case 2: One isolated DC-DC circuit is connected in series between the power battery and one group of charging loop switches.

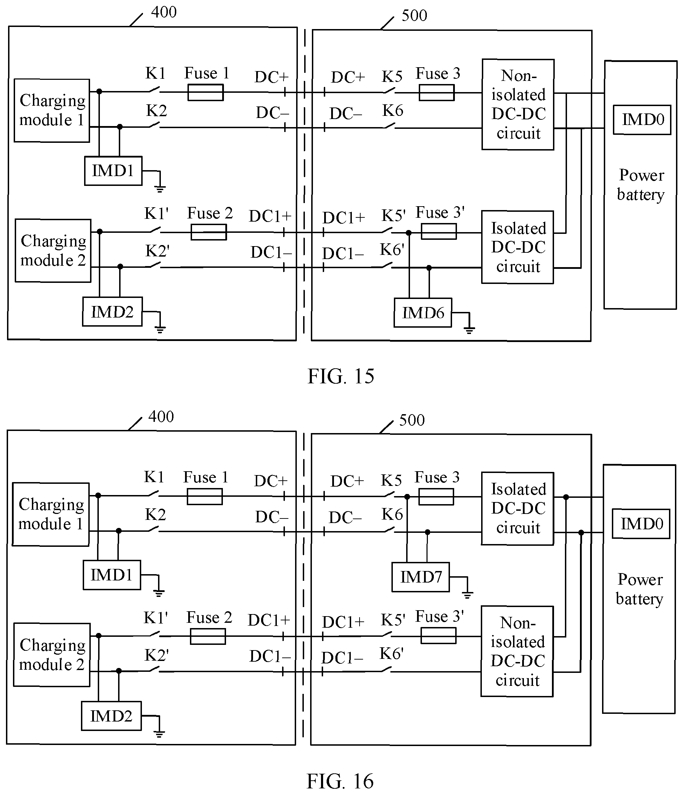

As shown in FIG. 15 and FIG. 16, one isolated DC-DC circuit is connected in series between the power battery and one group of charging loop switches, and one non-isolated DC-DC circuit is connected in series between the power battery and the other group of charging loops.

Refer to FIG. 15. In the figure, the non-isolated DC-DC circuit is connected in series between the power battery and the charging loop switches K5 and K6, and the isolated DC-DC circuit is connected in series between the power battery and the charging loop switches K5' and K6'. Refer to FIG. 16. In the figure, the isolated DC-DC circuit is connected in series between the power battery and the charging loop switches K5 and K6, and the non-isolated DC-DC circuit is connected in series between the power battery and the charging loop switches K5' and K6'.

Because the non-isolated DC-DC circuit and the isolated DC-DC circuit are disposed between the power battery and the charging loop switches, for a circuit in which the non-isolated DC-DC circuit is disposed, no new IMD needs to be added; and for a charging circuit in which the isolated DC-DC circuit is disposed, a new IMD needs to be added.

For example, as shown in FIG. 15, because the non-isolated DC-DC circuit is connected in series between the power battery and the charging loop switches K5 and K6, based on analysis similar to the foregoing analysis, no IMD dedicated to performing insulation monitoring on a circuit between the output end of the charging module and the non-isolated DC-DC circuit needs to be newly added to the charging circuit. In a process of charging the power battery, the IMD in the power battery can perform insulation monitoring on the circuit between the output end of the charging module and the power battery. Because the isolated DC-DC circuit is connected in series between the power battery and charging loop switches K5' and K6', based on analysis similar to the foregoing analysis, an IMD needs to be newly added to the charging loop, for example, an IMD6 shown in the figure. In a process of charging the power battery, the IMD6 is dedicated to performing insulation monitoring on a circuit between an output end of the charging module 2 and the isolated DC-DC circuit, and the IMD0 performs insulation monitoring on a circuit between the isolated DC-DC circuit and the power battery.

For another example, as shown in FIG. 16, because the isolated DC-DC circuit is connected in series between the power battery and charging loop switches K5 and K6, based on analysis similar to the foregoing analysis, an IMD needs to be newly added to the charging loop, for example, an IMD7 shown in the figure. In a process of charging the power battery, the IMD7 is dedicated to performing insulation monitoring on a circuit between an output end of the charging module 1 and the isolated DC-DC circuit, and the IMD0 performs insulation monitoring on a circuit between the isolated DC-DC circuit and the power battery. Because the non-isolated DC-DC circuit is connected in series between the power battery and the charging loop switches K5' and K6', based on analysis similar to the foregoing analysis, no IMD dedicated to performing insulation monitoring on a circuit between the output end of the charging module and the non-isolated DC-DC circuit needs to be newly added to the charging circuit. In a process of charging the power battery, the IMD in the power battery can perform insulation monitoring on the circuit between the output end of the charging module and the power battery.

Case 3: One non-isolated DC-DC circuit is connected in series between the power battery and each group of charging loop switches.

Refer to FIG. 10. In the figure, one non-isolated DC-DC circuit is connected in series between the power battery and each group of charging loop switches. Refer to FIG. 11. In the figure, only one non-isolated DC-DC circuit is disposed, and the non-isolated DC-DC circuit is disposed between the power battery and nodes obtained by connecting two groups of charging loop switches in parallel. This is equivalent to that one non-isolated DC-DC circuit is connected in series between the power battery and each group of charging loop switches.

The non-isolated DC-DC circuit is connected in series between the charging loop switch and the power battery, which is equivalent to that a circuit between the power battery and the non-isolated DC-DC circuit is not electrically isolated from a circuit between the non-isolated DC-DC circuit and the direct current sockets. Therefore, in a process in which the charging pile charges the power battery, the IMD0 in the electric vehicle can perform insulation monitoring on a circuit between the power battery and the output terminal of the charging module. In other words, based on this design manner, an IMD dedicated to performing insulation monitoring on the circuit between the output terminal of the charging module and the non-isolated DC-DC circuit needs to be newly added.

In some embodiments, in a process in which the charging pile charges the power battery, the pile-end insulation monitoring device in the charging pile may alternatively perform insulation monitoring on the entire charging loop from the output end of the charging module to the power battery, to determine whether there is electric leakage in a process of charging the power battery.

Specifically, the electric vehicle may send, to the charging pile in advance by using a packet, a status of the isolated DC-DC circuit or the non-isolated DC-DC circuit disposed in the electric vehicle. After receiving the packet, the charging pile can perform insulation monitoring based on the status that is of the isolated DC-DC circuit or the non-isolated DC-DC circuit of the electric vehicle and that is included in the packet.

FIG. 15 is used as an example. The electric vehicle sends a packet to the charging pile. The packet includes that the non-isolated DC-DC circuit is disposed between the power battery and the charging loop switches K5 and K6, and the isolated DC-DC circuit is disposed between the power battery and the charging loop switches K5' and K6'. After the charging pile receives the packet, in a process in which the charging pile charges the power battery, because the non-isolated DC-DC circuit is disposed between the power battery and the charging loop switches K5 and K6, the IMD1 can perform insulation monitoring on the entire charging loop from the output end of the charging module 1 to the power battery. Because the isolated DC-DC circuit is disposed between the power battery and the charging loop switches K5' and K6', the IMD2 can perform insulation monitoring on a circuit between the output end of the charging module 2 and the isolated DC-DC circuit, and a vehicle-end insulation monitoring device in the electric vehicle still needs to perform insulation monitoring on a circuit between the isolated DC-DC circuit and the power battery. In other words, the IMD0 in the power battery performs insulation monitoring on the circuit between the isolated DC-DC circuit and the power battery.

In an embodiment, only one IMD may be disposed in the charging pile or the electric vehicle. The IMD may be switched to any charging circuit, so that insulation monitoring may be performed on an entire charging loop from any charging module to the power battery, or insulation monitoring may be performed on a part of the circuit. The following uses an example in which the IMD performs insulation monitoring on the entire charging loop from the charging module to the power battery.

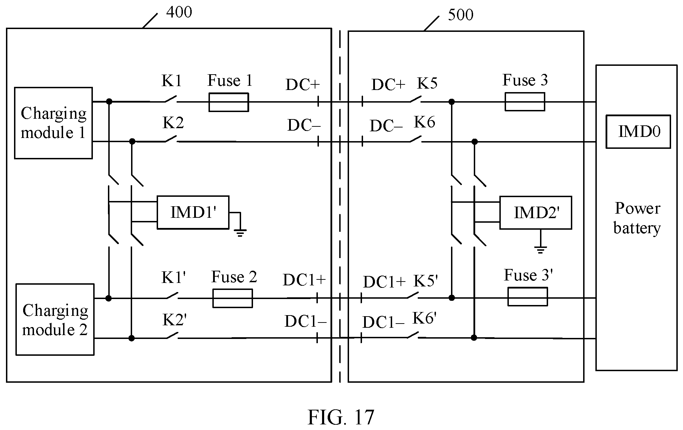

Refer to FIG. 17. It can be learned that an IMD1' is disposed in the charging pile, and the IMD1' may be switched to a charging loop in which the charging module 1 is located, so that the IMD1' can perform insulation monitoring on an entire charging loop from the charging module 1 to the power battery in a power battery charging process. The IMD1' may be switched to a charging loop in which the charging module 2 is located, so that the IMD1' can perform insulation monitoring on an entire charging loop from the charging module 2 to the power battery in a power battery charging process.

An IMD2' is disposed in the electric vehicle, and the IMD2' may be switched to a charging loop in which the charging loop switches K5 and K6 are located, so that the IMD2' can perform insulation monitoring on the entire charging loop from the charging module 2 to the power battery in a power battery charging process. The IMD2' may be switched to a charging loop in which the charging loop switches K5' and K6' are located, so that the IMD2' can perform insulation monitoring on the entire charging loop from the charging module 2 to the power battery in a power battery charging process.

A difference between this embodiment of this application and the embodiment shown in FIG. 9 lies in that, in this embodiment of this application, insulation monitoring can be performed only on one entire charging loop from one group of charging modules to the power battery at a time. For example, when the charging module 1 charges the power battery through the direct current ports DC+ and DC-, the IMD1' may be switched to the charging loop in which the charging module 1 is located, so that the IMD1' can perform insulation monitoring on the entire charging loop from the charging module 1 to the power battery. When the charging module 2 charges the power battery through the direct current ports DC1+ and DC1-, the IMD1' may be switched to the charging loop in which the charging module 2 is located, so that the IMD1' can perform insulation monitoring on the entire charging loop from the charging module 2 to the power battery.

A difference between this embodiment of this application and the embodiment shown in FIG. 12 lies in that, in this embodiment of this application, insulation monitoring can be performed only on one entire charging loop from one group of charging modules to the power battery at a time. For example, when the charging module 1 charges the power battery through the direct current ports DC+ and DC-, the IMD2' may be switched to a charging loop in which the power battery is charged through the direct current ports DC+ and DC-, so that the IMD2' can perform insulation monitoring on the entire charging loop from the charging module 1 to the power battery. When the charging module 2 charges the power battery through the direct current ports DC1+ and DC1-, the IMD may be switched to a charging loop in which the power battery is charged through the direct current ports DC1+ and DC1-, so that the IMD2' can perform insulation monitoring on the entire charging loop from the charging module 2 to the power battery.

In this embodiment of this application, insulation monitoring may be performed on an entire charging loop from each group of charging modules to the power battery independently or insulation monitoring may be performed on a part of the circuit, so that whether a circuit in which each group of charging modules in the charging pile charges the power battery has safety hazards such as electric leakage can be determined, thereby ensuring electrical safety of a user and a surrounding environment. In addition, in this embodiment of this application, disposing only one IMD can implement insulation monitoring on the entire charging loop from each group of charging modules to the power battery or safety monitoring on a part of the circuit. Therefore, this is conducive to integration and can reduce costs.

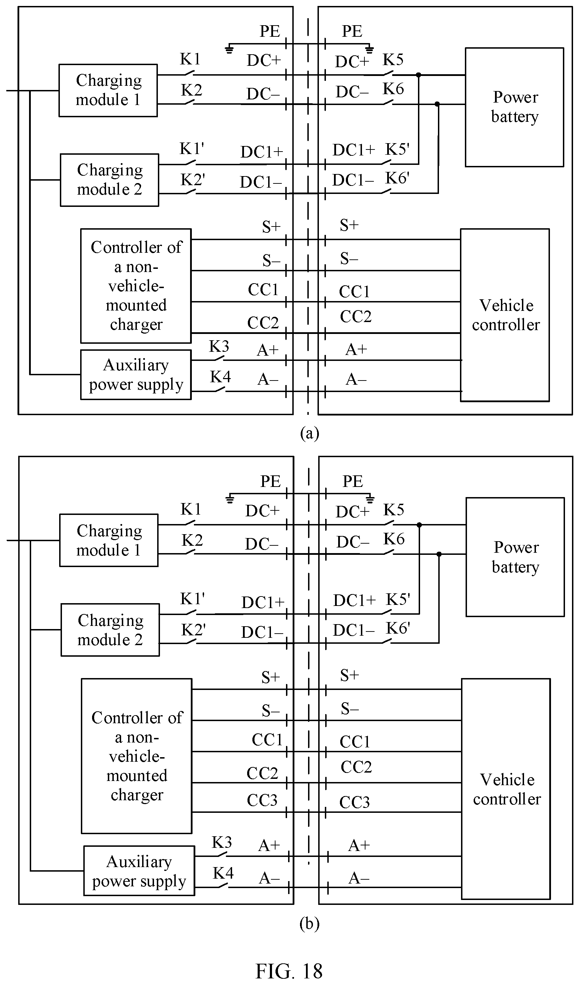

FIG. 18 is a diagram of a structure of a charging system according to an embodiment of this application. (a) in FIG. 18 corresponds to (a) in FIG. 8, and (b) in FIG. 18 corresponds to (b) in FIG. 8. DC+, DC-, DC1+, and DC1- are direct current ports, PE is a ground port, S+ and S- are charging communication ports, CC1 and CC2 are charging connection confirm ports, CC3 is a connection confirm port, and A+ and A- are low-voltage auxiliary power supply ports.

Refer to (a) in FIG. 18. Compared with charging interfaces of 2015, 2015+, and supercharging, charging interfaces in this embodiment of this application additionally have a group of direct current ports DC1+ and DC1-, and other ports are basically consistent with those of 2015, 2015+, and supercharging. For details, refer to related content of 2015, 2015+, and supercharging.

Refer to (b) in FIG. 18. Compared with (a) in FIG. 18, (b) in FIG. 18 additionally has a connection confirm port CC3, and the connection confirm port is used to determine a type of a charging connector connected to a vehicle socket. Other ports are consistent with those in (a) in FIG. 18.

In an embodiment, the charging connection apparatus 500 is configured to: determine that the charging connection apparatus is connected to a first charging connector or a second charging connector, where the first charging connector includes a plurality of groups of direct current plugs, and the second charging connector includes one group of direct current plugs.

When it is determined that the charging connection apparatus is connected to the first charging connector, the packet sent to the charging pile includes information indicating the plurality of groups of direct current plugs to output the currents of a same magnitude. When it is determined that the charging connection apparatus is connected to the second charging connector, the packet sent to the charging pile includes information indicating a magnitude of a current output by the group of direct current plugs.

In this embodiment of this application, the charging connection apparatus may send different packets to the charging pile based on a type of a charging connector connected to the charging connection apparatus. Specifically, when the charging connection apparatus determines that the charging connection apparatus is connected to an MCS charging connector, the plurality of groups of direct current sockets are connected to a plurality of groups of direct current plugs. For example, as shown in (a) in FIG. 18 or (b) in FIG. 18, direct current sockets DC+ and DC- are connected to direct current plugs DC+ and DC-, and direct current sockets DC1+ and DC1- are connected to direct current plugs DC1+ and DC1-. Therefore, the packet sent by the charging connection apparatus to the charging pile includes information indicating the two groups of direct current plugs to output currents of a same magnitude, namely, information indicating the direct current plugs DC+ and DC- and the direct current plugs DC1+ and DC1- to output currents of a same magnitude.

When the charging connection apparatus determines that the charging connection apparatus is connected to a 2015/2015+/supercharging charging connector, one group of direct current sockets in the plurality of groups of direct current sockets are connected to corresponding direct current plugs. For example, as shown in (a) in FIG. 18 or (b) in FIG. 18, direct current sockets DC+ and DC- are connected to direct current plugs DC+ and DC-. Therefore, the packet sent by the charging connection apparatus to the charging pile includes information indicating a magnitude of a current output by the group of direct current plugs, namely, information indicating a magnitude of a current output by the direct current plugs DC+ and DC-.

In this embodiment of this application, the charging connection apparatus may send different packets to the charging pile based on a type of a charging connector connected to the charging connection apparatus. Specifically, when the charging connection apparatus identifies that the charging connector is the MCS charging connector, the packet sent by the charging connection apparatus to the charging pile includes the information indicating the plurality of groups of direct current plugs to output the currents of a same magnitude; or when the charging connection apparatus identifies that the charging connector is the 2015/2015+/supercharging charging connector, the packet sent by the charging connection apparatus to the charging pile includes the information indicating the magnitude of the current output by the group of direct current plugs. This avoids a case in which the charging connection apparatus needs to send a packet again because current information included in the packet sent by the charging connection apparatus to the charging pile does not match an actual connection status of the direct current plugs and the direct current sockets. This embodiment of this application helps quickly determine a charging parameter between the charging connection apparatus and the charging pile, thereby helping the power battery quickly enter a charging phase. In addition, when the charging connection apparatus identifies that the charging connector is the MCS charging connector, the packet sent by the charging connection apparatus to the charging pile includes the information indicating the plurality of groups of direct current plugs to output the currents of a same magnitude. In this way, charging power can be increased, a charging speed can be increased, and a problem of uneven transmission currents of two power transmission lines and uneven contact resistances caused by the problem can be resolved.

In this embodiment of this application, the charging connection apparatus may identify, in a plurality of manners, whether the charging connector connected to the charging connection apparatus is a 2015/2015+/supercharging charging connector or an MCS charging connector. For details, refer to the following description.

### Manner 1: Identify by using a port CC2

In an embodiment, the charging connection apparatus further includes a first connection confirm socket and a first connection confirm circuit. The first connection confirm socket is connected to the first connection confirm circuit. When the charging connection apparatus is connected to a charging connector, the first connection confirm circuit forms a current loop with a first connection confirm circuit of the charging pile via the first connection confirm socket and a first connection confirm plug of the charging connector.

The charging connection apparatus is configured to: when a voltage at a monitoring point in the first connection confirm circuit of the charging connection apparatus is a first preset value, determine that the electric vehicle is connected to the first charging connector; or when a voltage at a monitoring point in the first connection confirm circuit of the charging connection apparatus is a second preset value, determine that the electric vehicle is connected to the second charging connector, where the first preset value is different from the second preset value.

In this embodiment of this application, the first connection confirm socket is a socket CC2, and the first connection confirm plug is a plug CC2. When the charging connection apparatus is connected to the charging connector, the first connection confirm circuit forms the current loop with the first connection confirm circuit of the charging pile via the first connection confirm socket CC2 and the first connection confirm plug CC2 of the charging connector.

When the first connection confirm circuit of the charging connection apparatus forms the current loop with the first connection confirm circuit of the charging pile, the charging connection apparatus may determine, based on the voltage at the monitoring point in the first connection confirm circuit of the charging connection apparatus, whether the electric vehicle is connected to an MCS charging connector or a 2015/2015+/supercharging charging connector. Specifically, when the voltage at the monitoring point in the first connection confirm circuit of the charging connection apparatus is the first preset value, it is determined that the electric vehicle is connected to the MCS charging connector; or when the voltage at the monitoring point in the first connection confirm circuit of the charging connection apparatus is the second preset value, it is determined that the electric vehicle is connected to the 2015/2015+/supercharging charging connector. This can increase a correctness rate of determining the charging connector by the charging connection apparatus, and help the charging connection apparatus send different packets to the charging pile based on the type of the charging connector connected to the charging connection apparatus.

In addition, in this embodiment of this application, it is determined, based on the voltage at the monitoring point in the first connection confirm circuit, that the electric vehicle is connected to the first charging connector or the second charging connector. The first connection confirm circuit may be an existing connection confirm circuit connected to the connection confirm socket CC2. In other words, the type of the charging connector can be determined by using the existing connection confirm circuit. This is simple and reliable.

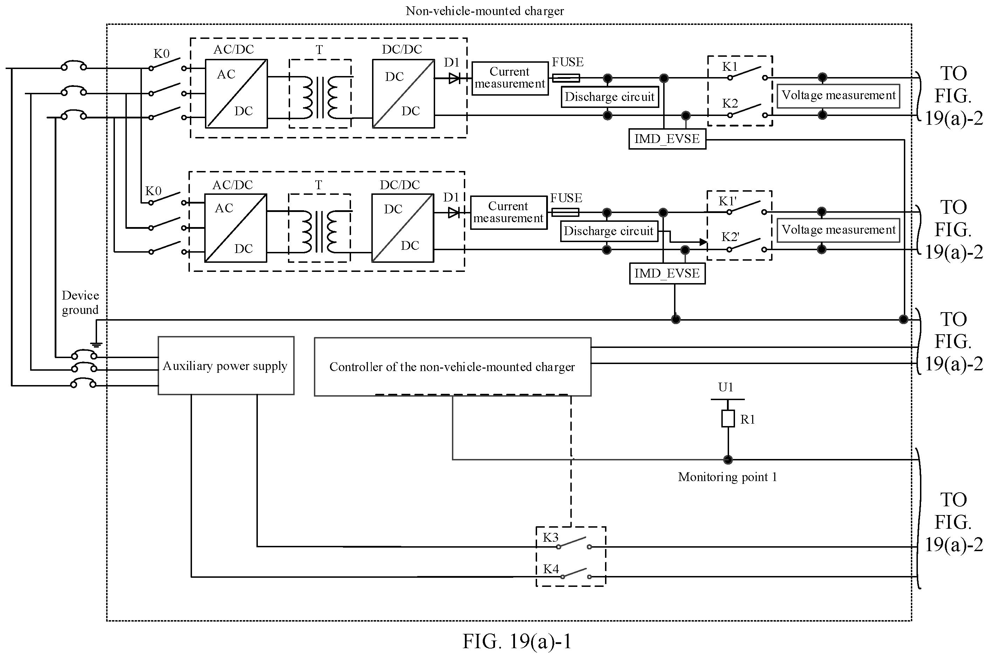

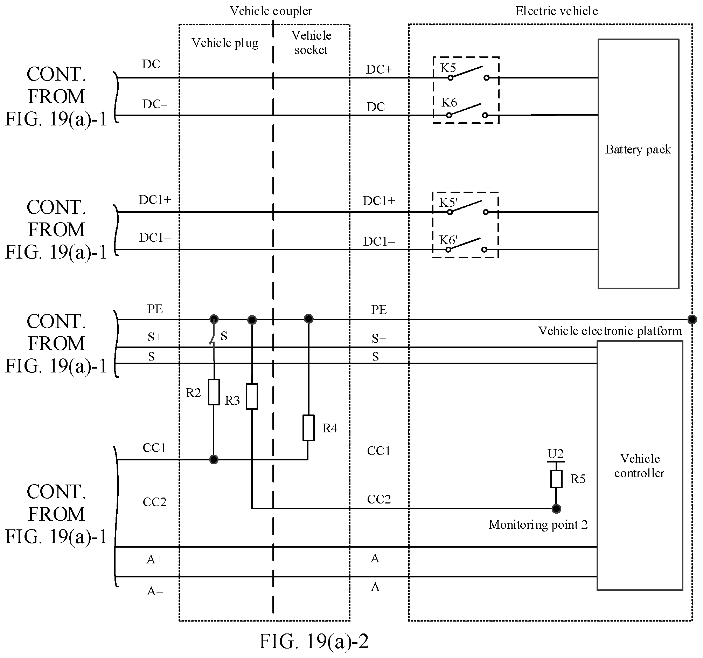

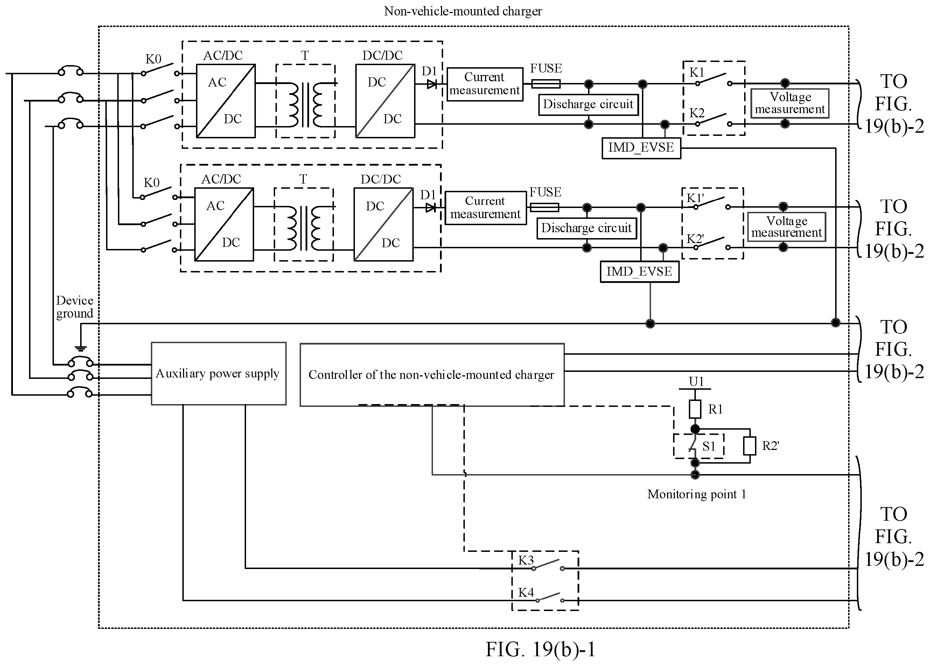

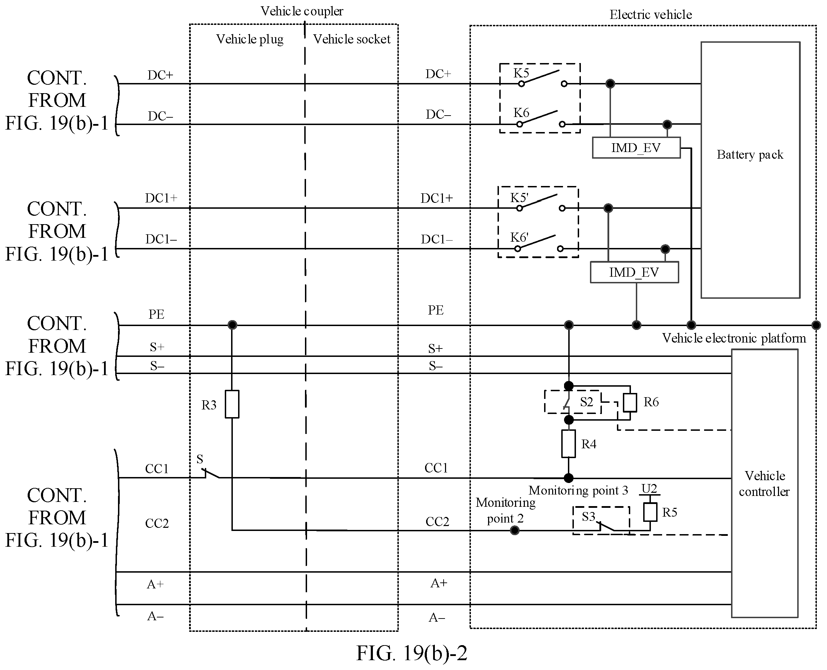

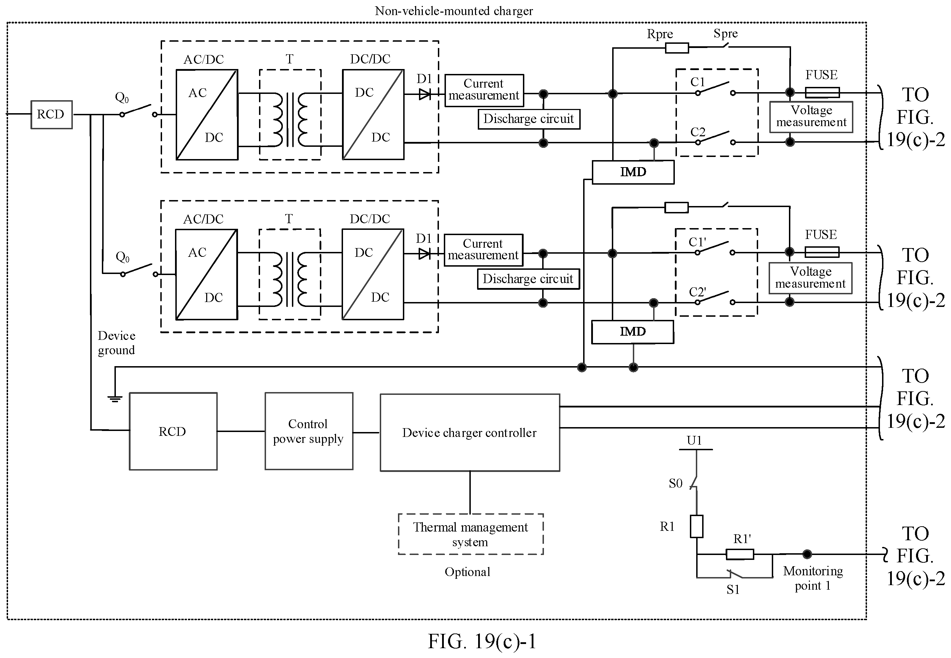

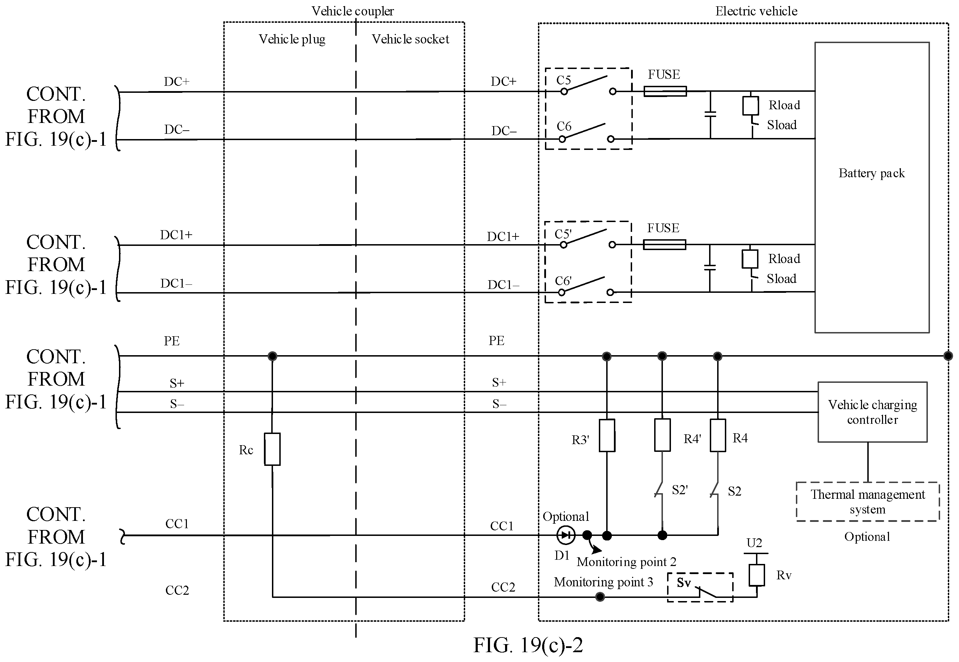

In an embodiment, as shown in FIG. 19(a)-1 to FIG. 19(c)-2, the first connection confirm circuit of the charging connection apparatus includes a first resistor unit. The first connection confirm socket is connected to a voltage source via the first resistor unit. The monitoring point is located between the first connection confirm socket and the first resistor unit.

Refer to FIG. 19(a)-1 and FIG. 19(a)-2. In this embodiment of this application, the first resistor unit is a resistor R5, the voltage source is U2, and the monitoring point is a monitoring point 2 shown in the figure. Before the vehicle socket is connected to the charging connector, a voltage at the monitoring point 2 needs to be a voltage output by the voltage source U2. Only when the vehicle socket is connected to the charging connector, the voltage source U2 forms a loop via the resistor R5 in the electric vehicle, a resistor R3 in the charging pile, and a ground cable in the charging pile. The voltage at the monitoring point 2 is a preset value due to a voltage division function of the resistor. In addition, a resistance value corresponding to R3 varies with the type of the charging connector connected to the vehicle socket.

For example, the voltage output by the voltage source U2 is set to 12 V, a resistance value of R5 is set to 1 Ω, a resistance value of R3 corresponding to the 2015/2015+/supercharging charging connector is set to 1 Ω, and a resistance value of R3 corresponding to the MCS charging connector is set to 0.2 Ω.

In this design, when the voltage at the monitoring point 2 is 6 V, the charging connection apparatus may determine that the charging connection apparatus is connected to the 2015/2015+/supercharging charging connector. When the voltage at the monitoring point 2 is 2 V, the vehicle charging connection apparatus may determine that the charging connection apparatus is connected to the MCS charging connector.

An identification principle shown in FIG. 19(b)-1 and FIG. 19(b)-2 is similar to that shown in FIG. 19(a)-1 and FIG. 19(a)-2. The charging connection apparatus determines, based on the voltage at the monitoring point 2, whether the charging connection apparatus is connected to the 2015/2015+/supercharging charging connector or the MCS charging connector.

An identification principle shown in FIG. 19(c)-1 and FIG. 19(c)-2 is similar to that shown in FIG. 19(a)-1 and FIG. 19(a)-2. Details are not described herein again. A difference between FIG. 19(c)-1 and FIG. 19(c)-2 and FIG. 19(a)-1 and FIG. 19(a)-2 is that the charging connection apparatus determines, based on the voltage at the monitoring point 2 in FIG. 19(a)-1 and FIG. 19(a)-2, whether the charging connection apparatus is connected to the 2015/2015+/supercharging charging connector or the MCS charging connector, but the charging connection apparatus determines, based on a voltage at a monitoring point 3 in FIG. 19(c)-1 and FIG. 19(c)-2, whether the charging connection apparatus is connected to the 2015/2015+/supercharging charging connector or the MCS charging connector.

In this embodiment of this application, the voltage at the monitoring point in the first connection confirm circuit of the charging connection apparatus may have another function in addition to determining the type of the charging connector connected to the electric vehicle.

In an embodiment, the charging connection apparatus 500 is further configured to: when the voltage at the monitoring point is the first preset value, determine that the charging connection apparatus is successfully connected to the first charging connector; or when the voltage at the monitoring point is the second preset value, determine that the charging connection apparatus is successfully connected to the second charging connector.

In this embodiment of this application, refer to FIG. 19(a)-1 and FIG. 19(a)-2. The voltage output by the voltage source U2 is still set to 12 V, the resistance value of R5 is still set to 1 Ω, the resistance value of R3 corresponding to the 2015/2015+/supercharging charging connector is still set to 1 Ω, and the resistance value of R3 corresponding to the MCS charging connector is still set to 0.2 Ω.

When the voltage at the monitoring point 2 is 6 V, the charging connection apparatus may determine that the charging connection apparatus is successfully connected to the 2015/2015+/supercharging charging connector. When the voltage at the monitoring point 2 is 2 V, the vehicle charging connection apparatus may determine that the charging connection apparatus is successfully connected to the MCS charging connector.

Refer to FIG. 19(b)-1 and FIG. 19(b)-2. The charging connection apparatus may determine, based on the voltage at the monitoring point 2, that the charging connection apparatus is successfully connected to the 2015/2015+/supercharging charging connector or the MCS charging connector. Alternatively, the charging connection apparatus may determine, based on the voltage at the monitoring point 2 and the voltage at the monitoring point 3, that the charging connection apparatus is successfully connected to the 2015/2015+/supercharging charging connector or the MCS charging connector.

Refer to FIG. 19(c)-1 and FIG. 19(c)-2. The charging connection apparatus may determine, based on the voltage at the monitoring point 3, that the charging connection apparatus is successfully connected to the 2015/2015+/supercharging charging connector or the MCS charging connector. Alternatively, the charging connection apparatus may determine, based on the voltage at the monitoring point 3 and the voltage at the monitoring point 2, that the charging connection apparatus is successfully connected to the 2015/2015+/supercharging charging connector or the MCS charging connector.

In this embodiment of this application, when the voltage at the monitoring point is the first preset value, the charging connection apparatus determines that the charging connection apparatus is successfully connected to the first charging connector; or when the voltage at the monitoring point is the second preset value, the charging connection apparatus determines that the charging connection apparatus is successfully connected to the second charging connector. This can increase a correctness rate of determining that the charging connection apparatus is connected to the first charging connector or the second charging connector, and help the charging connection apparatus send different packets to the charging pile based on the type of the charging connector connected to the charging connection apparatus.

In addition, in this embodiment of this application, it is determined, based on the voltage at the monitoring point in the first connection confirm circuit, that the electric vehicle is connected to the first charging connector or the second charging connector. The first connection confirm circuit may be an existing connection confirm circuit connected to the connection confirm socket CC2. In other words, the type of the charging connector can be determined by using the existing connection confirm circuit. This is simple and reliable.

### Manner 2: Identify by using a newly added port CC3

In an embodiment, the charging connection apparatus further includes a first connection confirm socket, a second connection confirm socket, a first connection confirm circuit, and a second connection confirm circuit. The first connection confirm socket is connected to the first connection confirm circuit, and the second connection confirm socket is connected to the second connection confirm circuit.

When the charging connection apparatus is connected to the first charging connector, the first connection confirm circuit forms a current loop with a first connection confirm circuit of the charging pile via the first connection confirm socket and a first connection confirm plug of the first charging connector, and the second connection confirm circuit forms a current loop with a second connection confirm circuit of the charging pile via the second connection confirm socket and a second connection confirm plug of the first charging connector.

When the charging connection apparatus is connected to the second charging connector, the first connection confirm circuit forms a current loop with a first connection confirm circuit of the charging pile via the first connection confirm socket and a first connection confirm plug of the second charging connector, and the second connection confirm socket is not connected to a plug of the second charging connector.

The charging connection apparatus is further configured to: when a voltage at a monitoring point in the second connection confirm circuit of the charging connection apparatus is a third preset value, determine that the charging connection apparatus is connected to the first charging connector; or when a voltage at a monitoring point in the second connection confirm circuit of the charging connection apparatus is a fourth preset value and a voltage at a monitoring point in the first connection confirm circuit of the charging connection apparatus is a fifth preset value, determine that the charging connection apparatus is connected to the second charging connector, where the third preset value is different from the fourth preset value.

In this embodiment of this application, the first connection confirm socket and the second connection confirm socket are sequentially a socket CC2 and a socket CC3 respectively, and the first connection confirm plug and the second connection confirm socket are sequentially a plug CC2 and a plug CC3 respectively. When the charging connection apparatus is connected to the charging connector, the first connection confirm circuit of the charging connection apparatus forms the current loop with the first connection confirm circuit of the charging pile via the first connection confirm socket CC2 and the first connection confirm plug CC2 of the charging connector. The second connection confirm circuit of the charging connection apparatus is related to a type of the charging connector connected to the charging connection apparatus.

Specifically, when the charging connection apparatus is connected to the MCS charging connector, the second connection confirm circuit of the charging connection apparatus forms the current loop with the second connection confirm circuit of the charging pile via the second connection confirm socket CC3 and the second connection confirm plug CC3 of the first charging connector. When the charging connection apparatus is connected to the 2015/2015+/supercharging charging connector, the second connection confirm socket is not connected to the plug of the second charging connector.

When the charging connection apparatus is connected to different types of charging connectors, the second connection confirm circuit of the charging connection apparatus forms or does not form a current loop with the second connection confirm circuit of the charging pile. Therefore, the charging connection apparatus may determine, based on the voltage at the monitoring point in the second connection confirm circuit of the charging connection apparatus, whether the electric vehicle is connected to the MCS charging connector or the 2015/2015+/supercharging charging connector. Specifically, when the voltage at the monitoring point in the second connection confirm circuit of the charging connection apparatus is the third preset value, it is determined that the electric vehicle is connected to the MCS charging connector; or when the voltage at the monitoring point in the second connection confirm circuit of the charging connection apparatus is the fourth preset value and the voltage at the monitoring point in the first connection confirm circuit of the charging connection apparatus is the fifth preset value, it is determined that the electric vehicle is connected to the 2015/2015+/supercharging charging connector. This can increase a correctness rate of determining a type of a charging connector by the charging connection apparatus, and help the charging connection apparatus send different packets to the charging pile based on the type of the charging connector connected to the charging connection apparatus.

In an embodiment, as shown in FIG. 20(a)-1 to FIG. 20(c)-2, the first connection confirm circuit of the charging connection apparatus includes a first resistor unit. The first connection confirm socket is connected to a voltage source via the first resistor unit. The second connection confirm circuit of the charging connection apparatus includes a second resistor unit, and the second connection confirm socket is connected to the voltage source via the second resistor unit.

The monitoring point in the first connection confirm circuit of the charging connection apparatus is located between the first connection confirm socket and the first resistor unit, and the monitoring point in the second connection confirm circuit of the charging connection apparatus is located between the second connection confirm socket and the second resistor unit.

Refer to FIG. 20(a)-1 and FIG. 20(a)-2. In this embodiment of this application, the first resistor unit is a resistor R5, the voltage source is U2, and the monitoring point in the first connection confirm circuit of the charging connection apparatus is a monitoring point 2 shown in the figure. The second resistor unit is a resistor R7, and the monitoring point in the second connection confirm circuit of the charging connection apparatus is a monitoring point 4 shown in the figure.

Before the vehicle socket is connected to the charging connector, a voltage at the monitoring point 4 needs to be a voltage output by the voltage source U2. When the vehicle socket is connected to the charging connector, the voltage source U2 forms a loop via the resistor R5 in the electric vehicle, a resistor R3 in the charging pile, and a ground cable in the charging pile, or the voltage source U2 forms or does not form a loop via the resistor R7 in the electric vehicle, a resistor R6 in the charging pile, and a ground cable in the charging pile. In addition, a 2015/2015+/supercharging charging connector corresponds to a case in which no loop is formed, which may be understood as that there is no control pilot circuit of the resistor R6 in the electric vehicle; and an MCS charging connector corresponds to a case in which a loop is formed, which may be understood as that there is a control pilot circuit of the resistor R6 in the electric vehicle. Therefore, if the vehicle socket is connected to the 2015/2015+/supercharging charging connector, the voltage at the monitoring point 4 needs to be the voltage output by the voltage source U2; or if the vehicle socket is connected to the MCS charging connector, the voltage at the monitoring point 4 needs to be a preset value.

If the vehicle socket is connected to the 2015/2015+/supercharging charging connector, voltages at the monitoring 4 before and after the vehicle socket is inserted into the charging connector are both the voltage output by the voltage source 2. In this case, determining may be performed in combination of the voltage at the monitoring point 2.

For example, the voltage output by the voltage source U2 is set to 12 V, and resistance values of R7, R6, R5, and R3 are all set to 1 Ω. In this design, when the voltage at the monitoring point 4 is 6 V, the charging connection apparatus determines that the charging connection apparatus is connected to the MCS charging connector. When the voltage at the monitoring point 4 is 12 V and the voltage at the monitoring point 2 is 6 V, the charging connection apparatus determines that the charging connection apparatus is connected to the 2015/2015+/supercharging charging connector.

An identification principle shown in FIG. 20(b)-1 and FIG. 20(b)-2 is similar to that shown in FIG. 20(a)-1 and FIG. 20(a)-2. The charging connection apparatus determines, based on the voltages at the monitoring point 4 and the monitoring point 2, whether the charging connection apparatus is connected to the 2015/2015+/supercharging charging connector or the MCS charging connector.

An identification principle shown in FIG. 20(c)-1 and FIG. 20(c)-2 is similar to that shown in FIG. 20(a)-1 and FIG. 20(a)-2. Details are not described herein again.

In this embodiment of this application, the first connection confirm circuit of the charging connection apparatus includes the first resistor unit, and the first connection confirm socket is connected to the voltage source via the first resistor unit. The first connection confirm circuit is an existing connection confirm circuit connected to the vehicle socket. The second connection confirm circuit of the charging connection apparatus includes the second resistor unit, and the second connection confirm socket is connected to the voltage source via the second resistor unit. The second connection confirm circuit is a newly designed circuit. The second connection confirm circuit can implement determining a type of the charging connector by being equipped with only one resistor unit. The second connection confirm circuit is simple in design and low in costs.

In this embodiment of this application, the voltage at the monitoring point in the first connection confirm circuit of the charging connection apparatus may have another function in addition to determining the type of the charging connector connected to the electric vehicle.

In an embodiment, the charging connection apparatus 500 is further configured to: when the voltage at the monitoring point in the first connection confirm circuit of the charging connection apparatus is the fifth preset value, determine that the charging connection apparatus is successfully connected to the first charging connector or the second charging connector.

In this embodiment of this application, refer to FIG. 20(a)-1 and FIG. 20(a)-2. The voltage output by the voltage source U2 is still set to 12 V, and the resistance value of R5 is still set to 1 Ω.

When the voltage at the monitoring point 2 is 6 V, the charging connection apparatus may determine that the charging connection apparatus is successfully connected to the 2015/2015+/supercharging charging connector, or determine that the charging connection apparatus is successfully connected to the MCS charging connector.

Refer to FIG. 20(b)-1 and FIG. 20(b)-2. The charging connection apparatus may determine, based on the voltage at the monitoring point 2, that the charging connection apparatus is successfully connected to the 2015/2015+/supercharging charging connector or the MCS charging connector. Alternatively, the charging connection apparatus may determine, based on the voltage at the monitoring point 2 and the voltage at the monitoring point 3, that the charging connection apparatus is successfully connected to the 2015/2015+/supercharging charging connector or the MCS charging connector.

Refer to FIG. 20(c)-1 and FIG. 20(c)-2. The charging connection apparatus may determine, based on the voltage at the monitoring point 2, that the charging connection apparatus is successfully connected to the 2015/2015+/supercharging charging connector or the MCS charging connector. Alternatively, the charging connection apparatus may determine, based on the voltage at the monitoring point 2 and the voltage at the monitoring point 3, that the charging connection apparatus is successfully connected to the 2015/2015+/supercharging charging connector or the MCS charging connector.

In this embodiment of this application, when the voltage at the monitoring point in the first connection confirm circuit is the fifth preset value, the charging connection apparatus determines that the charging connection apparatus is successfully connected to the first charging connector or the second charging connector. In other words, the charging connection apparatus may still determine, by using an existing connection confirm circuit connected to the vehicle socket, that the charging connection apparatus is successfully connected to the charging connector. This is simple and reliable.

For the charging pile, the charging pile may determine, based on a voltage at a monitoring point in the corresponding connection confirm circuit, whether the charging connector is successfully connected to the electric vehicle.

In an embodiment, the charging connector further includes a first connection confirm plug, a second connection confirm plug, a third connection confirm plug, a first connection confirm circuit, a second connection confirm circuit, and a third connection confirm circuit. The first connection confirm plug is connected to the first connection confirm circuit, the second connection confirm plug is connected to the second connection confirm circuit, and the third connection confirm plug is connected to the third connection confirm circuit.

When the charging connector is connected to the electric vehicle, the first connection confirm circuit forms a current loop with a first connection confirm circuit of the electric vehicle via the first connection confirm plug and a first connection confirm socket of the electric vehicle, the second connection confirm circuit forms a current loop with a second connection confirm circuit of the electric vehicle via the second connection confirm plug and a second connection confirm socket of the electric vehicle, and the third connection confirm circuit forms a current loop with a third connection confirm circuit of the electric vehicle via the third connection confirm plug and a third connection confirm socket of the electric vehicle.

The charging pile is configured to: when a voltage at a monitoring point in the third connection confirm circuit of the charging connector is a ninth preset value, determine that the charging connector is successfully connected to the electric vehicle.

In this embodiment of this application, the charging connector is an MCS charging connector, and the first connection confirm plug, the second connection confirm plug, and the third connection confirm plug are sequentially a plug CC2, a plug CC3, and a plug CC1 respectively. When the MCS charging connector is connected to the electric vehicle, each connection confirm circuit in the charging connector forms a current loop with a corresponding connection confirm circuit in the electric vehicle via a corresponding connection confirm plug and a corresponding connection confirm socket.

In this embodiment of this application, when the MCS charging connector is connected to the electric vehicle, the third connection confirm circuit in the charging connector forms the current loop with the third connection confirm circuit in the electric vehicle via the third connection confirm plug and the third connection confirm socket. Therefore, when the voltage at the monitoring point in the third connection confirm circuit of the charging connector is the ninth preset value, the charging pile may determine that the MCS charging connector is successfully connected to the electric vehicle.

In this embodiment of this application, when the charging connector includes the plurality of groups of direct current plugs and the three connection confirm plugs, when the voltage at the monitoring point in the third connection confirm circuit of the charging connector is the ninth preset value, the charging pile determines that the charging connector is successfully connected to the electric vehicle. In this embodiment of this application, the third connection confirm circuit is a connection confirm circuit connected to a plug CC1. In other words, the electric vehicle still determines, by using an existing connection confirm circuit connected to the connection confirm plug, that the electric vehicle is successfully connected to the charging connector. This is simple.

In an embodiment, the first connection confirm circuit of the charging pile includes a fifth resistor unit, and the first connection confirm plug is connected to a device ground platform of the charging pile via the fifth resistor unit. The second connection confirm circuit of the charging pile includes a sixth resistor unit, and the second connection confirm plug is connected to the device ground platform via the sixth resistor unit. The third connection confirm circuit of the charging pile includes a seventh resistor unit, the third connection confirm plug is connected to a voltage source via the seventh resistor unit, and the monitoring point is located between the third connection confirm plug and the seventh resistor unit.

FIG. 20(a)-1 and FIG. 20(a)-2 are used as an example. In this embodiment of this application, the fifth resistor unit is the resistor R3, the sixth resistor unit is the resistor R6, the seventh resistor unit is a resistor R1, and the voltage source is U1. A voltage output by the voltage source U1 is set to 12 V, and resistance values of R1 and R4 are both set to 1 Ω. In this case, the monitoring point in the third connection confirm circuit of the charging connector is a monitoring point 1.

In this embodiment of this application, before the charging connector is connected to the electric vehicle, a voltage at the monitoring point 1 needs to be the voltage output by the voltage source U1, namely, 12 V. When the charging connector is connected to the electric vehicle, the voltage source U1 forms a loop via the resistor R1 in the charging pile, the resistor R4 in the electric vehicle, and a ground cable in the electric vehicle. Therefore, when the voltage at the monitoring point 1 is 6 V, the charging pile may determine that the MCS charging connector is successfully connected to the electric vehicle.

In this embodiment of this application, when the charging pile is connected to the electric vehicle, the third connection confirm circuit of the charging pile and the third connection confirm circuit of the charging connection apparatus form the loop. Because the monitoring point is located between the third connection confirm plug and the seventh resistor unit, when the voltage at the monitoring point is the ninth preset value, the charging pile can determine that the charging connector is successfully connected to the electric vehicle.

### Manner 3: Identify by using ports A+ and A-

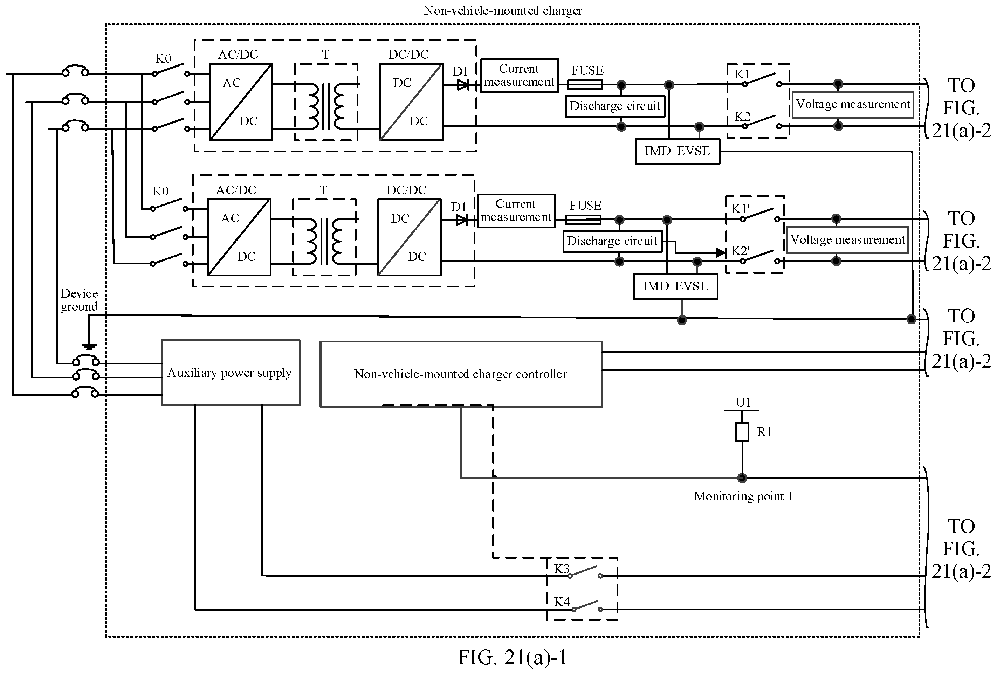

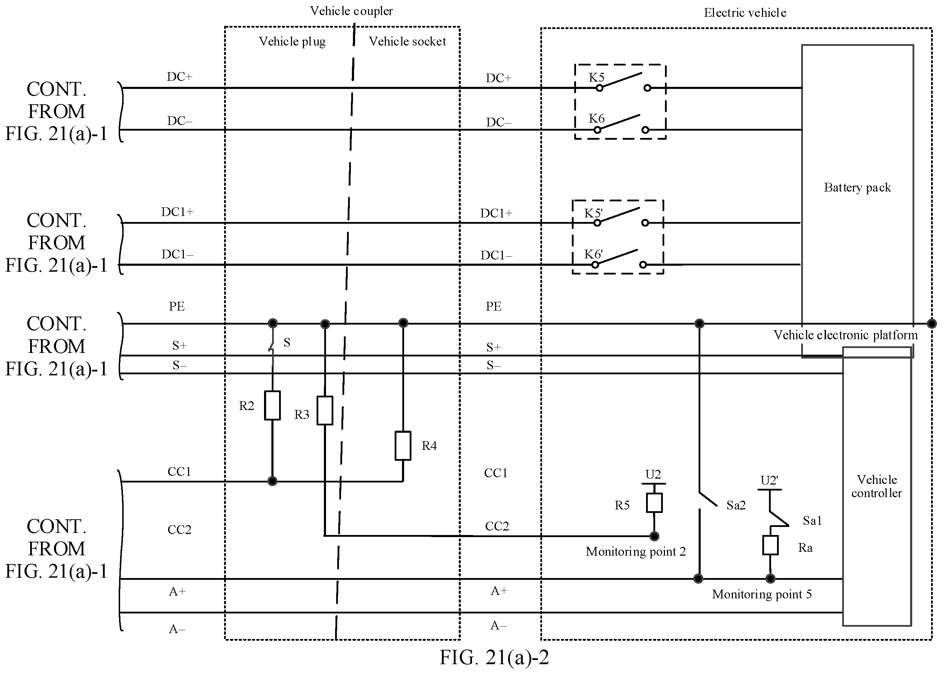

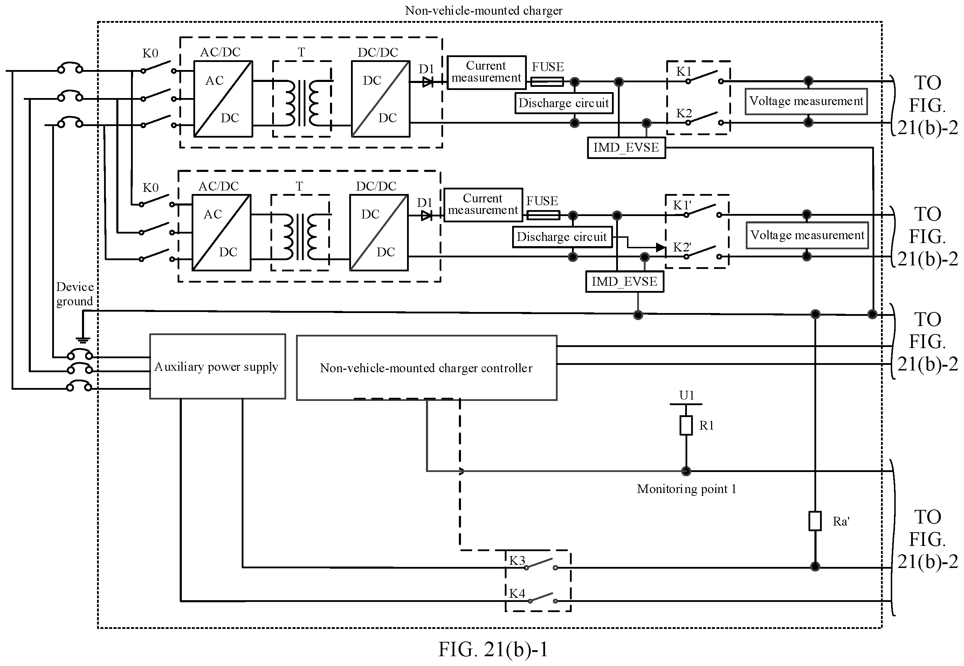

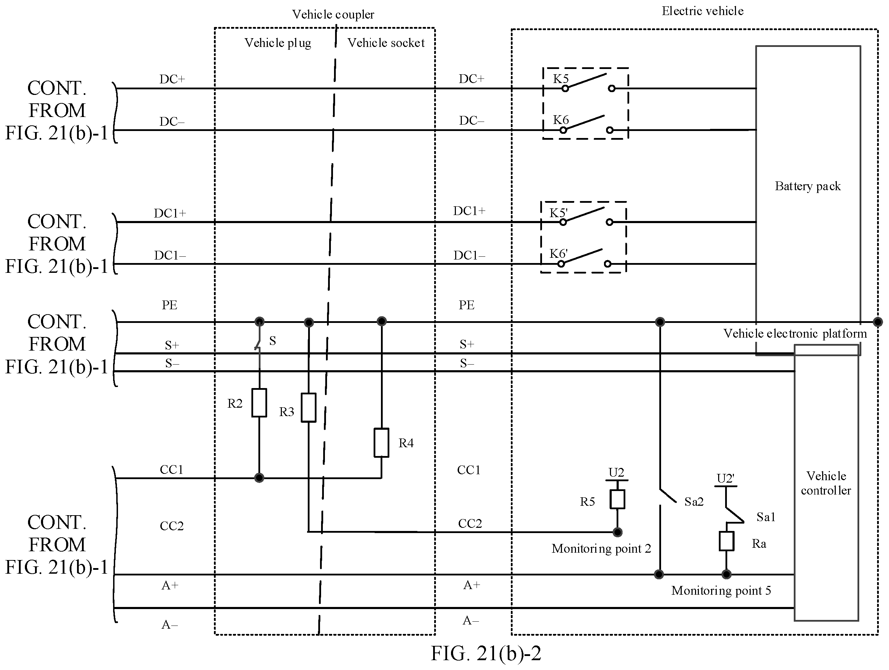

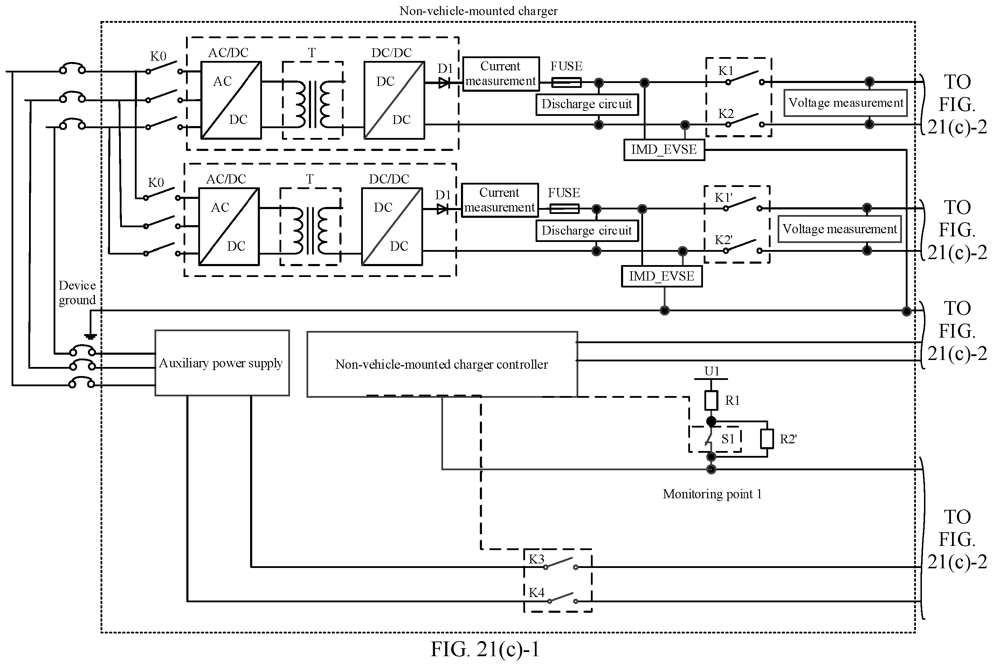

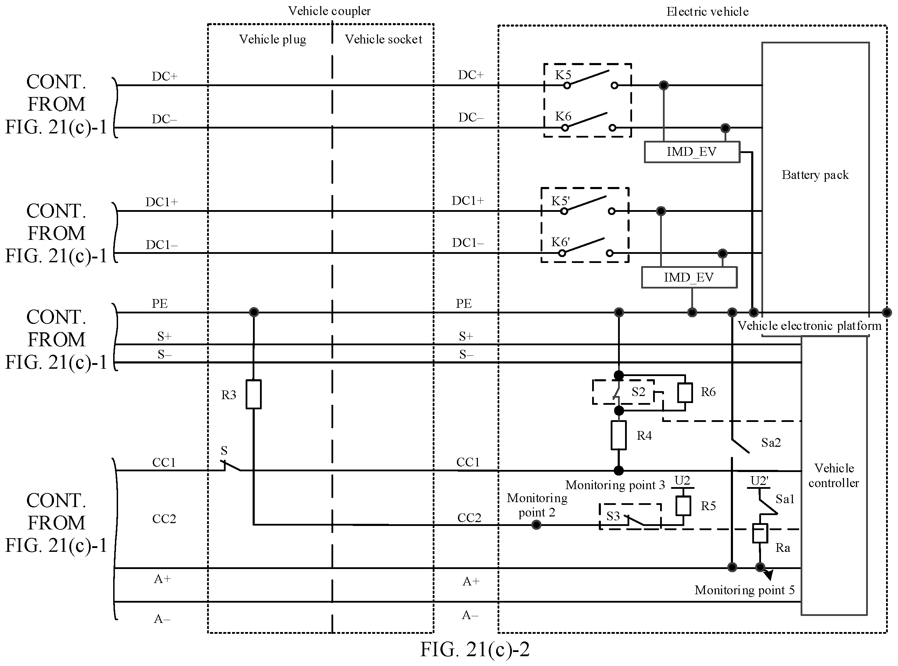

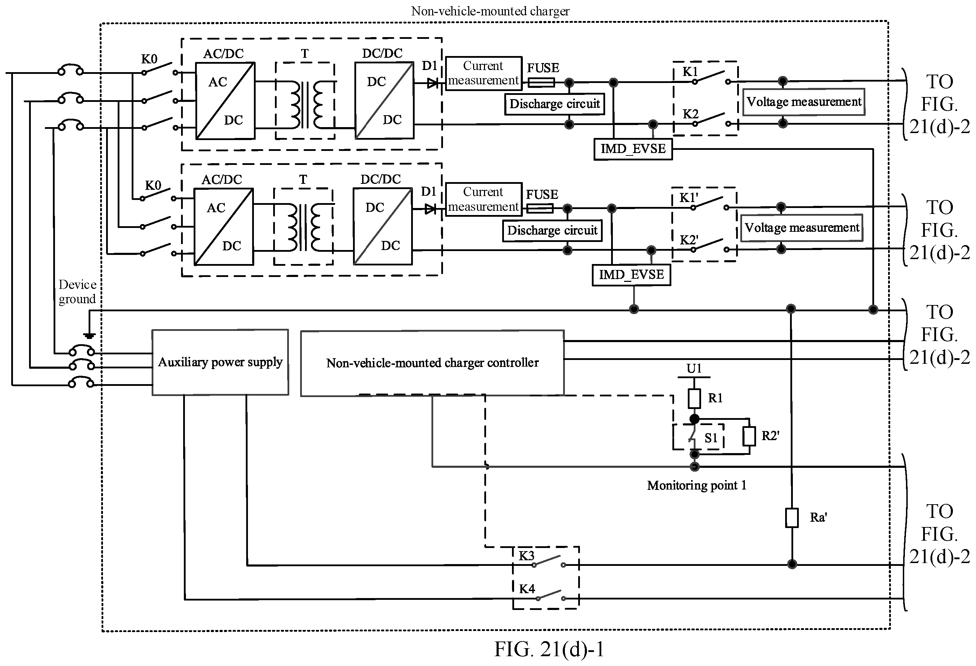

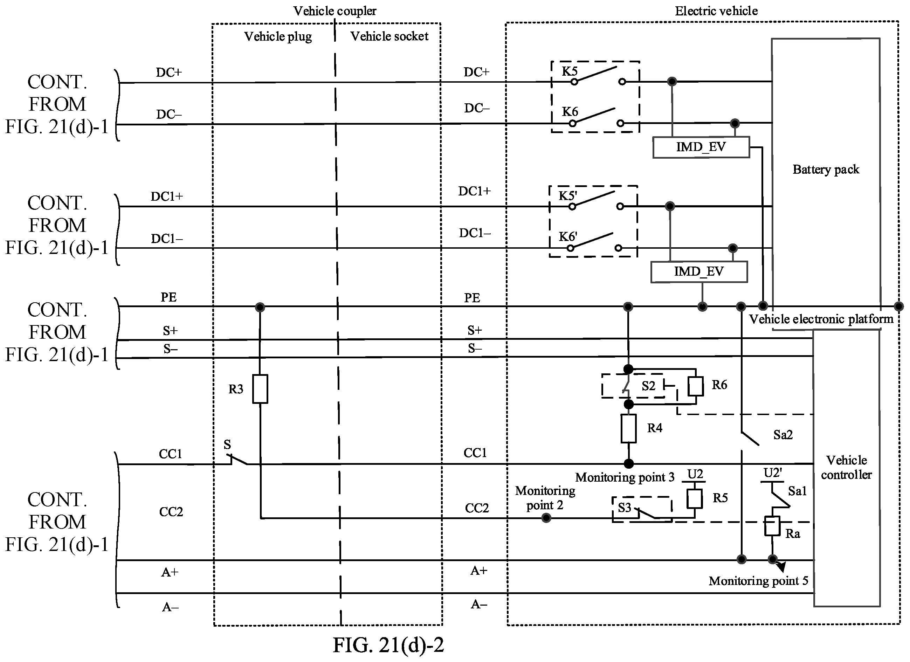

In an embodiment, as shown in FIG. 21(a)-1 to FIG. 21(d)-2, the charging connection apparatus further includes an auxiliary power supply socket, an auxiliary power supply circuit, a first connection confirm socket, and a first connection confirm circuit. The auxiliary power supply socket is connected to a controller of the electric vehicle and the auxiliary power supply circuit, and the first connection confirm socket is connected to the first connection confirm circuit.

The auxiliary power supply circuit of the charging connection apparatus includes a third resistor unit and a first normally closed switch that are connected in series, and the auxiliary power supply socket is connected to a voltage source via the third resistor unit and the first normally closed switch. The first connection confirm circuit of the charging connection apparatus includes a first resistor unit, and the first connection confirm socket of the charging connection apparatus is connected to the voltage source via the first resistor unit.

The charging connection apparatus is configured to: when a voltage at a monitoring point in the auxiliary power supply circuit of the charging connection apparatus is a sixth preset value, determine that the charging connection apparatus is connected to the first charging connector; or when a voltage at a monitoring point in the auxiliary power supply circuit of the charging connection apparatus is a seventh preset value and a voltage at a monitoring point in the first connection confirm circuit of the charging connection apparatus is an eighth preset value, determine that the charging connection apparatus is connected to the second charging connector, where the sixth preset value is different from the seventh preset value.

The monitoring point in the auxiliary power supply circuit of the charging connection apparatus is located between the auxiliary power supply socket and the third resistor unit, and the monitoring point in the first connection confirm circuit of the charging connection apparatus is located between the first connection confirm socket and the first resistor unit.

In this embodiment of this application, the auxiliary power supply socket is sockets A+ and A-, the first connection confirm socket is a socket CC2, the auxiliary power supply plug is plugs A+ and A-, and the first connection confirm plug is a plug CC2. When the charging connection apparatus is connected to the charging connector, the first connection confirm circuit of the charging connection apparatus forms the current loop with the first connection confirm circuit of the charging pile via the first connection confirm socket CC2 and the first connection confirm plug CC2 of the charging connector. The auxiliary power supply circuit of the charging connection apparatus is related to a type of the charging connector connected to the charging connection apparatus.

Specifically, when the charging connection apparatus is connected to the MCS charging connector, the auxiliary power supply circuit of the charging connection apparatus forms the current loop with the auxiliary power supply circuit of the charging pile via the auxiliary power supply sockets A+ and A- and the auxiliary power supply plugs A+ and A-. When the charging connection apparatus is connected to the 2015/2015+/supercharging charging connector, the auxiliary power supply circuit of the charging connection apparatus does not form a current loop with the auxiliary power supply circuit of the charging pile.

Refer to FIG. 21(a)-1 and FIG. 21(a)-2 and FIG. 21(b)-1 and FIG. 21(b)-2. It can be learned that, in this embodiment of this application, a control pilot circuit is newly added to a line connected to a low-voltage auxiliary power supply port. In the electric vehicle, a resistor Ra, a voltage source U2', a normally closed switch Sa1, and a normally open switch Sa2 are disposed. One end of the resistor Ra is connected to the voltage source U2' via the normally closed switch Sa1, the other end of the resistor Ra is connected to a line of the low-voltage auxiliary power supply port, one end of the normally open switch Sa2 is connected to a vehicle electronic platform, and the other end of the normally open switch Sa2 is connected to the line of the low-voltage auxiliary power supply port.

In this embodiment of this application, the third resistor unit is the resistor Ra, the first normally closed switch is the switch Sa1, and the monitoring point in the auxiliary power supply circuit is a monitoring point 5 shown in the figure. The first resistor unit is the resistor R5, and the monitoring point in the charging connection apparatus is a monitoring point 2 shown in the figure.

FIG. 21(a)-1 and FIG. 21(a)-2 correspond to a vehicle socket connected to a 2015/2015+/supercharging charging connector, and FIG. 21(b)-1 and FIG. 21(b)-2 correspond to a vehicle socket connected to an MCS charging connector.

In an initial state, the normally closed switch Sa1 is turned on, and the normally open switch Sa2 is turned off. Before the vehicle socket is connected to the charging connector, the monitoring point 5 is connected to the voltage source U2'. In this case, the voltage at the monitoring point 5 needs to be the voltage output by the voltage source U2'. When the vehicle socket is connected to the charging connector, a voltage source U2 forms a loop via the resistor R5 in the electric vehicle, a resistor R3 in the charging pile, and a ground cable in the charging pile, and the voltage source U2' forms or does not form a loop via the resistor Ra in the electric vehicle, a resistor Ra' in the charging pile, and the ground cable in the charging pile. In addition, a 2015/2015+/supercharging charging connector corresponds to a case in which no loop is formed, which may be understood as that there is no resistor Ra' in the electric vehicle; and an MCS charging connector corresponds to a case in which a loop is formed, which may be understood as that there is a resistor Ra' in the electric vehicle. Therefore, if the vehicle socket is connected to the 2015/2015+/supercharging charging connector, the voltage at the monitoring point 5 needs to be a voltage output by the voltage source U2; or if the vehicle socket is connected to the MCS charging connector, the voltage at the monitoring point 5 needs to be a preset value.

If the vehicle socket is connected to the 2015/2015+/supercharging charging connector, voltages at the monitoring 5 before and after the vehicle socket is inserted into the charging connector are both the voltage output by the voltage source 2. In this case, determining may be performed in combination of the voltage at the monitoring point 2.

For example, the voltages output by the voltage source U2 and the voltage source U2' are set to 12 V, and resistance values of the resistors Ra, Ra', R5, and R3 are all set to 1 Ω. In this design, when the voltage at the monitoring point 5 is 6 V, the charging connection apparatus determines that the charging connection apparatus is connected to the MCS charging connector. When the voltage at the monitoring point 5 is 12 V and the voltage at the monitoring point 2 is 6 V, the charging connection apparatus determines that the charging connection apparatus is connected to the 2015/2015+/supercharging charging connector.

Identification principles shown in FIG. 21(c)-1 and FIG. 21(c)-2 and FIG. 21(d)-1 and FIG. 21(d)-2 are similar to those shown in FIG. 21(a)-1 and FIG. 21(a)-2 and FIG. 21(b)-1 and FIG. 21(b)-2. Details are not described herein again.

It may be understood that the voltage source U2' and the voltage source U2 that are shown in FIG. 21(a)-1 to FIG. 21(d)-2 may be shared. In other words, the voltage source U2' may not be disposed in the electric vehicle. The resistance Ra is connected to the voltage source U2 via the switch Sa1, and it may also be determined whether the charging connector connected to the vehicle socket is the 2015/2015+/supercharging charging connector or the MCS charging connector.

In this embodiment of this application, the charging connection apparatus may determine, based on the voltage at the monitoring point in the auxiliary power supply circuit, that the electric vehicle is connected to the first charging connector or the second charging connector. Specifically, when the voltage at the monitoring point in the auxiliary power supply circuit of the charging connection apparatus is the sixth preset value, the charging connection apparatus determines that the electric vehicle is connected to the first charging connector; or when the voltage at the monitoring point in the auxiliary power supply circuit of the charging connection apparatus is the seventh preset value and the voltage at the monitoring point in the first connection confirm circuit of the charging connection apparatus is the eighth preset value, the charging connection apparatus determines that the electric vehicle is connected to the second charging connector. This can increase a correctness rate of determining a type of a charging connector by the charging connection apparatus, and help the charging connection apparatus send different packets to the charging pile based on the type of the charging connector connected to the charging connection apparatus.

In this embodiment of this application, the voltage at the monitoring point in the first connection confirm circuit of the charging connection apparatus may have another function in addition to determining the type of the charging connector connected to the electric vehicle.

In an embodiment, when the voltage at the monitoring point in the first connection confirm circuit of the charging connection apparatus is the eighth preset value, it is determined that the charging connection apparatus is successfully connected to the first charging connector or the second charging connector.

In this embodiment of this application, refer to FIG. 21(a)-1 and FIG. 21(a)-2 and FIG. 21(b)-1 and FIG. 21(b)-2. The voltage output by the voltage source U2 is still set to 12 V, and the resistance value of R5 is still set to 1 Ω.

When the voltage at the monitoring point 2 is 6 V, the charging connection apparatus may determine that the charging connection apparatus is successfully connected to the 2015/2015+/supercharging charging connector, or determine that the charging connection apparatus is successfully connected to the MCS charging connector.

Refer to FIG. 21(c)-1 and FIG. 21(c)-2 and FIG. 21(d)-1 and FIG. 21(d)-2. The charging connection apparatus may determine, based on the voltage at the monitoring point 2, that the charging connection apparatus is successfully connected to the 2015/2015+/supercharging charging connector or the MCS charging connector. Alternatively, the charging connection apparatus may determine, based on the voltage at the monitoring point 2 and the voltage at the monitoring point 3, that the charging connection apparatus is successfully connected to the 2015/2015+/supercharging charging connector or the MCS charging connector.

In this embodiment of this application, when the voltage at the monitoring point in the first connection confirm circuit is the eighth preset value, the charging connection apparatus determines that the charging connection apparatus is successfully connected to the first charging connector or the second charging connector. In other words, the charging connection apparatus may still determine, by using an existing connection confirm circuit connected to the vehicle socket, that the charging connection apparatus is successfully connected to the charging connector. This is simple and reliable.

In an embodiment, the auxiliary power supply circuit of the charging connection apparatus further includes a second normally open switch. The auxiliary power supply socket is further connected to a vehicle body ground platform of the electric vehicle via the second normally open switch.

The charging connection apparatus is further configured to: after determining that the charging connection apparatus is connected to the second charging connector, turn off the first normally closed switch and turn on the second normally open switch.

In this embodiment of this application, when the charging connection apparatus determines that the vehicle socket is connected to the 2015/2015+/supercharging charging connector, the charging connection apparatus needs to turn off the normally closed switch Sa1 and turn on the normally open switch Sa2. This is because if the normally closed switch Sa1 is not turned off and the normally open switch Sa2 is not turned on, the voltage at the monitoring point 5 is 12 V, and a controller of the charging pile determines that the voltage at the monitoring point 5 is a non-zero value, and does not turn on switches K3 and K4, affecting normal charging of the power battery.

When the charging connection apparatus determines that the vehicle socket is connected to the MCS charging connector, the charging connection apparatus needs to maintain states of the switches Sa1 and Sa2, that is, keep the normally closed switch Sa1 turned on and keep the normally open switch Sa2 turned off. This is because if the normally closed switch Sa1 is turned off or the normally open switch Sa2 is turned on, the voltage at the monitoring point 5 is not 6 V. If the voltage at the monitoring point 5 is not 6 V, the charging connection apparatus may determine that the charging interface is faulty, and turn off charging loop switches K5 and K6, and K5' and K6', affecting normal charging of the power battery.

For the charging pile, the charging pile may determine, based on a voltage at a monitoring point in the corresponding connection confirm circuit, whether the charging connector is successfully connected to the electric vehicle.

In an embodiment, the charging connector further includes a first connection confirm plug, a third connection confirm plug, an auxiliary power supply plug, a first connection confirm circuit, a third connection confirm circuit, and an auxiliary power supply circuit. The first connection confirm plug is connected to the first connection confirm circuit, the third connection confirm plug is connected to the third connection confirm circuit, the auxiliary power supply plug is connected to the auxiliary power supply circuit, and the auxiliary power supply plug is configured to supply power to a controller of the electric vehicle.

When the charging connector is connected to the electric vehicle, the first connection confirm circuit forms a current loop with a first connection confirm circuit of the electric vehicle via the first connection confirm plug and a first connection confirm socket of the electric vehicle, the third connection confirm circuit forms a current loop with a third connection confirm circuit of the electric vehicle via the third connection confirm plug and a third connection confirm socket of the electric vehicle, and the auxiliary power supply circuit forms a current loop with an auxiliary power supply circuit of the electric vehicle via the auxiliary power supply plug and an auxiliary power supply socket of the electric vehicle.

The charging pile is configured to: when a voltage at a monitoring point in the third connection confirm circuit of the charging connector is a tenth preset value, determine that the charging connector is successfully connected to the electric vehicle.

In this embodiment of this application, the charging connector is an MCS charging connector, and the first connection confirm plug, the third connection confirm plug, and the auxiliary power supply plug are sequentially a plug CC2, a plug CC1, and plugs A+ and A-respectively. When the MCS charging connector is connected to the electric vehicle, each connection confirm circuit in the charging connector forms a current loop with a corresponding connection confirm circuit in the electric vehicle via a corresponding connection confirm plug and a corresponding connection confirm socket, and the auxiliary power supply circuit in the charging connector forms a current loop with the auxiliary power supply circuit in the electric vehicle via a corresponding auxiliary power supply plug and a corresponding auxiliary power supply socket.

In this embodiment of this application, when the MCS charging connector is connected to the electric vehicle, the third connection confirm circuit in the charging connector forms the current loop with the third connection confirm circuit in the electric vehicle via the third connection confirm plug and the third connection confirm socket. Therefore, when the voltage at the monitoring point in the third connection confirm circuit of the charging connector is the tenth preset value, the charging pile may determine that the MCS charging connector is successfully connected to the electric vehicle.

In this embodiment of this application, when the charging connector includes the plurality of groups of direct current plugs, when the voltage at the monitoring point in the third connection confirm circuit of the charging connector is the tenth preset value, the charging pile determines that the charging connector is successfully connected to the electric vehicle. In this embodiment of this application, the third connection confirm circuit is a connection confirm circuit connected to a plug CC1. In other words, the electric vehicle still determines, by using an existing connection confirm circuit connected to the vehicle socket, that the electric vehicle is successfully connected to the charging connector. This is simple.

In an embodiment, the first connection confirm circuit of the charging pile includes an eighth resistor unit, and the first connection confirm plug is connected to a device ground platform of the charging pile via the eighth resistor unit. The third connection confirm circuit of the charging pile includes a ninth resistor unit, the third connection confirm plug is connected to a voltage source via the ninth resistor unit, and the monitoring point is located between the third connection confirm plug and the ninth resistor unit. The auxiliary power supply circuit of the charging pile includes a tenth resistor unit, and the auxiliary power supply plug is connected to the device ground platform via the tenth resistor unit.

FIG. 21(b)-1 and FIG. 21(b)-2 are used as an example. In this embodiment of this application, the eighth resistor unit is the resistor R3, the ninth resistor unit is the resistor R1, the tenth resistor unit is Ra', and the voltage source is U1. A voltage output by the voltage source U1 is set to 12 V, and resistance values of R1 and R4 are both set to 1 Ω. In this case, the monitoring point in the third connection confirm circuit of the charging connector is a monitoring point 1.

In this embodiment of this application, before the charging connector is connected to the electric vehicle, a voltage at the monitoring point 1 needs to be a voltage output by the voltage source U1, namely, 12 V. When the charging connector is connected to the electric vehicle, the voltage source U1 forms a loop via the resistor R1 in the charging pile, the resistor R4 in the electric vehicle, and a ground cable in the electric vehicle. Therefore, when the voltage at the monitoring point 1 is 6 V, the charging pile may determine that the MCS charging connector is successfully connected to the electric vehicle.

In this embodiment of this application, when the charging pile is connected to the electric vehicle, the third connection confirm circuit of the charging pile and the third connection confirm circuit of the charging connection apparatus form the loop. Because the monitoring point is located between the third connection confirm plug and the ninth resistor unit, when the voltage at the monitoring point is the tenth preset value, the charging pile can determine that the charging connector is successfully connected to the electric vehicle.

In an embodiment, the charging connection apparatus further includes a third connection confirm socket and a third connection confirm circuit. The third connection confirm socket is connected to a third connection confirm plug of the first charging connector or a third connection confirm plug of the second charging connector. The third connection confirm circuit includes a fourth resistor unit, and the third connection confirm socket is connected to the vehicle body ground platform of the electric vehicle via the fourth resistor unit.

Refer to FIG. 19(a)-1 to FIG. 21(d)-2. In this embodiment of this application, the third connection confirm socket is a socket CC1, and a circuit connected to the socket CC1 is the third connection confirm circuit. FIG. 21(b)-1 and FIG. 21(b)-2 are used as an example. The fourth resistor unit includes the resistor R4, a resistor R6, and a switch S2. When the charging connector is connected to the vehicle socket, the third connection confirm circuit in the charging connection apparatus and the third connection confirm circuit in the charging pile form the current loop. This helps the charging pile determine whether the charging pile is successfully connected to the charging connector. A specific determining process is consistent with that in the conventional technology. Details are not described again.

This application further provides an electric vehicle. The electric vehicle includes the charging connection apparatus in any one of the foregoing embodiments and a power battery. The charging connection apparatus is connected to the power battery, and the charging connection apparatus is configured to: receive a direct current from the charging pile and transmit the direct current to the power battery.

For the charging connection apparatus in the electric vehicle, refer to the foregoing content. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging connection apparatus, wherein the charging connection apparatus is used in an electric vehicle, the charging connection apparatus comprises a plurality of groups of charging loop switches and a plurality of groups of direct current sockets, each group of charging loop switches comprises two switches, each of the plurality of groups of direct current sockets is connected to one group of direct current plugs of a charging pile, and each group of direct current sockets comprises a positive direct current socket and a negative direct current socket;
each group of direct current sockets is connected to a power battery of the electric vehicle via one group of charging loop switches, and different groups of direct current sockets are connected to the power battery via different groups of charging loop switches; and
all the groups of direct current sockets are configured to receive currents output by different charging modules in the charging pile.

2. The charging connection apparatus according to claim 1, wherein the charging connection apparatus is configured to send a packet to the charging pile, and the packet comprises information indicating all groups of direct current plugs of the charging pile to output currents of a same magnitude.

3. The charging connection apparatus according to claim 2, wherein the packet further comprises voltage information; and
when the plurality of groups of direct current sockets are connected to a same power battery, the packet comprises information indicating all the groups of direct current plugs to output voltages of a same magnitude; or
when the plurality of groups of direct current sockets are respectively connected to different power batteries, the packet comprises information indicating all the groups of direct current plugs to output voltages of a same magnitude or different magnitudes.

4. The charging connection apparatus according to claim 2 or 3, wherein the charging connection apparatus further comprises a plurality of fuses, one fuse is connected in series between the power battery and each group of direct current sockets, and each fuse is connected in series to one switch in corresponding charging loop switches and then connected between the power battery and the direct current sockets.

5. The charging connection apparatus according to claim 4, wherein the charging connection apparatus is configured to:
when a current flowing through a power transmission line on which the fuse is located is greater than a maximum current value allowed by the corresponding power transmission line, turn off the charging loop switch connected to the fuse.

6. The charging connection apparatus according to claim 5, wherein the charging connection apparatus is further configured to:
send, to the charging pile, a packet used to request to change a charging current.

7. The charging connection apparatus according to claim 4, wherein the charging connection apparatus is configured to:
when a magnitude of a current flowing through a power transmission line on which the fuse is located is greater than a maximum current value allowed by the corresponding power transmission line, send, to the charging pile, a packet used to request to reduce a magnitude of a current output by direct current plugs connected to the direct current sockets connected to the fuse.

8. The charging connection apparatus according to any one of claims 1 to 7, wherein the charging connection apparatus further comprises at least one isolated DC-DC circuit and at least one insulation monitoring device, the at least one isolated DC-DC circuit one-to-one corresponds to the at least one insulation monitoring device, and each isolated DC-DC circuit is connected in series between the charging loop switch and the power battery; and
each insulation monitoring device is configured to:
in a charging process of the electric vehicle, perform insulation monitoring on a circuit between a corresponding isolated DC-DC circuit and an output end of a charging module connected to corresponding direct current plugs.

9. The charging connection apparatus according to any one of claims 1 to 8, wherein the charging connection apparatus is configured to:
determine that the charging connection apparatus is connected to a first charging connector or a second charging connector, wherein the first charging connector comprises a plurality of groups of direct current plugs, and the second charging connector comprises one group of direct current plugs; and
when it is determined that the charging connection apparatus is connected to the first charging connector, the packet sent to the charging pile comprises information indicating the plurality of groups of direct current plugs to output the currents of a same magnitude; or
when it is determined that the charging connection apparatus is connected to the second charging connector, the packet sent to the charging pile comprises information indicating a magnitude of currents output by the group of direct current plugs.

10. The charging connection apparatus according to claim 9, wherein the charging connection apparatus is further configured to:
when the charging connection apparatus is connected to the first charging connector, if a charging loop switch connected to a part of direct current sockets in the plurality of groups of direct current sockets is adhered, send, to the charging pile, a packet used to request to stop direct current plugs connected to the part of direct current sockets from outputting a direct current; or
when the charging connection apparatus is connected to the second charging connector, if a charging loop switch connected to one group of direct current sockets connected to the second charging connector is adhered, send, to the charging pile, a packet used to request to stop direct current plugs connected to the group of direct current sockets from outputting a direct current.

11. The charging connection apparatus according to claim 9 or 10, wherein the charging connection apparatus further comprises a first connection confirm socket and a first connection confirm circuit, and the first connection confirm socket is connected to the first connection confirm circuit;
when the charging connection apparatus is connected to a charging connector, the first connection confirm circuit forms a current loop with a first connection confirm circuit of the charging pile via the first connection confirm socket and a first connection confirm plug of the charging connector; and
the charging connection apparatus is configured to:
when a voltage at a monitoring point in the first connection confirm circuit of the charging connection apparatus is a first preset value, determine that the electric vehicle is connected to the first charging connector; or
when a voltage at a monitoring point in the first connection confirm circuit of the charging connection apparatus is a second preset value, determine that the electric vehicle is connected to the second charging connector, wherein the first preset value is different from the second preset value.

12. The charging connection apparatus according to claim 11, wherein the charging connection apparatus is further configured to:
when the voltage at the monitoring point is the first preset value, determine that the charging connection apparatus is successfully connected to the first charging connector; or
when the voltage at the monitoring point is the second preset value, determine that the charging connection apparatus is successfully connected to the second charging connector.

13. The charging connection apparatus according to claim 11 or 12, wherein
the first connection confirm circuit of the charging connection apparatus comprises a first resistor unit, and the first connection confirm socket is connected to a voltage source via the first resistor unit; and
the monitoring point is located between the first connection confirm socket and the first resistor unit.

14. The charging connection apparatus according to claim 9 or 10, wherein the charging connection apparatus further comprises a first connection confirm socket, a second connection confirm socket, a first connection confirm circuit, and a second connection confirm circuit, the first connection confirm socket is connected to the first connection confirm circuit, and the second connection confirm socket is connected to the second connection confirm circuit;
when the charging connection apparatus is connected to the first charging connector, the first connection confirm circuit forms a current loop with a first connection confirm circuit of the charging pile via the first connection confirm socket and a first connection confirm plug of the first charging connector, and the second connection confirm circuit forms a current loop with a second connection confirm circuit of the charging pile via the second connection confirm socket and a second connection confirm plug of the first charging connector; or
when the charging connection apparatus is connected to the second charging connector, the first connection confirm circuit forms a current loop with a first connection confirm circuit of the charging pile via the first connection confirm socket and a first connection confirm plug of the second charging connector, and the second connection confirm socket is not connected to a plug of the second charging connector; and
the charging connection apparatus is further configured to:
when a voltage at a monitoring point in the second connection confirm circuit of the charging connection apparatus is a third preset value, determine that the charging connection apparatus is connected to the first charging connector; or
when a voltage at a monitoring point in the second connection confirm circuit of the charging connection apparatus is a fourth preset value and a voltage at a monitoring point in the first connection confirm circuit of the charging connection apparatus is a fifth preset value, determine that the charging connection apparatus is connected to the second charging connector, wherein the third preset value is different from the fourth preset value.

15. The charging connection apparatus according to claim 14, wherein the charging connection apparatus is further configured to:
when the voltage at the monitoring point in the first connection confirm circuit of the charging connection apparatus is the fifth preset value, determine that the charging connection apparatus is successfully connected to the first charging connector or the second charging connector.

16. The charging connection apparatus according to claim 14 or 15, wherein
the first connection confirm circuit of the charging connection apparatus comprises a first resistor unit, and the first connection confirm socket is connected to a voltage source via the first resistor unit;
the second connection confirm circuit of the charging connection apparatus comprises a second resistor unit, and the second connection confirm socket is connected to the voltage source via the second resistor unit; and
the monitoring point in the first connection confirm circuit of the charging connection apparatus is located between the first connection confirm socket and the first resistor unit, and the monitoring point in the second connection confirm circuit of the charging connection apparatus is located between the second connection confirm socket and the second resistor unit.

17. The charging connection apparatus according to claim 9 or 10, wherein the charging connection apparatus further comprises an auxiliary power supply socket, an auxiliary power supply circuit, a first connection confirm socket, and a first connection confirm circuit, the auxiliary power supply socket is connected to a controller of the electric vehicle and the auxiliary power supply circuit, and the first connection confirm socket is connected to the first connection confirm circuit;
the auxiliary power supply circuit of the charging connection apparatus comprises a third resistor unit and a first normally closed switch that are connected in series, and the auxiliary power supply socket is connected to a voltage source via the third resistor unit and the first normally closed switch;
the first connection confirm circuit of the charging connection apparatus comprises a first resistor unit, and the first connection confirm socket of the charging connection apparatus is connected to the voltage source via the first resistor unit; and
the charging connection apparatus is configured to:
when a voltage at a monitoring point in the auxiliary power supply circuit of the charging connection apparatus is a sixth preset value, determine that the charging connection apparatus is connected to the first charging connector; or
when a voltage at a monitoring point in the auxiliary power supply circuit of the charging connection apparatus is a seventh preset value and a voltage at a monitoring point in the first connection confirm circuit of the charging connection apparatus is an eighth preset value, determine that the charging connection apparatus is connected to the second charging connector, wherein the sixth preset value is different from the seventh preset value; and
the monitoring point in the auxiliary power supply circuit of the charging connection apparatus is located between the auxiliary power supply socket and the third resistor unit, and the monitoring point in the first connection confirm circuit of the charging connection apparatus is located between the first connection confirm socket and the first resistor unit.

18. The charging connection apparatus according to claim 17, wherein the charging connection apparatus is further configured to:
when the voltage at the monitoring point in the first connection confirm circuit of the charging connection apparatus is the eighth preset value, determine that the charging connection apparatus is successfully connected to the first charging connector or the second charging connector.

19. The charging connection apparatus according to claim 17 or 18, wherein the auxiliary power supply circuit of the charging connection apparatus further comprises a second normally open switch, and the auxiliary power supply socket is further connected to a vehicle body ground platform of the electric vehicle via the second normally open switch; and
the charging connection apparatus is further configured to:
after determining that the charging connection apparatus is connected to the second charging connector, turn off the first normally closed switch and turn on the second normally open switch.

20. The charging connection apparatus according to any one of claims 11 to 19, wherein the charging connection apparatus further comprises a third connection confirm socket and a third connection confirm circuit, and the third connection confirm socket is connected to a third connection confirm plug of the first charging connector or a third connection confirm plug of the second charging connector; and
the third connection confirm circuit comprises a fourth resistor unit, and the third connection confirm socket is connected to the vehicle body ground platform of the electric vehicle via the fourth resistor unit.

21. An electric vehicle, wherein the electric vehicle comprises the charging connection apparatus according to any one of claims 1 to 20 and a power battery, the charging connection apparatus is connected to the power battery, and the charging connection apparatus is configured to: receive a direct current from the charging pile and transmit the direct current to the power battery.

22. A charging pile, wherein the charging pile comprises a plurality of groups of charging modules, a plurality of groups of direct current power supply loop switches, and a plurality of groups of direct current plugs, the plurality of groups of charging modules one-to-one correspond to the plurality of groups of direct current plugs, each of the plurality of groups of charging modules comprises a plurality of charging modules connected in parallel, each group of direct current power supply loop switches comprises two switches, each of the plurality of groups of direct current plugs is connected to one group of direct current sockets of an electric vehicle, and each group of direct current plugs comprises a positive direct current plug and a negative direct current plug; and
each group of charging modules is connected to one group of direct current plugs via one group of direct current power supply loop switches, and different groups of charging modules are connected to different groups of direct current plugs via different groups of direct current power supply loop switches.

23. The charging pile according to claim 22, wherein
when the plurality of groups of direct current plugs are connected to the plurality of groups of direct current sockets, all the groups of charging modules are configured to output currents of a same magnitude and voltages of a same magnitude; or
when the plurality of groups of direct current plugs are connected to the plurality of groups of direct current sockets, all the groups of charging modules are configured to output currents of a same magnitude and voltages of different magnitudes.

24. The charging pile according to claim 22 or 23, wherein the charging pile further comprises a plurality of fuses, one fuse is connected between each group of charging modules and corresponding direct current plugs, and each fuse is connected in series to one switch in corresponding direct current power supply loop switches and then connected between the charging modules and the direct current plugs.

25. The charging pile according to claim 24, wherein the charging pile is configured to:
when a magnitude of a current flowing through a power transmission line on which the fuse is located is greater than a maximum current value allowed by the corresponding power transmission line, turn off the direct current power supply loop switch connected to the fuse.

26. The charging pile according to claim 25, wherein the charging pile is further configured to:
adjust a magnitude of a current output by each group of charging modules corresponding to direct current power supply loop switches that are in an on state in the plurality of groups of direct current power supply loop switches.

27. The charging pile according to claim 24, wherein the charging pile is configured to:
when a magnitude of a current flowing through a power transmission line on which the fuse is located is greater than a maximum current value allowed by the corresponding power transmission line, reduce a magnitude of a current output by one group of charging modules connected to the fuse.

28. The charging pile according to any one of claims 22 to 27, wherein the charging pile further comprises a plurality of insulation monitoring devices, and the plurality of insulation monitoring devices one-to-one correspond to the plurality of groups of charging modules; and
each insulation monitoring device is configured to: when the direct current plugs are connected to the direct current sockets, perform insulation monitoring on a circuit between an output end of a corresponding group of charging modules and corresponding direct current power supply loop switches.

29. The charging pile according to any one of claims 22 to 28, wherein the charging pile comprises a charging connector, and the charging connector comprises the plurality of groups of direct current plugs; and
the charging pile is configured to:
when the charging connector is connected to the direct current sockets, if a direct current power supply loop switch connected to a part of direct current plugs in the plurality of groups of direct current plugs is adhered, control one group of charging modules connected to each group of direct current plugs in the part of direct current plugs to stop outputting a direct current.

30. The charging pile according to claim 29, wherein the charging connector further comprises a first connection confirm plug, a second connection confirm plug, a third connection confirm plug, a first connection confirm circuit, a second connection confirm circuit, and a third connection confirm circuit, the first connection confirm plug is connected to the first connection confirm circuit, the second connection confirm plug is connected to the second connection confirm circuit, and the third connection confirm plug is connected to the third connection confirm circuit;
when the charging connector is connected to the electric vehicle, the first connection confirm circuit forms a current loop with a first connection confirm circuit of the electric vehicle via the first connection confirm plug and a first connection confirm socket of the electric vehicle, the second connection confirm circuit forms a current loop with a second connection confirm circuit of the electric vehicle via the second connection confirm plug and a second connection confirm socket of the electric vehicle, and the third connection confirm circuit forms a current loop with a third connection confirm circuit of the electric vehicle via the third connection confirm plug and a third connection confirm socket of the electric vehicle; and
the charging pile is configured to:
when a voltage at a monitoring point in the third connection confirm circuit of the charging connector is a ninth preset value, determine that the charging connector is successfully connected to the electric vehicle.

31. The charging pile according to claim 30, wherein the first connection confirm circuit of the charging pile comprises a fifth resistor unit, and the first connection confirm plug is connected to a device ground platform of the charging pile via the fifth resistor unit;
the second connection confirm circuit of the charging pile comprises a sixth resistor unit, and the second connection confirm plug is connected to the device ground platform via the sixth resistor unit; and
the third connection confirm circuit of the charging pile comprises a seventh resistor unit, the third connection confirm plug is connected to a voltage source via the seventh resistor unit, and the monitoring point is located between the third connection confirm plug and the seventh resistor unit.

32. The charging pile according to claim 29, wherein the charging connector further comprises a first connection confirm plug, a third connection confirm plug, an auxiliary power supply plug, a first connection confirm circuit, a third connection confirm circuit, and an auxiliary power supply circuit, the first connection confirm plug is connected to the first connection confirm circuit, the third connection confirm plug is connected to the third connection confirm circuit, the auxiliary power supply plug is connected to the auxiliary power supply circuit, and the auxiliary power supply plug is configured to supply power to a controller of the electric vehicle;
when the charging connector is connected to the electric vehicle, the first connection confirm circuit forms a current loop with a first connection confirm circuit of the electric vehicle via the first connection confirm plug and a first connection confirm socket of the electric vehicle, the third connection confirm circuit forms a current loop with a third connection confirm circuit of the electric vehicle via the third connection confirm plug and a third connection confirm socket of the electric vehicle, and the auxiliary power supply circuit forms a current loop with an auxiliary power supply circuit of the electric vehicle via the auxiliary power supply plug and an auxiliary power supply socket of the electric vehicle; and
the charging pile is configured to:
when a voltage at a monitoring point in the third connection confirm circuit of the charging connector is a tenth preset value, determine that the charging connector is successfully connected to the electric vehicle.

33. The charging pile according to claim 32, wherein the first connection confirm circuit of the charging pile comprises an eighth resistor unit, and the first connection confirm plug is connected to a device ground platform of the charging pile via the eighth resistor unit;
the third connection confirm circuit of the charging pile comprises a ninth resistor unit, the third connection confirm plug is connected to a voltage source via the ninth resistor unit, and the monitoring point is located between the third connection confirm plug and the ninth resistor unit; and
the auxiliary power supply circuit of the charging pile comprises a tenth resistor unit, and the auxiliary power supply plug is connected to the device ground platform via the tenth resistor unit.
